(19) Europäisches Patentamt
European Patent Office
Office européen des brevets

(11) EP 2 970 542 B1

(12) EUROPEAN PATENT SPECIFICATION

(45) Date of publication and mention of the grant of the patent:
**24.07.2019 Bulletin 2019/30**

(21) Application number: **14716725.8**

(22) Date of filing: **14.03.2014**

(51) Int Cl.:
***C08F 222/02*** *(2006.01)* ***C11D 3/37*** *(2006.01)*

(86) International application number:
**PCT/US2014/027879**

(87) International publication number:
**WO 2014/143773 (18.09.2014 Gazette 2014/38)**

# (54) ITACONIC ACID COPOLYMERS

ITACONSÄURECOPOLYMERE

COPOLYMÈRES D'ACIDE ITACONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361792244 P**

(43) Date of publication of application:
**20.01.2016 Bulletin 2016/03**

(73) Proprietor: **Lubrizol Advanced Materials, Inc.**
**Cleveland, OH 44141-3247 (US)**

(72) Inventors:
- **TAMARESELVY, Krishnan**
  **Cleveland, Ohio 44141-3247 (US)**
- **HSU, Feng-Lung Gordon**
  **Cleveland, Ohio 44141-3247 (US)**
- **BRIJMOHAN, Smita**
  **Cleveland, Ohio 44141-3247 (US)**
- **SHUSTER, Francine I.**
  **Cleveland, Ohio 44141-3247 (US)**
- **LAI, John Ta-Yuan**
  **Cleveland, Ohio 44141-3247 (US)**
- **MAGO, Gaurav**
  **Cleveland, Ohio 44141-3247 (US)**

(74) Representative: **D Young & Co LLP**
**120 Holborn**
**London EC1N 2DY (GB)**

(56) References cited:
**EP-A1- 0 506 246** **WO-A1-2013/150317**
**US-A- 4 485 223** **US-A1- 2009 286 947**

- **C. S. Marvel ET AL: "Polymerization Reactions of Itaconic Acid and Some of Its Derivatives", JOURNAL OF ORGANIC CHEMISTRY, vol. 24, no. 5, 1 May 1959 (1959-05-01), pages 599-605, XP055472636, ISSN: 0022-3263, DOI: 10.1021/jo01087a006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 970 542 B1

**Description**

BACKGROUND OF THE INVENTION

The disclosed technology relates to an itaconic acid co-polymer substantially free of the less reactive tri-substituted vinyl monomers (e.g., citraconic acid or mesaconic acid) that may be used, for example, as builders in detergent applications, such as in the personal and home care market.

Builders (herein used interchangeably with "chelators") are used in detergent cleaners, typically surfactant containing systems, to extend and improve the detergent cleaner's cleaning properties. The function of the builder is to remove calcium and other undesirable metal ions from washing solutions by sequestration or precipitation. In addition, builders can chelate ions of hardness, and provide a pH buffering function and some anti-redeposition functionality that can enhance cleaning performance. Inorganic sodium tripolyphosphate (STPP) is a conventional builder that has historically been used in detergent cleaners. However, there are perceived environmental issues associated with STPP and its use has been reduced or eliminated from many detergent products, such as, for example, dishwashing detergents. The loss of STPP as a builder has created immediate product performance issues in the dishwashing detergent market, particularly in relation to a lack of cleaning efficiency and film formation due to a failure to remove metal ion residue.

Due to the lack of performance in current phosphate free detergent systems, there is an unmet need in the market for an improved functional builder. A sustainable or "green" product solution with improved performance is highly desirable.

There are several process patents in the prior art that provide processes to produce itaconic acid (IA) homopolymer. A common thread in the prior art is the use of neutralization in the process. For example, U.S. Pat. No. 5,223,592 reports that the critical aspect in preparing itaconic acid is to provide complete neutralization of an itaconic acid type monomer prior to conducting the polymerization reaction. Complete neutralization is identified as having two moles of base neutralizer for each mole of itaconic acid, Similarly, U.S. Pat. No. 5,336,744 discloses a process using from 5 to 50% neutralization along with a polyvalent metal ion and an initiator. Another US patent, U.S. Pat. No. 7,910,676 from the University of New Hampshire teaches a process using a partial degree of neutralization (25-75%) and an initiator to make a high molecular weight polymer. The itaconic acid polymerization process involving a neutralization step according to the foregoing references leads to a rearrangement of di-substituted itaconic acid derived monomers to the less reactive tri-substituted vinyl monomers (e.g., citraconic acid or mesaconic acid derived monomers as shown in formula I below). Such isomerization to the tri-substituted monomers results in polymers with unreacted residuals and subsequently causes reduced chelating efficiency.

Formula I

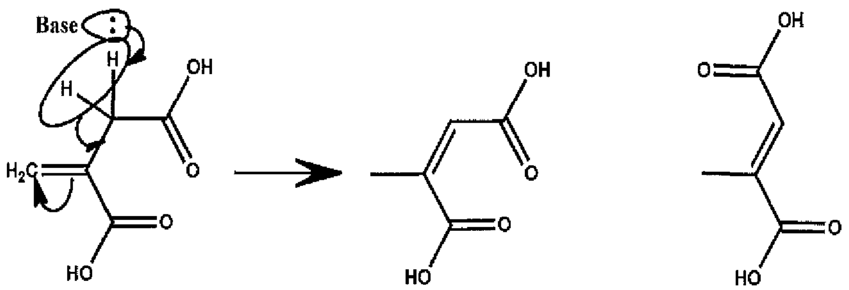

Itaconic acid    Citraconic acid    Mesaconic acid

In contrast, polymerization of itaconic acid in acidic medium does not favor the rearrangement of itaconic to less reactive citraconic acid. Polymerization of itaconic acid in an acidic medium has been reported in "Polymerization of itaconic acid and some of its derivatives" Marvel et al, Journal of Organic Chemistry, (1959), 24, 599, and in "Polymerization of Itaconic Acid In Aqueous Solution: Structure Of The Polymer And Polymerization Kinetics At 25°C Studied By Carbon-13 NMR," Grespos et al, Makromolekulare Chemie, Rapid Communications (1984), 5(9), 489-494. However, these methods have disadvantages such as poor conversion with lengthy polymerization times and corrosivity issues. Similarly, WO 2001/21677 describes an itaconic acid polymerization comprising a free radical generator (persulfate) and a phosphorous-containing reducing agent, which gives a product with undesirable phosphorous components.

US 4,485,223 teaches an "essentially homogenous" (meth)acrylic acid/itaconic acid copolymer. The process taught in the '223 patent teaches a post-neutralization step, and process temperatures ranging from 80 to 120°C, as well as an initiator amount of from 5 to 20 mole %. The level of initiator required in the polymerization step of the '223 process results in a corrosive copolymer solution (pH < 1), which poses significant safety concerns from a handling point

of view that would make scale-up difficult. Moreover, the high initiator level used in the polymerization taught in the ’223 patent gives a dark colored copolymer with a strong unpleasant sulfur odor that would not be suitable for use in the personal care or home care market. The high temperatures used in the ’223 process causes the initiator to decompose quickly, causing oxidized and/or sulfurized itaconic acid impurities and resulting in an inferior product.
EP 0506246 A1 discloses itaconic acid homopolymers or copolymers.
US 2009/286947 A1 discloses polycarboxylic acid polymers.
Itaconic acid polymers and co-polymers having improved purity, and being free of tri-substituted vinyl monomer impurities that provide improved chelating capabilities, anti-redeposition, drag reduction, and chlorine stabilization, along with methods of preparing the same would be desirable.

## SUMMARY OF THE INVENTION

The disclosed technology, therefore, solves the problem of inefficient ion binding capacity by providing co-polymers, and/or terpolymers that are derived from substantially pure itaconic acid and that are free of tri-substituted vinyl monomer impurities and therefore suitable to personal care and home care applications.
Further, it has also been found that partially esterified itaconic acid copolymers and/or terpolymer free of tri-substituted vinyl monomer impurities provide improved dispersancy of hydrophobic particulates, for example, in detergent applications such as laundry and dish detergents.
Accordingly, the present invention provides an itaconic acid copolymer comprising monomer units derived from itaconic acid and co-monomer units derived from at least one of acrylic acid, methacrylic acid or salts, esters, and anhydrides thereof, 2-acrylamido-2-methylpropane sulfonic acid (AMPS™ a registered trademark of the Lubrizol Corporation) or salts thereof, and combinations thereof, wherein said copolymer is substantially free of tri-substituted vinyl monomer impurities, and wherein no more than 5 mole % of the total carboxylic acid groups from all monomers are neutralized, and further wherein the copolymer has a number average molecular weight (Mn) of from 500 to 100,000. The scope of the invention is defined by the claims. Subject-matter outside the scope of the claims is provided for information only.
(Preferably, the monomer units derived from itaconic acid are present at greater than 25 or 50 mole %, for example, between 60 and 70 or 80 mole %, and the co-monomer units are present at less than 50 or 75 mole %, such as from between 10 or 20 and 30 or 40 mole % or between 50 and 70 mole %. In one embodiment, the polymer composition can include monomer units derived from itaconic acid and (meth)acrylic acid at from about 90 to about 99.9 mole % and monomer units derived from AMPS at from about 0.1 to about 10 mole %.
The copolymer or terpolymer can be from about 0.1 to about 60 % esterified.
The polymer composition preferably is included in an aqueous polymer solution comprising the polymer composition and water. When in polymer solution, the solution preferably has a pH of greater than 1.8 and is transparent or substantially transparent.
In a further aspect, the disclosed technology provides a polymer solution or formulation of the itaconic acid copolymer or terpolymer. The polymer solution can contain less than 0.5% w/w unreacted monomer based on the total weight of the polymer present in the solution, and preferably, can be characterized by a pH of greater than 1.8.
In another aspect, the disclosed technology provides a process for preparing a polymer solution of the itaconic acid copolymer as described herein comprising: preparing in an aqueous medium a monomer solution of greater than 25 mole % itaconic acid monomer with less than 75 mole % of a co-monomer composition comprising acrylic acid, AMPS or a mixture thereof, wherein said co-monomer composition is added to said itaconic acid monomer over a period of from about 2 to 16 hours at a polymerization temperature of greater than 60° C in the presence of from about 0.01 to about 5 mole % polymerization initiator, based on the total amount of said monomers, wherein the reaction mixture is free of metal promoters, said co-monomer composition and at least half of said initiator being added separately and essentially continuously throughout said period to said itaconic acid monomer in solution in said medium, and further comprising a step of pre-neutralizing said monomer solution with less than 5 mole % of a neutralizer per total acid group present within said monomer solution.
In a further aspect the present invention provides a process for preparing a polymer solution of the itaconic acid polymer of any previous claim comprising: preparing in an aqueous medium a monomer solution of itaconic acid and polymerizing at a polymerization temperature of greater than about 60° C in the presence of from about 0.01 to about 5 mole % polymerization initiator, based on the total amount of said monomers, wherein the reaction mixture is free of metal promoters, and further comprising a step of pre-neutralizing said monomer solution with less than 5 mole % of a neutralizer per total acid group present within said monomer solution.
In a further aspect the present invention provides a process for preparing a polymer solution of the itaconic acid copolymer of the present invention comprising: preparing in an aqueous medium a monomer solution of itaconic acid and polymerizing at a polymerization temperature of greater than about 60°C in the presence of from about 0.01 to about 5 mole % polymerization initiator, based on the total amount of said monomers, wherein the reaction mixture

is free of metal promoters, and further comprising a step of pre-neutralizing said monomer solution with less than 5 mole % of a neutralizer per total acid group present within said monomer solution.

In one embodiment, the itaconic acid monomer and from about 0.5 to about 10 wt%, or from about 2 to about 25 wt% of the initiator are dissolved in the medium and the remainder of the initiator is introduced over the period.

In an embodiment, the initiator is a redox system. In a preferred embodiment, the redox system contains a sodium persulfate oxidizer and a reducer including a mixture of a disodium salt of 2-hydroxy-2-sulfinatoacetic acid and sodium sulfite. In another embodiment, the redox system contains a sodium persulfate, tertiary butyl perpivalate or tertiary butyl perbenzoate oxidizer and a reducer including a mixture of a disodium salt of 2-hydroxy-2-sulfinatoacetic acid and sodium sulfite.

In some embodiments, the neutralizer is a base having less than 25 mole % carboxylic acid functionality.

The process can further include a step of post-neutralizing the resultant polymer solution with up to 120% of a neutralizer per acid group in the polymer solution.

In another embodiment, the process can include the additional step of converting the polymer solution to a powder by either (i) granulation of polymer with inorganic bases, (ii) spray-drying the pre-neutralized polymer solution, or (iii) granulation of the spray-dried powders with binders.

An additional aspect of the disclosed technology is a dishwashing detergent comprising the itaconic acid co-polymer or terpolymer, or polymer solution containing the itaconic acid copolymer or terpolymer. Similarly, the disclosed technology provides a laundry detergent and a hard surface cleaner comprising the itaconic acid copolymer or terpolymer, or polymer solution containing the itaconic acid copolymer or terpolymer.

The dishwashing detergent can be in the form of a gel, liquid, powder, bars, paste, hard or soft compressed monolayered tablet, hard or soft compressed multilayered tablet, single phase unidose detergent, multiphase unidose, or unit dose. The laundry detergent can be in the form of a gel, liquid, powder, bars, paste, hard or soft compressed monolayered tablet, hard or soft compressed multilayered tablet, single phase unidose detergent, multiphase unidose, or unit dose.

In an embodiment, the copolymer can be employed in a cosmetically acceptable formulation, for example, a shampoo or body cleansing formulation.

In one embodiment, the polymer composition and/or polymer solution/formulation can be employed in a method of chelating ions by providing the polymer composition or polymer formulation to a cosmetically, pharmaceutically or industrially acceptable composition. The present invention provides a method of chelating metal ions from a solution comprising adding to a solution containing metal ions, or subject to containing metal ions, an itaconic acid copolymer of the present invention.

Described herein is a method of providing industrial water treatment and/or industrial water purification comprising adding a deposit control agent comprising an itaconic acid polymer as described above to a water solution in need of industrial water adding to a drilling mud or slurry an itaconic acid polymer and operating a drill with

treatment and/or industrial water purification. The method can include blending the itaconic acid polymer with other known scale inhibitors and/or dispersant agents comprising phosphonates, polymaleic and/or polyacrylic acid homo- or co-polymers; and/or corrosion inhibitors comprising tolyltriazole, polyphosphates, phosphonates, and molybdate.

Described herein is a method of providing rheology modification in drilling operations and/or slurry transport applications comprising adding to a drilling mud or slurry an itaconic acid polymer and operating a drill with the drilling mud or slurry. The method can include blending the itaconic acid polymer with other known scale inhibitors and/or dispersant agents comprising phosphonates, polymaleic and/or polyacrylic acid homo- or co-polymers; and/or corrosion inhibitors comprising tolyltriazole, polyphosphates, phosphonates, and molybdate.

## BRIEF DESCRIPTION OF THE DRAWINGS

**Figure 1:** $^1$H NMR of Comparative Sample I
**Figure 2:** $^1$H NMR of Comparative Sample II
**Figure 3:** $^1$H NMR of Sample 5

## DETAILED DESCRIPTION OF THE INVENTION

Various preferred features and embodiments will be described below by way of non-limiting illustration.

A first aspect of the invention is an itaconic copolymer as defined in the claims. As used herein, the term polymer or copolymer can include any type of polymer, such as, for example, random or block copolymers, terpolymers or other polymers containing more than two monomers ("improved polymers"). The improved copolymer can provide improved builder efficiency for personal care, home care, health care, and industrial and institutional (I&I) applications. The improved

polymers can consist of, consist essentially of, or comprise itaconic acid derived monomers and an acrylic acid, methacrylic acid or 2-acrylamido-2-methylpropane sulfonic acid (AMPS) derived co-monomers or other carboxylic acid containing co-monomers, such as maleic acid and fumaric acid.

As used herein, (meth)acrylic acid refers to both acrylic acid and methacrylic acid. Further, when discussing itaconic acid, (meth)acrylic acid, and AMPS, in relation to a polymer, copolymer and/or terpolymer, it is to be understood that the reference to the acid form encompasses the monomer unit derived therefrom. Thus, for example, a polymer of itaconic acid and acrylic acid is to be understood as comprising monomer units derived from itaconic acid and monomer units derived from acrylic acid.

Itaconic acid is an organic compound which is non-toxic and may be derived from renewable resources. Itaconic acid may be obtained by the distillation of citric acid or by the fermentation of carbohydrates such as glucose using *Aspergillus terreus.* Itaconic acid may be referred to as methylenesuccinic acid or 2-methylidenebutanedioic acid. Itaconic acid may be represented by the formula $C_5H_6O_4$ or by the formula $CH_2=C(COOH)CH_2COOH$.

The improved polymer is a copolymer or terpolymer wherein the backbone of the polymer comprises structural units derived from itaconic acid, or an anhydride, ester or salt thereof and at least one of (meth)acrylic acid, and their anhydrides, esters and salts, AMPS and salts thereof (collectively referred to as (meth)acrylic acid and AMPS).

The salts of (meth)acrylic acid and AMPS can be the same as the salts of the itaconic acid, namely sodium, potassium or ammonium salts and alkylated ammonium salts such as triethyl ammonium salt, and alkylated hydroxyl ammonium salts such as triethanol ammonium salt.

The improved copolymer contains monomer units derived from itaconic acid. Preferably, the improved copolymer can contain greater than about 25 mole %, 50 mole %, 60 mole %, or greater than 70 mole %, monomer units derived from itaconic acid. In some embodiments, the improved copolymer can contain from about 35 mole % to about 60 mole %, or 35, 50 or 60 mole % to about 70 or 80 mole % monomer units derived from itaconic acid. In certain instances the monomer units derived from itaconic acid can be from about 1 to about 99 mole %, or about 5 to about 95 mole %, or even about 10 to about 90 mole %, and in some instances from about 20 to about 80 mole %. In certain instances about 0.1 to about 15 or 20 mole%, or from about 0.5 or 1.0 to about 2.5 or 5 or 10 mole % of the itaconic acid derived monomer units can be replaced by AMPS derived monomer units.

The improved copolymer can optionally contain co-monomer units derived from (meth)acrylic acid or other carboxylic acid containing co-monomers, such as maleic acid and fumaric acid. The amount of co-monomer units derived from (meth)acrylic acid or other carboxylic acid containing co-monomers, such as maleic acid and fumaric acid, can be up to about 75 mole %, 50 mole % of the copolymer and/or terpolymer, or up to about 30 or 40 mole %. In certain instances the co-monomer units derived from (meth)acrylic acid can be from about 15 or 20 or 25 mole % to about 30 or 40 or 50 mole % of the copolymer or terpolymer composition. In certain instances about 0.1 to about 15 or 20 mole%, or from about 0.5 or 1.0 to about 2.5, or 5 or 10 mole % of the (meth)acrylic acid derived co-monomer units can be replaced by AMPS derived co-monomer units.

The improved copolymer can also contain co-monomer units derived from AMPS. The amount of co-monomer units derived from AMPS can be up to about 75 mole %, 50 mole % of the copolymer and/or terpolymer, or up to about 30 or 40 mole %. In certain instances the co-monomer units derived from AMPS can be from about 15 or 20 or 25 mole % to about 30 or 40 or 50 mole % of the copolymer or terpolymer composition. In some instances, the AMPS co-monomer units can replace a portion of the itaconic acid monomers, (meth)acrylic acid monomers, or a combination thereof. The AMPS derived monomers can replace from about 0.1 to about 20 mole %, or about 0.5 to about 10 or 15 mole %, or about 1 to about 2.5 or 5 mole % of the itaconic acid monomers, (meth)acrylic acid monomers, or a combination thereof, in which case the other co-monomers will be in the range of about 80 or 85 to about 99.9 mole %, or about 90 or 95 to about 99.5 mole %, or about 97.5 to about 99% of the copolymer and/or terpolymer.

The improved copolymers are free of, or substantially free of moieties of tri-substituted vinyl monomer isomers of itaconic acid, such as citraconic acid and mesaconic acid. By "substantially free of moieties of tri-substituted vinyl monomer isomers," it is meant that there is an insufficient amount of the isomer moieties present in the improved copolymer to effect the efficacy of the improved copolymer, i.e. this amount is less than 0.5 mole %, or 0.1 mole %, or less than 0.05 mole %, or less than 0.01 mole %, based on the number of monomer units in the improved copolymer.

Further, the improved polymer solution can include less than 0.5% w/w unreacted monomer and co-monomer based on the total weight of the copolymer present in the solution, or less than 0.25% w/w, or free or substantially free of unreacted monomer and co-monomer. Here again, by "substantially free of unreacted monomer" it is meant that there is an insufficient amount of unreacted monomer present in the improved polymer solution to affect the efficacy of the solution, such as, for example, less than 0.5 mole %, or 0.1% w/w, or less than 0.05% w/w, or less than 0.01% w/w, or less than 0.001% w/w, based on the weight of the improved polymer in the solution, or from less than 2.5 or 2.0 wt%, or 1 wt%, or less than 0.5 wt%, or less than 0.1 wt.%.

The improved copolymers have number average molecular weights (Mn) of from 500 to 100,000, preferably from about 1000 to 50,000, more preferably from about 2500 to about 25,000. The copolymer can also have an Mn of from about 3000 to about 20,000. In some embodiments the Mn of the improved copolymers can be from about 500 to

about 10,000 or 1000 to about 5000. In some embodiments, the polymer composition can have an Mn of 500. Likewise, the improved copolymer can have a polydispersity of from about 1 to 20, more preferably 1 to 10, or 1 to 5 or 8.

The improved copolymers can be prepared by polymerizing a major amount of itaconic acid monomer with at least one of (meth)acrylic acid co-monomer, AMPS co-monomer, or combinations thereof. The polymerization process can provide homogenous, substantially homogenous, random or block polymers and copolymers.

Block copolymers are defined by the art as polymers derived from two or more different monomers in which multiple sequences, or blocks, of the same monomer alternate in series with the different monomer blocks. Block copolymers can contain two blocks (di-block), three blocks (tri-block), or more than three blocks (multi-block). Block copolymers can be alternating copolymers with the two or more different monomers along the polymer backbone at regularly alternating intervals. There are also periodic copolymers in which the two or more monomers are arranged in a regularly repeating sequence, and statistical copolymers in which the sequence of the two or more different monomers repeat based on a statistical rule. Preferably, the block copolymer created according to the process of the invention is an alternating multi-block copolymer.

In one aspect of the invention, the improved copolymers of the invention can be synthesized by free radical polymerization of the monomer mixture described above. The copolymers can be prepared via solution, dispersion, precipitation, mass or bulk, emulsion (or inverse emulsion) polymerization techniques that are well-known in the polymer art.

In one aspect the present copolymers are prepared by solution polymerization in an aqueous medium. By aqueous medium it is meant water, mixtures of water and other solvents such alcohols, as well as alcohols on their own.

The polymerization can be carried out in a variety of solvents, such alcohols, ethers, esters, aromatic solvents, glycols, glycol ethers, and glycol esters, all of which are considered aqueous media herein. Preferred solvents include ethyl alcohol, isopropyl alcohol, t-butyl alcohol, ethyl acetate, methyl acetate, butyl acetate, benzene, toluene, methyl ethyl ketone, and methylene chloride. These solvents can be used also in combination with hydrocarbon solvents such as hexane, cyclohexane, and mineral spirits. A preferred aqueous medium is water. One further preferred solvent is an isopropyl alcohol and water mixture. Isopropyl alcohol is another preferred aqueous medium.

The polymerization process is completed in an aqueous medium in the presence of a polymerization initiator and at lower temperatures than taught in the prior art. In general, the (meth)acrylic acid, AMPS, combinations thereof and the initiator are added separately from the itaconic acid, but they can also be added simultaneously with the itaconic acid. Acrylic acid, methacrylic acid and AMPS copolymerize in essentially the same manner with itaconic acid, and may therefore be interchanged or mixed in the process to give products with essentially the same molecular weight and improved metal ion-binding characteristics for a copolymer of given AMPS or (meth)acrylic acid/itaconic acid mole ratio.

The process includes a pre-neutralization step in which the pH of the polymerization solution is neutralized with a neutralizer, (i.e. a source of sodium, potassium or ammonium and alkylated ammonium such as triethyl ammonium, and alkylated hydroxyl ammonium such as triethanol ammonium) to typically a pH of greater than about 1.8, or greater than about 2 or 3. The closer the pH to neutral (i.e., 7) the less corrosive the polymer solution will be. However, the greater the amount of neutralization the more likely it is for the itaconic acid to isomerize. Thus, the neutralizer is added in an amount suitable to achieve a pH of greater than 1.8 but less than the critical threshold at which itaconic acid will isomerize. Generally, the neutralizer can be added during the pre-neutralization step at a dosage to neutralize no more than 20 mole % of the carboxylic acid groups from the itaconic acid monomers. The neutralizer is added during the pre-neutralization step at a dosage to neutralize less than 5 mole % of the total carboxylic acid groups from all monomers (it is referred to in terms of the degree of neutralization, based on the mole % of acid).

The process can also include a post-neutralization step in which the pH of the final product is neutralized with a neutralizer. Post-neutralization can make the copolymer more alkaline so that it can be employed in high pH applications. An amount of up to about 120 mole% of the amount of neutralizer needed to completely neutralize the copolymer may be added during post-neutralization, or up to about 100 mole%. In another embodiment, a neutralizer may be added at from about 60 to about 100 mole%, or from about 65 or 70 or 75 to about 85, or 90 or 95 mole%.

The neutralizer can be an alkali metal base, ammonium, and/or amine base. Alkali metal bases suitable for the neutralization include sodium hydroxide, potassium hydroxide and lithium hydroxide, while suitable ammonium and amine bases include ammonia, ammonium hydroxide, mono-, di-and trialkyl amines having 1 to 5 carbon atoms in each alkyl group, pyridine, morpholine and lutidine. The neutralizer can also be a base with carboxylic acid functionality, although it is preferred that such a neutralizer has less than 25 mole % carboxylic acid functionality. Examples of neutralizers having carboxylic acid functionality include, but are not limited to, amino acids, peptides, polypeptides, and their derivatives. The amino acid can be chosen from, for example, alanine, arginine, asparagine, aspartic acid, cysteine, glutamine, glutamic acid, glycine, isoleucine, leucine, lysine, methionine, phenylalanine, proline, serine, threonine, tryptophan, tyrosine, and valine.

Any water-soluble, free-radical initiator may be used as the polymerization initiator of this process. Suitable initiators include persulfates such as sodium and potassium persulfate as well as redox systems.

Other initiators, include peroxo- and/or azo- type initiators, such as hydrogen peroxide, benzoyl peroxide, acetyl

peroxide, and lauryl peroxide, t-butyl peroxypivalate, t-butyl cumyl peroxide and/or cumene hydroperoxide, di-t-butyl peroxide and/or t-butyl hydroperoxide, ethyl hexyl peroxodicarbonate, diisopropyl peroxydicarbonate, 4-(t-butylperoxylperoxy-carbonyl)-3-hexyl-6-7-(t-butylperoxycarbonyl)hepty 1 cyclohexene (4-TBPCH), t-butyl peroxyneodecanoate, and other organic peroxides sold by Elf Atochem North America, Inc., Philadelphia, Pa., under the trade names of Lupersol, Luperco, Lucidol and Luperox; organic peracids, such as peracetic acid; and oil and water soluble free radical producing agents, such as azobis-dimethylvaleronitrile, 2,2'-azobisisobutyronitrile, azobis-methylbutyronitrile and others sold by DuPont, Wilmington, Del. under the trade name VAZO and by WAKO Pure Chemical Industries, Richmond, Va. under the trade name of V-40 to V501; and mixtures thereof can also be used in combination with water soluble initiators. Preferred oil soluble initiators are T-butyl peroxybenzoate, di-T-butyl peroxide, T-butyl cymyl peroxide, T-butyl peroxypivalate, lauryl peroxide, cumene hydroperoxide, ethyl hexyl peroxodicarbonate, diisopropyl peroxydicarbonate, 4-(t-butylperoxylperoxy-carbonyl)-3-hexyl-6-7-(t-butylperoxycarbonyl)hepty 1 cyclohexene, cumene hydroperoxide and t-butyl peroxyneodecanoate, t-butyl hydroperoxide, benzoyl, peroxide and combinations thereof.

Suitable reducers for the redox system include sulfur compounds, such as, for example, the sodium salt of hydroxymethanesulfinic acid, a mixture of a disodium salt of 2-hydroxy-2-sulfinatoacetic acid and sodium sulfite, Brüggolit™ FF6 and FF7 (registered trademarks of Brüggemann), sodium sulfite, sodium disulfite, sodium thiosulfate, and acetone-bisulfite adduct. A typical redox system can include, consist essentially of, or consist of, for example, sodium persulfate type oxidizers with sodium bisulfite type reducers, such as Brüggolit™ FF6. In one embodiment, the reaction mixture is free of metal promoters, such as copper.

The polymerization initiator should be present in an amount of from about 0.01 to about 5 mole % based on the total amount of the monomers. All or at least half of the initiator can be added separately from the itaconic acid monomer. In one embodiment, the initiator can be added essentially continuously throughout the polymerization period. The initiator can also be added in discreet amounts at various times through the polymerization period. Preferably, from about 0.5 to about 25 or 50 wt% of the initiator charge is dissolved along with the itaconic acid in the aqueous medium and the remainder (i.e. 50 or 75 to 99.5 wt%) of the initiator is then introduced, preferably as an aqueous solution, over the polymerization period or with the (meth)acrylic acid and/or AMPS monomers. The concentration of the initiator in the aqueous addition solution is normally from about 0.5 to 10 weight%.

A bleaching agent may be employed to improve the color of the polymer mixture. Bleaching agents can include, for example, hydrogen peroxide, its derivatives and addition products that release hydrogen peroxide.

The polymerization process may also include a peroxide clean-up agent to reduce and/or remove hydrogen peroxide residuals from any bleaching agent that might have been employed. Examples of peroxide clean-up agents can include peroxide clean-up enzymes and/or chemical reducing agents and/or heat processes that remove hydrogen peroxide. Peroxide clean-up enzymes refer to enzymes which can catalyze the conversion of hydrogen peroxide into water and oxygen, such as catalase (EC 1.11.1.6). Example catalases include those derived from bacteria such as Bacillus, Pseudomonas or Streptomyces strain; yeast such as Candida, Kluyveromyces, Pichia, Saccharomyces, Schizosaccharomyces or Yarrowia; fungi such as Acremonium, Aureobasidium, Aspergillus, Bjerkandera, Ceriporiopsis, Coprinus, Coriolus, Cryptococcus, Filibasidium, Fusarium, Humicola, Magnaporthe, Mucor, Myceliphthora, Neocallimastix, Neurospora, Paecilomyces, Penicillium, Phanerochaete, Phlebia, Piromyces, Pleurotus, Schizophyllum, Scytalidium, Talaromyces, Thermoascus, Thielavia, Tolypocladium, Trametes or Trichoderma strain; or animals such as pig liver, beef lever. Non-limiting examples of suitable catalases are disclosed in WO 92/17571, CN 1563373, US 2003100112-A1, EP 1336659-A, US 2003/074697, U.S. Pat. No. 6,201,1671, U.S. Pat. No. 6,022,721, EP 931831-A, JP 11046760-A, WO 93/17721, WO 93/09219, JP 1086879-A and/or JP 63003788-A. Non-limiting examples are T 100; Terminox™ Ultra 200L (Novazyme); Oxy-Gone 400 (GOD; Fermcolase 1000 (Mitsubishi Gas Chemical) or Thermocatalase CTL 200 or JH CT 1800 (Mitsubishi Gas Chemical). Depending on the activity of the catalase and the pH of the liquor used to apply the catalase, preferably the amount of catalase used is from 0.001 to 1 g/l, especially about 5 g/l of liquor used to apply the catalase. Chemical reducing system refers to any chemical reducing agent(s) for removing hydrogen peroxide by catalyzing the conversion of hydrogen peroxide into water and oxygen. Exemplary reducing agents include, for example, sodium thiosulphate, sodium bisulphite, sodium hydrosulphite and sodium hyposulphate.

Optionally, other polymerization additives and processing aids which are well known in the solution polymerization art, such as, chain transfer agents, solvents, emulsifiers, processing aids, defoamers, buffering agents, chelating agents, inorganic electrolytes, polymeric stabilizers, biocides, and pH adjusting agents can be included in the polymerization system.

The polymerization can be carried in a variety of solvents, such alcohols, ethers, esters, aromatic solvents, glycols, glycerol, glycol ethers, and glycol esters. Preferred solvents include ethyl alcohol, isopropyl alcohol, t-butyl alcohol, ethyl acetate, methyl acetate, butyl acetate, benzene, toluene, and methylene choride. These solvents can be used also in combination with hydrocarbon solvents such as hexane, cyclohexane, and mineral spirits. One preferred solvent is an isopropyl alcohol and water mixture or isopropyl alcohol or water.

The polymerization temperature and duration of the polymerization are influential in determining the nature of the resulting copolymer.

The polymerization is carried out at a temperature of greater than about 60°C optionally in water. In another embodiment, the polymerization is carried out in a water/alcohol (such as, for example, isopropyl alcohol) mixed solvent at a temperature of greater than about 60°C. In a further embodiment, the polymerization is carried out in water at a polymerization temperature of 99, or 95, or 90°C or less. In a further embodiment, the polymerization is carried out in an alcohol (such as, for example, isopropyl alcohol) solvent at a temperature of greater than 60°C.

The presence of alcohol solvent can result in the partial esterification of the acid groups so that the resultant co-polymer comprises ester functionality. The percentage of acid groups in the co-polymer that become esterified may depend, in part, on the temperature and pressure at which the polymerization is maintained. The resultant co-polymer may be from about 0.1 to about 60 mole% esterified, meaning from about 0.1 to about 60 % of the total acid groups from all monomers in the co-polymer are esterified. The co-polymer also may be from about 0.5, or 1 to about 50 % esterified, or from 1.5, or 5, or 10 to about 40% esterified. In some embodiments, the co-polymer may be from about 0.1 to about 10 or 15 % esterified. In some embodiments, the copolymer are essentially free or completely free of esterified acid groups.

The polymerization period can be sustained at from about 2 to about 8 hours. The final polymerization solution is generally maintained at the polymerization temperature until reaction is completed following the completion of the (meth)acrylic acid and/or AMPS co-monomers and initiator addition period.

By the selection of the above reaction parameters within the specified ranges, random or block copolymers and/or terpolymers of itaconic acid, (meth)acrylic acid and/or AMPS can be prepared with number average molecular weights (Mn) of from 500 to 100,000, preferably from about 1000 to 50,000, more preferably 1000 to 10,000.

Importantly, the improved polymers, e.g., copolymers and/or terpolymers, produced according to the above process will be free of or substantially free of moieties of tri-substituted vinyl monomer isomers of itaconic acid, such as citraconic acid and mesaconic acid. Further, the resulting polymer solution will include less than 0.5% w/w unreacted monomer based on the total weight of the copolymer present in the solution, or less than 0.25% w/w, or free or substantially free of unreacted monomer.

In addition, the polymer solution will be transparent or substantially transparent. Transparency of a solution can be measured in terms of the turbidity of the solution; that is the cloudiness or haziness of the solution. Turbidity is measured on a nepholometer in nephelometric turbidity units ("NTU"). By transparent it is meant that the solution has a turbidity of less than 5 NTUs. Substantially transparent means the polymer solution has a turbidity of between about 5 and 100 NTUs, or more preferably 5 and 50 NTUs, 5 to 25 NTUs, or 5 to 15 NTUs.

Preferred embodiments of the instant process include those in which from about 30 to 40 mole % acrylic acid is copolymerized with from about 60 to 70 mole % itaconic acid. In an especially preferred process, about 30 to 40 mole % acrylic acid, 1 to 2 mole % sodium persulfate and 1 to 2 mole % Brüggolit™ FF6 are added separately over a period of about 3 to 5 hours to an aqueous solution of about 60 to 70 mole % itaconic acid at a temperature of between about 60° to 80°C, and the polymerization solution is held at temperature for an additional 4 hours following the addition.

The improved copolymers can consist essentially of from about 30 to 40 mole % (meth)acrylic acid or AMPS derived units and from about 60 to 70 mole % itaconic acid derived units, or can consist essentially of from about 25 to 35 mole % (meth)acrylic acid, 5 to 15 mole% AMPS derived units, and from about 50 to 60 mole % itaconic acid derived units, and having a number average molecular weight of from 500 to 100,000, preferably from about 1000 to 50,000, more preferably 1000 to 10,000. The copolymer will normally be added to aqueous systems. The final polymerization solution, as such, diluted or concentrated as desired, will generally be used without isolation of the copolymer product.

Liquid polymers can also be dried using various drying techniques as known in the prior art [Handbook of Industrial Drying, by Arun S. Mujumdar, Third Edition, 2007]. Some commonly used polymer dryers are rotary dryer, flash dryer, spray dryer, fluidized bed dryer, vibrated fluidized bed dryer, contact fluid-bed dryer, paddle dryer, plate dryer, spray granulation and DRT spiral dryer.

Evaluation of these improved copolymers has shown them to be superior to the itaconic acid polymers of the prior art.

The improved copolymers can therefore be employed in a method of chelating ions of hardness (e.g., chelating or sequestering metal ions and the like) from a solution. The method can comprise adding to a solution containing ions of hardness, or subject to containing ions of hardness, the improved copolymers or solutions thereof. Many applications in the personal and home care industry are subjected to liquids that contain ions of hardness, for example, hard water.

Hard water is water that has high mineral content or "ions of hardness" (in contrast with "soft water"). The most prevalent ions of hardness are generally calcium and magnesium, but other ions of hardness can include, for example, iron, aluminum, and manganese. The level of "hardness" can be measured, for example, by taking the sum of the total molar concentrations of the ions of hardness in the system, such as $Ca^{2+}$ and $Mg^{2+}$, in mol/L or mmol/L units. Hardness can also be measured in other units, such as, for example, ppm, where ppm can be defined in terms of the mineral content in the water, such as, for example, 1 mg/L $CaCO_3$.

Thus, the improved copolymers or solutions thereof can be employed as builders to improve detergent performance in, for example, household care products, water treatment products, automotive care, surface care, I&I and

personal care products. Exemplary automotive care applications include, for example car washes, car protectants, car cleaners, and car shampoos.

The copolymers of the present invention can be used in home care, and institutional and industrial ("I&I") applications. Typical household and I&I products that may contain copolymers of the invention, include, without being limited thereto, fabric care products, such as laundry detergents (powder, liquid, gel, and unit doses) and fabric softeners (liquids or sheets), ironing sprays, dry cleaning aids, antiwrinkle sprays, stain and spot removers; hard surface cleaners for the kitchen and bathroom and utilities and appliances employed or located therein, such as toilet bowl gels, tub and shower cleaners, hard water deposit removers, floor and tile cleaners, wall cleaners, floor and chrome fixture polishes, alkali-strippable vinyl floor cleaners, marble and ceramic cleaners, air freshener gels, liquid, gels, powder or unit does (e.g., pouches) cleaners for dishes (automatic and manual); disinfectant cleaners, such as toilet bowl and bidet cleaners, disinfectant hand soaps, room deodorizers, heavy duty hand soaps, cleaners and sanitizers, and automotive cleaners.

In a preferred embodiment, the improved copolymers or solutions thereof are employed in automatic dish detergents. Such dish detergents can be in different forms, such as, for example, liquid, powder, gels, tablets and unit dose pouches, bars, paste, hard or soft compressed monolayered tablet, hard or soft compressed multilayered tablet, single phase unidose detergent, multiphase unidose comprising, for example, any combination of powder, granulate, liquid and gel phases. In another embodiment, the improved copolymers can be used in laundry detergents both in liquid, powder, gels, tablets and unit dose pouches, bars, paste, hard or soft compressed monolayered tablet, hard or soft compressed multilayered tablet, single phase unidose detergent, multiphase unidose comprising, for example, any combination of powder, granulate, liquid and gel phases.

Exemplary water treatment applications include, for example, water purification processes for potable & industrial uses, cooling water treatment, boiler water treatment, desalination (e.g., reverse osmosis, distillation), and wastewater (e.g., municipal & industrial) treatment. In one preferred embodiment, the improved copolymers are used in water treatment applications as scale inhibitors and/or dispersants.

Exemplary deposit control applications, both scale and suspended solids dispersion, as applied to water treatment including fresh, saline, and process water, include, for example, cooling water treatment, boiler water treatment, thermal and reverse osmosis (RO) desalination, municipal and industrial wastewater, geothermal exploration, oil and gas exploration and production, pulp and paper manufacturing, sugar refining, as well as mining processes. Scale examples include calcium carbonate; calcium phosphates and phosphonates; calcium, barium, and strontium sulfates; magnesium hydroxide; calcium fluoride; calcium oxalates; silica; and silicates. In some cases, the improved copolymers can be used as scale removing agents, rheology modifiers in drilling operations as well as for slurry transport of solids suspended in water.

Exemplary personal care cleansers include but are not limited to shampoos (e.g., 2-in-1 shampoos, conditioning shampoos, bodifying shampoos; moisturizing shampoos, temporary hair color shampoos, 3-in-1 shampoos, anti-dandruff shampoos, hair color maintenance shampoos, acid (neutralizing) shampoos, salicylic acid shampoos, medicated shampoos, and baby shampoos), and skin and body cleansers (e.g., moisturizing body washes, antibacterial body washes; bath gels, shower gels, liquid hand soaps, bar soaps, body scrubs, bubble baths, facial scrubs, and foot scrubs). Similarly, the improved copolymer can be employed in pet and animal care applications. Exemplary pet and animal care cleansers include but are not limited to shampoos, medicated shampoos, conditioning shampoos (e.g., detangling, antistatic, grooming), and foaming shampoos.

There is no limitation as to the form of product in which the improved copolymers can be incorporated, so long as the purpose for which the product is used is achieved. For example, personal care and health care products containing the improved copolymer can be applied to the skin, hair, scalp and nails in the form of, without being limited thereto, gels, sprays (liquid or foam), emulsions (creams, lotions, pastes), liquids (rinses, shampoos), bars, ointments, suppositories, impregnated wipes, and patches. Likewise, while the improved copolymers can be employed on their own, the improved copolymers can be employed in compositions with optional additional ingredients.

It is known that formulated compositions for personal care and topical, dermatological, health care, which are applied to the skin and mucous membranes for cleansing or soothing, are compounded with many of the same or similar physiologically tolerable ingredients and formulated in the same or similar product forms, differing primarily in the purity grade of ingredient selected, by the presence of medicaments or pharmaceutically accepted compounds, and by the controlled conditions under which products may be manufactured. Likewise, many of the ingredients employed in products for households, and I&I are the same or similar to the foregoing, differing primarily in the amounts and material grade employed. It is also known that the selection and permitted amount of ingredients also may be subject to governmental regulations, on a national, regional, local, and international level. Thus, discussion herein of various useful ingredients listed below may apply to personal care, health care products, household and I&I products and industrial applications.

The choice and amount of ingredients in formulated compositions containing an improved copolymer as described herein will vary depending on the product and its function, as is well known to those skilled in the formulation arts. Formulation ingredients typically can include, but are not limited to, natural and synthetic soaps, solvents, surfactants (as cleaning agents, emulsifying agents, foam boosters, hydrotropes, solubilizing agents, and suspending agents), non-surfactant suspending agents, anti-redeposition aids, brighteners, fillers (e.g., sodium carbonate, sodium sulfate, and sodium silicate), deflocculating agents, enzymes and enzyme stabilizing agents, radical scavengers, corrosion inhibitors, salts, emulsifiers, conditioning agents (emollients, humectants, and moisturizers), fixatives, film-formers, protectants, binders, builders, chelating agents, chelators, co-chelators, antimicrobial agents, antifungal agents, antidandruff agents, abrasives, dye transfer inhibitors, adhesives, absorbents, dyes, deodorant agents, antiperspirant agents, flourescers, opacifying and pearlescing agents, antioxidants, preservatives, propellants, spreading aids, soil release agents, sunscreen agents, sunless skin tanning accelerators, ultraviolet light absorbers, pH adjusting agents, botanicals, hair colorants, oxidizing agents, reducing agents, bleaching agents, pigments, physiologically active agents, glass and ceramic corrosion inhibitors, plastic care ingredients, anti-inflammatory agents, topical anesthetics, bactericides, fragrance and fragrance solubilizers, in addition to ingredients previously discussed that may not appear herein. An extensive listing of substances and their conventional functions and product categories appears in the INCI Dictionary, generally, and in particular in Vol. 2, Sections 4 and 5 of the Seventh Edition.

Any cleaning ingredient in addition to builders can be used as part of the detergent product of the invention. The levels given are weight percent and refer to the total composition (excluding the enveloping water-soluble material, in the case of unit dose forms having a wrapper or enveloping material). The detergent composition can contain a phosphate builder or be free of phosphate builder and comprise one or more detergent active components which may be selected from bleach, bleach activator, bleach catalyst, surfactants, alkalinity sources, polymer, dying aids, anticorrosion agents (e.g. sodium silicate) and care agents. Particularly suitable cleaning components for use herein include a builder compound, a bleach, an alkalinity source, a surfactant, an anti-scaling polymer for example, a polymer, an enzyme and an additional bleaching agent.

**Surfactant**

Surfactants are generally employed as cleaning and cleansing agents, emulsifying agents, foam boosters, hydrotropes and rheology modifying systems. The copolymers of the present invention may be employed in formulations containing all classes of surfactants, i.e., anionic surfactants, cationic surfactants, nonionic surfactants, amphoteric surfactants. The term "amphoteric surfactant" as used herein includes zwitterionic surfactants. In addition to the foregoing references, discussions of the classes of surfactants are in Cosmetics & Toiletries™ C&T Ingredient Resource Series, "Surfactant Encyclopedia", 2nd Edition, Rieger (ed), Allured Publishing Corporation (1996); Schwartz, et al., Surface Active Agents, Their Chemistry and Technology, published 1949; and Surface Active Agents and Detergents, Volume II, published 1958, Interscience Publishers.

**Anionic Surfactant Detergents**

Anionic surface active agents which may be used in the present invention are those surface active compounds which contain a long chain hydrocarbon hydrophobic group in their molecular structure and a hydrophilic group, i.e. water solubilizing group such as carboxylate, sulfonate or sulfate group or their corresponding acid form. The anionic surface active agents include the alkali metal (e.g. sodium and potassium) and nitrogen based bases (e.g. mono-amines and polyamines) salts of water soluble higher alkyl aryl sulfonates, alkyl sulfonates, alkyl sulfates and the alkyl poly ether sulfates. They may also include fatty acid or fatty acid soaps. One of the preferred groups of mono-anionic surface active agents are the alkali metal, ammonium or alkanolamine salts of higher alkyl aryl sulfonates and alkali metal, ammonium or alkanolamine salts of higher alkyl sulfates or the mono-anionic polyamine salts. Preferred higher alkyl sulfates are those in which the alkyl groups contain 8 to 26 carbon atoms, preferably 12 to 22 carbon atoms and more preferably 14 to 18 carbon atoms. The alkyl group in the alkyl aryl sulfonate preferably contains 8 to 16 carbon atoms and more preferably 10 to 15 carbon atoms. A particularly preferred alkyl aryl sulfonate is the sodium, potassium or ethanolamine $C_{10}$ to $C_{16}$ benzene sulfonate, e.g. sodium linear dodecyl benzene sulfonate. The primary and secondary alkyl sulfates can be made by reacting long chain olefins with sulfites or bisulfites, e.g. sodium bisulfite. The alkyl sulfonates can also be made by reacting long chain normal paraffin hydrocarbons with sulfur dioxide and oxygen as describe in U.S. Patent Nos. 2,503,280, 2,507,088, 3,372,188 and 3,260,741 to obtain normal or secondary higher alkyl sulfates suitable for use as surfactant detergents.

The alkyl substituent is preferably linear, i.e. normal alkyl, however, branched chain alkyl sulfonates can be employed, although they are not as good with respect to biodegradability. The alkane, i.e. alkyl, substituent may be terminally sulfonated or may be joined, for example, to the 2-carbon atom of the chain, i.e. may be a secondary sulfonate. It is understood in the art that the substituent may be joined to any carbon on the alkyl chain. The higher alkyl sulfonates can be used as the alkali metal salts, such as sodium and potassium. The preferred salts are the sodium salts. The preferred alkyl sulfonates are the $C_{10}$ to $C_{18}$ primary normal alkyl sodium and potassium sulfonates, with the $C_{10}$ to $C_{15}$ primary normal alkyl sulfonate salt being more preferred.

Mixtures of higher alkyl benzene sulfonates and higher alkyl sulfates can be used as well as mixtures of higher

alkyl benzene sulfonates and higher alkyl polyether sulfates.

The alkali metal or ethanolamine sulfate can be used in admixture with the alkylbenzene sulfonate in an amount of 0 to 70%, preferably 5 to 50% by weight.

The higher alkyl polyethoxy sulfates used in accordance with the present invention can be normal or branched chain alkyl and contain lower alkoxy groups which can contain two or three carbon atoms. The normal higher alkyl polyether sulfates are preferred in that they have a higher degree of biodegradability than the branched chain alkyl and the lower poly alkoxy groups are preferably ethoxy groups.

The preferred higher alkyl polyethoxy sulfates used in accordance with the present invention are represented by the formula:

$$R1\text{-}O(CH_2CH_2O)_p\text{-}SO_3M,$$

where R1 is $C_8$ to $C_{20}$ alkyl, preferably $C_{10}$ to $C_{18}$ and more preferably $C_{12}$ to $C_{15}$; p is 1 to 8, preferably 2 to 6, and more preferably 2 to 4; and M is an alkali metal, such as sodium and potassium, an ammonium cation or polyamine. The sodium and potassium salts, and polyamines are preferred.

A preferred higher alkyl poly ethoxylated sulfate is the sodium salt of a triethoxy $C_{12}$ to $C_{15}$ alcohol sulfate having the formula:

$$C_{12\text{-}15}\text{-}O\text{-}(CH_2CH_2O)_3\text{-}SO_3Na$$

Examples of suitable alkyl ethoxy sulfates that can be used in accordance with the present invention are $C_{12\text{-}15}$ normal or primary alkyl triethoxy sulfate, sodium salt; n-decyl diethoxy sulfate, sodium salt; $C_{12}$ primary alkyl diethoxy sulfate, ammonium salt; $C_{12}$ primary alkyl triethoxy sulfate, sodium salt; $C_{15}$ primary alkyl tetraethoxy sulfate, sodium salt; mixed $C_{14\text{-}15}$ normal primary alkyl mixed tri- and tetraethoxy sulfate, sodium salt; stearyl pentaethoxy sulfate, sodium salt; and mixed $C_{10\text{-}18}$ normal primary alkyl triethoxy sulfate, potassium salt.

The normal alkyl ethoxy sulfates are readily biodegradable and are preferred. The alkyl poly-lower alkoxy sulfates can be used in mixtures with each other and/or in mixtures with the above discussed higher alkyl benzene, sulfonates, or alkyl sulfates.

The alkali metal higher alkyl poly ethoxy sulfate can be used with the alkyl benzene sulfonate and/or with an alkyl sulfate, in an amount of 0 to 70%, preferably 5 to 50% and more preferably 5 to 20% by weight of entire composition.

**Nonionic Surfactant**

Nonionic surfactants which can be used with the invention, alone or in combination with other surfactants are described below.

As is well known, the nonionic surfactants are characterized by the presence of a hydrophobic group and an organic hydrophilic group and are typically produced by the condensation of an organic aliphatic or alkyl aromatic hydrophobic compound with ethylene oxide (hydrophilic in nature). Typical suitable nonionic surfactants are those disclosed in U.S. Patent Nos. 4,316,812 and 3,630,929.

Usually, the nonionic surfactants are polyalkoxylated lipophiles wherein the desired hydrophile-lipophile balance is obtained from addition of a hydrophilic poly-alkoxy group to a lipophilic moiety. A preferred class of nonionic detergent is the alkoxylated alkanols wherein the alkanol is of 9 to 20 carbon atoms and wherein the number of moles of alkylene oxide (of 2 or 3 carbon atoms) is from 3 to 20. Of such materials it is preferred to employ those wherein the alkanol is a fatty alcohol of 9 to 11 or 12 to 15 carbon atoms and which contain from 5 to 9 or 5 to 12 alkoxy groups per mole. Also preferred is paraffin - based alcohol (e.g. nonionics from Huntsman or Sassol).

Exemplary of such compounds are those wherein the alkanol is of 10 to 15 carbon atoms and which contain about 5 to 12 ethylene oxide groups per mole, e.g. Neodol® 25-9 and Neodol® 23-6.5, which products are made by Shell Chemical Company, Inc. The former is a condensation product of a mixture of higher fatty alcohols averaging about 12 to 15 carbon atoms, with about 9 moles of ethylene oxide and the latter is a corresponding mixture wherein the carbon atoms content of the higher fatty alcohol is 12 to 13 and the number of ethylene oxide groups present averages about 6.5. The higher alcohols are primary alkanols.

Another subclass of alkoxylated surfactants which can be used contain a precise alkyl chain length rather than an alkyl chain distribution of the alkoxylated surfactants described above. Typically, these are referred to as narrow range alkoxylates. Examples of these include the Neodol- 1(R) series of surfactants manufactured by Shell Chemical Company.

Other useful nonionics are represented by the commercially well known class of nonionics sold under the trademark Plurafac® by BASF. The Plurafacs® are the reaction products of a higher linear alcohol and a mixture of ethylene and propylene oxides, containing a mixed chain of ethylene oxide and propylene oxide, terminated by a hydroxyl

group. Examples include $C_{13}$-$C_{15}$ fatty alcohol condensed with 6 moles ethylene oxide and 3 moles propylene oxide, $C_{13}$-$C_{15}$ fatty alcohol condensed with 7 moles propylene oxide and 4 moles ethylene oxide, $C_{13}$-$C_{15}$ fatty alcohol condensed with 5 moles propylene oxide and 10 moles ethylene oxide or mixtures of any of the above.

Another group of liquid nonionics are commercially available from Shell Chemical Company, Inc. under the Dobanol® or Neodol® trademark: Dobanol® 91-5 is an ethoxylated $C_9$-$C_{11}$ fatty alcohol with an average of 5 moles ethylene oxide and Dobanol® 25-7 is an ethoxylated $C_{12}$-$C_{15}$ fatty alcohol with an average of 7 moles ethylene oxide per mole of fatty alcohol.

In the compositions of this invention, preferred nonionic surfactants include the $C_{12}$-$C_{15}$ primary fatty alcohols with relatively narrow contents of ethylene oxide in the range of from about 6 to 9 moles, and the Cg to $C_{11}$, fatty alcohols ethoxylated with about 5-6 moles ethylene oxide.

Another class of nonionic surfactants which can be used in accordance with this invention are glycoside surfactants. Glycoside surfactants suitable for use in accordance with the present invention include those of the formula:

$$RO-(R_2O)y-(Z)x$$

wherein R is a monovalent organic radical containing from about 6 to about 30 (preferably from about 8 to about 18) carbon atoms; $R_2$ is a divalent hydrocarbon radical containing from about 2 to 4 carbons atoms; O is an oxygen atom; y is a number which can have an average value of from 0 to about 12 but which is most preferably zero; Z is a moiety derived from a reducing saccharide containing 5 or 6 carbon atoms; and x is a number having an average value of from 1 to about 10 (preferably from about 1 1/2 to about 10).

A particularly preferred group of glycoside surfactants for use in the practice of this invention includes those of the formula above in which R is a monovalent organic radical (linear or branched) containing from about 6 to about 18 (especially from about 8 to about 18) carbon atoms; y is zero; z is glucose or a moiety derived therefrom; x is a number having an average value of from 1 to about 4 (preferably from about 1 1/2 to 4). Nonionic surfactants which may be used include polyhydroxy amides as discussed in U.S. Patent No. 5,312,954 to Letton et al. and aldobionamides such as disclosed in U.S. Patent No. 5,389,279 to Au et al.

Generally, nonionics would comprise 0-75% by wt., preferably 5 to 50%, more preferably 5 to 25% by wt. of the composition. Mixtures of two or more of the nonionic surfactants can be used.

Surfactants suitable for use herein include non-ionic surfactants. Traditionally, non-ionic surfactants have been used in detergent compositions for surface modification purposes in particular for sheeting to avoid filming and spotting and to improve shine. It has been found that non-ionic surfactants can also contribute to prevent redeposition of soils.

In one aspect, the detergent product of the invention comprises is a non-ionic surfactant or a non-ionic surfactant system, in one aspect, the non-ionic surfactant or a non- ionic surfactant system has a phase inversion temperature, as measured at a concentration of 1% in distilled water, between 40 °C and 70°C, preferably between 45 °C and 65°C. A "non- ionic surfactant system" means a mixture of two or more non-ionic surfactants. Non-ionic surfactant systems are typically especially useful as they seem to have improved cleaning and finishing properties and better stability in product than single non-ionic surfactants.

Phase inversion temperature is the temperature below which a surfactant, or a mixture thereof, partitions preferentially into the water phase as oil-swollen micelles and above which it partitions preferentially into the oil phase as water swollen inverted micelles. Phase inversion temperature can be determined visually by identifying at which temperature cloudiness occurs.

The phase inversion temperature of a non-ionic surfactant or system can be determined as follows: a solution containing 1% of the corresponding surfactant or mixture by weight of the solution in distilled water is prepared. The solution is stirred gently before phase inversion temperature analysis to ensure that the process occurs in chemical equilibrium. The phase inversion temperature is taken in a thermostable bath by immersing the solutions in 75 mm sealed glass test tube. To ensure the absence of leakage, the test tube is weighed before and after phase inversion temperature measurement. The temperature is gradually increased at a rate of less than 1°C per minute, until the temperature reaches a few degrees below the pre-estimated phase inversion temperature. Phase inversion temperature is determined visually at the first sign of turbidity.

Suitable nonionic surfactants include: i) ethoxylated non-ionic surfactants prepared by the reaction of a monohydroxy alkanol or alkyphenol with 6 to 20 carbon atoms typically with at least 12 moles, at least 16 moles, or even at least 20 moles of ethylene oxide per mole of alcohol or alkylphenol; ii) alcohol alkoxylated surfactants having a from 6 to 20 carbon atoms and at least one ethoxy and propoxy group. In one aspect, mixtures of surfactants i) and ii) are particularly useful.

Another class of suitable non-ionic surfactants are epoxy-capped poly(oxyalkylated) alcohols represented by the formula: $R^1 0[CH_2CH(CH_3)0]_x[CH_2CH_20]_{y[}CH_2CH(OH)R^2]$ (I) wherein $R^1$ is a linear or branched, aliphatic hydrocarbon radical having from 4 to 18 carbon atoms; $R^2$ is a linear or branched aliphatic hydrocarbon radical having from 2 to 26 carbon atoms; x is an integer having an average value of from 0.5 to 1.5, or about 1; and y is an integer having a value

of at least 15, or at least 20. In one aspect, the surfactant of formula I, at least about 10 carbon atoms in the terminal epoxide unit [$CH_2CH(OH)R^2$]. Suitable surfactants of formula I, according to the present invention, include Olin Corporation's POLY-TERGENT® SLF-18B nonionic surfactants, as described, for example, in USP 5,766,371 and USP 5,576,281. Suitable non-ionic surfactants and/or system to use as anti-redeposition agents herein may have a Draves wetting time of less than 360 seconds, less than 200 seconds, less than 100 seconds or less than 60 seconds as measured by the Draves wetting method (standard method ISO 8022 using the following conditions; 3-g hook, 5-g cotton skein, 0.1% by weight aqueous solution at a temperature of 25°C).

**Low-Foaming Nonionic Surfactant**

Detergent compositions of the present application comprise low foaming nonionic surfactants (LFNIs). LFNI can be present in amounts from about 0.1% to about 2%. LFNIs are most typically used in detergents on account of the improved water-sheeting action (especially from glass) which they confer to the detergents.

Preferred LFNIs include nonionic alkoxylated surfactants, especially ethoxylates derived from primary alcohols, and blends thereof with more sophisticated surfactants, such as the polyoxypropylene/polyoxyethylene/polyoxypropylene (PO/EO/PO) reverse block polymers. The PO/EO/PO polymer-type surfactants are well-known to have foam suppressing or defoaming action, especially in relation to common food soil ingredients such as egg.

In a preferred embodiment, the LFNI is an ethoxylated surfactant derived from the reaction of a monohydroxy alcohol or alkylphenol containing from about 8 to about 20 carbon atoms, excluding cyclic carbon atoms, with from about 6 to about 15 moles of ethylene oxide per mole of alcohol or alkyl phenol on an average basis.

The improved copolymers of the present invention are particularly useful for water-based formulations, water-free formulations, powders, and formulations containing water-miscible auxiliary solvents, but are not limited thereto. Useful solvents commonly employed are typically liquids, such as water (deionized, distilled or purified), alcohols, polyols, and mixtures thereof. Non-aqueous or hydrophobic auxiliary solvents are commonly employed in substantially water-free products, such as aerosol propellant sprays, automotive and household surface cleaners, or for specific functions, such as removal of oily soils, sebum, stain, or for dissolving dyes, and fragrances, or are incorporated in the oily phase of an emulsion. Non-limiting examples of auxiliary solvents, other than water, include linear and branched alcohols, such as ethanol, propanol, isopropanol, and hexanol; aromatic alcohols, such as benzyl alcohol, and cyclohexanol; saturated $C_{12}$-$C_{30}$ fatty alcohol, such as lauryl alcohol, myristyl alcohol, cetyl alcohol, stearyl alcohol, and behenyl alcohol. Non-limiting examples of polyols include polyhydroxy alcohols, such as glycerin, propylene glycol, butylene glycol, hexylene glycol, $C_2$-$C_4$ alkoxylated alcohols and $C_2$-$C_4$ alkoxylated polyols, such as ethoxylated, propoxylated, and butoxylated ethers of alcohols, diols, and polyols having about 2 to about 30 carbon atoms and 1 to about 40 alkoxy units, polypropylene glycol, and polybutylene glycol. Non-limiting examples of non-aqueous auxiliary solvents include silicones, and silicone derivatives, such as cyclomethicone, ketones such as acetone and methylethyl ketone; natural and synthetic oils and waxes, such as vegetable oils, plant oils, animal oils, essential oils, mineral oils, $C_7$-$C_{40}$ isoparaffins, alkyl carboxylic esters, such as ethyl acetate, amyl acetate, and ethyl lactate, jojoba oil, and shark liver oil. Some of the foregoing non-aqueous auxiliary solvents may also be diluents, solubilizers, conditioners and emulsifiers.

A particularly preferred LFNI is derived from a straight chain fatty alcohol containing from about 16 to about 20 carbon atoms ($C_{16}$-$C_{20}$ alcohol), preferably a $C_{18}$ alcohol, condensed with an average of from about 6 to about 15 moles, preferably from about 7 to about 12 moles, and most preferably from about 7 to about 9 moles of ethylene oxide per mole of alcohol. Preferably the ethoxylated nonionic surfactant so derived has a narrow ethoxylate distribution relative to the average.

The LFNI can optionally contain propylene oxide in an amount up to about 15% by weight. Certain of the block polymer surfactant compounds designated PLURONIC® and TETRONIC® by the BASF-Wyandotte Corp., Wyandotte, Mich., are suitable in gel automatic detergents of the invention. Highly preferred gel automatic detergents herein wherein the LFNI is present make use of ethoxylated monohydroxy alcohol or alkyl phenol and additionally comprise a polyoxyethylene, polyoxypropylene block polymeric compound; the ethoxylated monohydroxy alcohol or alkyl phenol fraction of the LFNI comprising from about 20% to about 80%, preferably from about 30% to about 70%, of the total LFNI.

LFNIs which may also be used include a $C_{18}$ alcohol polyethoxylate, having a degree of ethoxylation of about 8, commercially available SLF18 from Olin Corp.

Formulations may comprise low-foam nonionic surfactants. Paraffin oils and silicone oils may, if appropriate, be used as defoamers and to protect plastics and metal surfaces. Defoamers are used generally in proportions of from 0.001% by weight to 20% by weight, preferably from 0.1 to 15% by weight and more preferably from 0.25 to 10% by weight.

**Cationic Surfactants**

Many cationic surfactants are known in the art, and almost any cationic surfactant having at least one long chain alkyl group of about 10 to 24 carbon atoms is suitable in the present invention. Such compounds are described

in "Cationic Surfactants", Jungermann, 1970.

Specific cationic surfactants which can be used as surfactants in the subject invention are described in detail in U.S. Patent No. 4,497,718.

As with the nonionic and anionic surfactants, the compositions of the invention may use cationic surfactants alone or in combination with any of the other surfactants known in the art. Of course, the compositions may contain no cationic surfactants at all.

**Amphoteric Surfactants**

Ampholytic synthetic surfactants can be broadly described as derivatives of aliphatic or aliphatic derivatives of heterocyclic secondary and tertiary amines in which the aliphatic radical may be straight chain or branched and wherein one of the aliphatic substituents contains from about 8 to 18 carbon atoms and at least one contains an anionic water-soluble group, e.g. carboxylate, sulfonate, sulfate. Examples of compounds falling within this definition are sodium 3-(dodecylamino)propionate, sodium 3-(dodecylamino) propane-1-sulfonate, sodium 2-(dodecylamino)ethyl sulfate, sodium 2-(dimethylamino) octadecanoate, disodium 3-(N-carboxymethyldodecylamino)propane 1-sulfonate, disodium octadecyl-imminodiacetate, sodium 1-carboxymethyl-2-undecylimidazole, and sodium N,N-bis(2-hydroxyethyl)-2-sulfato-3-dodecoxypropylamine. Sodium 3-(dodecylamino)propane-1-sulfonate is preferred.

Zwitterionic surfactants can be broadly described as derivatives of secondary and tertiary amines, derivatives of heterocyclic secondary and tertiary amines, or derivatives of quaternary ammonium, quaternary phosphonium or tertiary sulfonium compounds. The cationic atom in the quaternary compound can be part of a heterocyclic ring. In all of these compounds there is at least one aliphatic group, straight chain or branched, containing from about 3 to 18 carbon atoms and at least one aliphatic substituent containing an anionic water-solubilizing group, e.g., carboxy, sulfonate, sulfate, phosphate, or phosphonate.

Specific examples of zwitterionic surfactants which may be used are set forth in U.S. Patent No. 4,062,647.

The amount of additional surfactant used may vary from 1 to 85% by weight, preferably 10 to 50% by weight.

As noted the preferred surfactant systems of the invention are mixtures of anionic and nonionic surfactants.

Preferably, the nonionic should comprise, as a percentage of an anionic/nonionic system, at least 20%, more preferably at least 25%, up to about 75% of the total surfactant system.

**Amine Oxide**

Amine oxides surfactants are also useful in the present invention and include linear and branched compounds having the formula: O"I $R^3(OR^4)xN^+(R^5)_2$ wherein $R^3$ is selected from an alkyl, hydroxyalkyl, acylamidopropoyl and alkyl phenyl group, or mixtures thereof, containing from 8 to 26 carbon atoms, or 8 to 18 carbon atoms; $R^4$ is an alkylene or hydroxyalkylene group containing from 2 to 3 carbon atoms, or 2 carbon atoms, or mixtures thereof; x is from 0 to 5, or from 0 to 3; and each $R^5$ is an alkyl or hydroxyalkyl group containing from 1 to 3, or from 1 to 2 carbon atoms, or a polyethylene oxide group containing from 1 to 3, or even 1, ethylene oxide group. The $R^5$ groups can be attached to each other, e.g., through an oxygen or nitrogen atom, to form a ring structure.

These amine oxide surfactants in particular include $C_{10}$-$C_{18}$ alkyl dimethyl amine oxides and $C_8$-$C_{14}$ alkoxy ethyl dihydroxyethyl amine oxides. Examples of such materials include dimethyloctylamine oxide, diethyldecylamine oxide, bis-(2-hydroxyethyl)dodecylamine oxide, dimethyldodecylamine oxide, dipropyltetradecylamine oxide, methylethylhexadecylamine oxide, dodecylamidopropyl dimethylamine oxide, cetyl dimethylamine oxide, stearyl dimethylamine oxide, tallow dimethylamine oxide and dimethyl-2-hydroxyoctadecylamine oxide. In one aspect, $C_{10}$-$C_{18}$ alkyl dimethylamine oxide, and $C_{10}$-$C_{18}$ acylamido alkyl dimethylamine oxide are employed.

**Enzymes**

As used herein, enzymes means any enzyme having a cleaning, stain removing or otherwise beneficial effect in a detergent composition. Preferred enzymes are hydrolases such as proteases, amylases and lipases. Highly preferred for dishwashing are amylases and/or proteases, including both current commercially available types and improved types. Enzymes are normally incorporated in the instant detergent compositions at levels sufficient to provide a "cleaning-effective amount". The term "cleaning-effective amount" refers to any amount capable of producing a cleaning, stain removal or soil removal effect on substrates such tableware.

The compositions herein can comprise: from about 0.001% to about 20%, preferably from about 0.005% to about 10%, most preferably from about 0.01% to about 6%, by weight of an enzyme stabilizing system.

**Proteases**

In the automatic dishwashing detergent composition of the invention a mixture of two or more proteases may be used. A mixture of proteases can contribute to an enhanced cleaning across a broader temperature and/or substrate range and provide superior shine benefits, especially when used in conjunction with the improved copolymer.

Suitable proteases for use in combination with the variant protease of the invention include metalloproteases and serine proteases, including neutral or alkaline microbial serine proteases, such as subtilisins (EC 3.4.21.62). Suitable proteases include those of animal, vegetable or microbial origin. Microbial origin is preferred. Chemically or genetically modified mutants are included. The protease may be a serine protease, in one aspect, an alkaline microbial protease or a chymotrypsin or trypsin-like protease. Examples of neutral or alkaline proteases include:

(a) subtilisins (EC 3.4.21.62), especially those derived from Bacillus, such as Bacillus lentus, B. alkalophilus, B. subtilis, B. amyloliquefaciens, Bacillus pumilus and Bacillus gibsonii described in US 6,312,936 B1 , US 5,679,630, US 4,760,025, and USPA 2009/0170745A1.

(b) trypsin-like or chymotrypsin- like proteases, such as trypsin (e.g. of porcine or bovine origin), the Fusarium protease described in USP 5,288,627 and the chymotrypsin proteases derived from Cellumonas described in USPA 2008/0063774A1.

(c) metalloproteases, especially those derived from Bacillus amyloliquefaciens described in USPA 2009/0263882 A1 and USPA 2008/0293610A1. Suitable commercially available protease enzymes include those sold under the trade names Alcalase®, Savinase®, Primase®, Durazym®, Polarzyme®, Kannase®, Liquanase®, Ovozyme®, Neutrase®, Everlase® and Esperase® by Novozymes A/S (Denmark), those sold under the tradename Maxatase®, Maxacal®, Maxapem®, Properase®, Purafect®, Purafect Prime®, Purafect Ox®, FN3®, FN4®, Excellase® and Purafect OXP® by Genencor International (now Danisco US Inc.), and those sold under the tradename Opticlean® and Optimase® by Solvay Enzymes, those available from Henkel/ Kemira, namely BLAP (sequence shown in Figure 29 of US 5,352,604 with the following mutations S99D + S101 R + S 103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao. In one aspect, commercial proteases selected from the group consisting of Properase®, Purafect®, Ovozyme®, Everlase®, Savinase®, Excellase® and FN3® are employed.

**Amylases**

Amylase enzymes are additional enzymes that are useful in detergent compositions. Suitable amylases include those described in USPA 2009/0233831 A1 and USPA 2009/0314286A1. Suitable commercially available amylases for use herein include STAINZYME®, STAINZYME PLUS®, STAINZYME ULTRA® and NATALASE® (Novozymes A/S) and Spezyme Xtra™ and Powerase™. STAINZYME PLUS® and Powerase™ may be particularly useful.

**Cellulases**

In one aspect, the detergent composition of the invention comprises a cellulase enzyme. This composition provides excellent results in terms of not only cleaning of the fabric, dishware/tableware but also in terms of cleaning of the machines such as, dishwasher.

Cellulase enzymes include microbial-derived endoglucanases exhibiting endo-beta-1,4-glucanase activity (E.C. 3.2.1.4), including a bacterial polypeptide endogenous to a member of the genus Bacillus which has a sequence of at least 90%, 94%, 97% and even 99% identity to the amino acid sequence SEQ ID NO:2 in US 7,141,403B2) and mixtures thereof. Suitable commercially available cellulases for use herein include Celluzyme®, Celluclean®, Whitezyme® (Novozymes A/S) and Puradax HA® (Genencor International - now Danisco US Inc.).

**Other Additional enzymes**

Other additional enzymes suitable for use in the detergent composition of the invention can comprise one or more enzymes selected from the group comprising hemicellulases, cellobiose dehydrogenases, peroxidases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, and mixtures thereof.

In one aspect, such additional enzyme may be selected from the group consisting of lipases, including "first cycle lipases" comprising a substitution of an electrically neutral or negatively charged amino acid with R or K at any of

positions 3, 224, 229, 231 and 233 on the wild-type of Humicola Lanuginosa, whose sequence is shown as SEQ ID No 1 in pages 5 and 6 of U.S. Patent 6,939,702 B1, in one aspect, a variant comprising T231R and N233R mutations. One such variant is sold under the tradename Lipex® (Novozymes A/S, Bagsvaerd, Denmark).

**Enzyme stabilizer components**

Suitable enzyme stabilizers include oligosaccharides, polysaccharides and inorganic divalent metal salts, such as alkaline earth metal salts, especially calcium salts. Chlorides and sulphates are may be particularly suitable with calcium chloride, in one aspect, being an especially suitable calcium salt. Examples of suitable oligosaccharides and polysaccharides, such as dextrins, can be found in USPA 2008/0004201 A1. In case of aqueous compositions comprising protease, a reversible protease inhibitor, such as a boron compound, inckuding borate and 4-formyl phenyl boronic acid or a tripeptide aldehyde, can be added to further improve stability.

The purpose of an enzyme stabilizing system is to protect the enzymes in the composition between the time the composition is manufactured and the time the composition is use. It is preferred that the enzyme activity remains between about 60% and 100%, more preferably between about 70% and 100%, more preferably about 80% and 100%. In one embodiment, the stabilized enzyme is a protease and the enzyme activity is of such protease.

The enzyme stabilizing system can be any stabilizing system which can be compatible with the detersive enzyme and with the xanthan gum thickener - thereby excluding boric acid, borax (sodium tetraborate decahydrate) and alkali metal borates. Such stabilizing systems can comprise calcium ion, glycerin, propylene glycol, short chain carboxylic acid and mixtures thereof.

**Bleach**

Inorganic and organic bleaches are suitable cleaning actives for use herein. Inorganic bleaches include perhydrate salts such as perborate, percarbonate, perphosphate, persulfate and persilicate salts. The inorganic perhydrate salts are normally the alkali metal salts. The inorganic perhydrate salt may be included as the crystalline solid without additional protection. Alternatively, the salt can be coated. Alkali metal percarbonates, particularly sodium percarbonate are preferred perhydrates for use herein. The percarbonate is most preferably incorporated into the products in a coated form which provides in-product stability. A suitable coating material providing in product stability comprises mixed salt of a water-soluble alkali metal sulphate and carbonate. Such coatings together with coating processes have previously been described in US 4,105,827. The weight ratio of the mixed salt coating material to percarbonate lies in the range from 1:200 to 1:4, from 1:99 to 1:9, or from 1:49 to 1:19. In one aspect, the mixed salt is of sodium sulphate and sodium carbonate which has the general formula $Na_2SO_4.n.Na_2CO_3$ wherein n is from 0.1 to 3, from 0.2 to 1.0 or from 0.2 to 0.5. Another suitable coating material providing in product stability, comprises sodium silicate of $SiO_2$:$Na_2O$ ratio from 1.8:1 to 3.0:1, or 1.8:1 to 2.4:1, and/or sodium metasilicate, in one aspect, applied at a level of from 2% to 10%, (normally from 3% to 5%) of $SiO_2$ by weight of the inorganic perhydrate salt. Magnesium silicate can also be included in the coating. Coatings that contain silicate and borate salts or boric acids or other inorganics are also suitable.

Other coatings which contain waxes, oils, fatty soaps can also be used advantageously within the present invention.

Potassium peroxymonopersulfate is another inorganic perhydrate salt of utility herein.

Typical organic bleaches are organic peroxy acids including diacyl and tetraacylperoxides, especially diperoxydodecanedioc acid, diperoxytetradecanedioc acid, and diperoxyhexadecanedioc acid. Dibenzoyl peroxide is a preferred organic peroxyacid herein. Mono- and diperazelaic acid, mono- and diperbrassylic acid, and Nphthaloylaminoperoxicaproic acid are also suitable herein.

The diacyl peroxide, especially dibenzoyl peroxide, should typically be present in the form of particles having a weight average diameter of from about 0.1 to about 100 microns, from about 0.5 to about 30 microns, or from about 1 to about 10 microns. In one aspect, at least about 25%, at least about 50%, at least about 75%, or at least about 90%, of the particles are smaller than 10 microns, or smaller than 6 microns. Diacyl peroxides within the above particle size range have also been found to provide better stain removal especially from plastic dishware, while minimizing undesirable deposition and filming during use in automatic dishwashing machines, than larger diacyl peroxide particles. The optimum diacyl peroxide particle size thus allows the formulator to obtain good stain removal with a low level of diacyl peroxide, which reduces deposition and filming.

Further typical organic bleaches include the peroxy acids, particular examples being the alkylperoxy acids and the arylperoxy acids. Preferred representatives are (a) peroxybenzoic acid and its ring-substituted derivatives, such as alkylperoxybenzoic acids, but also peroxy-a- naphthoic acid and magnesium monoperphthalate, (b) the aliphatic or substituted aliphatic peroxy acids, such as peroxylauric acid, peroxystearic acid, ε-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1 ,9-diperoxyazelaic acid, diperoxysebacic acid, diperoxybrassylic acid, the diperoxyphthalic acids, 2-decyldiperoxybutane- 1,4-dioic acid, N,N-terephthaloyldi(6-aminopercaproic acid).

Formulations may comprise bleaches and if appropriate bleach activators. Bleaches are subdivided into oxygen bleaches and chlorine bleaches. Use as oxygen bleaches is found by alkali metal perborates and hydrates thereof, and also alkali metal percarbonates. Preferred bleaches in this context are sodium perborate in the form of the mono- or tetrahydrate, sodium percarbonate or the hydrates of sodium percarbonate. Likewise useable as oxygen bleaches are persulfates and hydrogen peroxide. Typical oxygen bleaches are also organic peracids such as perbenzoic acid, peroxy-alpha-naphthoic acid, peroxylauric acid, peroxystearic acid, phthalimidoperoxycaproic acid, 1,12-diperoxydodecanedioic acid, 1,9-diperoxyazelaic acid, diperoxoisophthalic acid or 2-decyldiperoxybutane-1,4-dioic acid. In addition, for example, the following oxygen bleaches may also find use in the detergent formulation: cationic peroxy acids which are described in the patent applications U.S. Pat. No. 5,422,028, U.S. Pat. No. 5,294,362 and U.S. Pat. No. 5,292,447; sulfonylperoxy acids which are described in the patent application U.S. Pat. No. 5,039,447. Oxygen bleaches are used in amounts of generally from 0.5 to 30% by weight, preferably of from 1 to 20% by weight, more preferably of from 3 to 15% by weight, based on the overall detergent formulation. Chlorine bleaches and the combination of chlorine bleaches with peroxidic bleaches may likewise be used. Known chlorine bleaches are, for example, 1,3-dichloro-5,5-dimethylhydantoin, N-chlorosulfamide, chloramine T, dichloramine T, chloramine B, N,N'-dichlorobenzoylurea, dichloro-p-toluenesulfonamide or trichloroethylamine. Preferred chlorine bleaches are sodium hypochlorite, calcium hypochlorite, potassium hypochlorite, magnesium hypochlorite, potassium dichloroisocyanurate or sodium dichloroisocyanurate. Chlorine bleaches are used in amounts of generally from 0.1 to 20% by weight, preferably of from 0.2 to 10% by weight, more preferably of from 0.3 to 8% by weight, based on the overall detergent formulation. In addition, small amounts of bleach stabilizers, for example phosphonates, borates, metaborates, metasilicates or magnesium salts, may be added. They are described in the patent applications U.S. Pat. No.8,262,804.

Although any chlorine bleach compound may be employed in the compositions of this invention, such as dichloroisocyanurate, dichloro-dimethyl hydantoin, or chlorinated TSP, alkali metal or alkaline earth metal, e.g. potassium, lithium, magnesium and especially sodium, hypochlorite is preferred. The composition should contain sufficient amount of chlorine bleach compound to provide 0.2 to 4.0% by weight of available chlorine, as determined, for example by acidification of 100 parts of the composition with excess hydrochloric acid. A solution containing 0.2 to 4.0% by weight of sodium hypochlorite contains or provides roughly the same percentage of available chlorine. 0.8 to 1.6% by weight of available chlorine is especially preferred. For example, sodium hypochlorite (NaOCL) solution of from 11 to 13% available chlorine in amounts of 3 to 20%, preferably 7 to 12%, can be advantageously used.

**Bleach activators**

Bleach activators are typically organic peracid precursors that enhance the bleaching action in the course of cleaning at temperatures of 60° C and below. Bleach activators suitable for use herein include compounds which, under perhydrolysis conditions, give aliphatic peroxoycarboxylic acids having from 1 to 10 carbon atoms, in particular from 2 to 4 carbon atoms, and/or optionally substituted perbenzoic acid. Suitable substances bear O-acyl and/or N- acyl groups of the number of carbon atoms specified and/or optionally substituted benzoyl groups. Preference is given to polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenolsulfonates, in particular n-nonanoyl- or isononanoyloxybenzenesulfonate (n- or iso-NOBS), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC). Bleach activators if included in the automatic dishwashing detergent compositions of the invention are in a level of from about 0.1% to about 10%, or from about 0.5% to about 2% by weight of the total composition.

**Bleach catalyst**

Bleach catalysts preferred for use herein include the manganese triazacyclononane and related complexes (US-6602441, US-7205267, US-A-5227084); Co, Cu, Mn and Fe bispyridylamine and related complexes (US-A-5114611); and pentamine acetate cobalt(III) and related complexes(US-A-4810410). A complete description of bleach catalysts suitable for use herein can be found in USP 6,599,871, pages 34, line 26 to page 40, line 16. Bleach catalyst if included in the detergent compositions of the invention are in a level of from about 0.1% to about 10%, or from about 0.5% to about 2% by weight of the total composition.

**Builders**

In addition to improved copolymers as a primary builder, other cobuilders suitable to be included in the compositions herein to assist in controlling mineral hardness and dispersancy, with the exception of phosphate builders. Inorganic as well as organic builders can be used. One embodiment of the present invention relates to a gel detergent composition, wherein the builder can be selected from the group consisting of carbonate builders, polycarboxylate compounds, citrate, methyl glycine diacetic acid and/or salts thereof, glutamatic diacetic acid and/or salts thereof and mixtures thereof.

Examples of carbonate builders are the alkaline earth and alkali metal carbonates as disclosed in German Patent Application No. 2,321,001 published on November 15, 1973. Various grades and types of sodium carbonate and sodium sesquicarbonate can be used, certain of which are particularly useful as carriers for other ingredients, especially: detersive surfactants.

Organic detergent builders suitable for the purposes of the present invention include, but are not restricted to, a wide variety of polycarboxylate compounds.

Preferred phosphate builders include mono-phosphates, di-phosphates, tri- polyphosphates or oligomeric-poylphosphates are used. The alkali metal salts of these compounds are preferred, in particular the sodium salts. An especially preferred builder is sodium tripolyphosphate (STPP).

Other useful detergency builders include the ether hydroxypolycarboxylates, copolymers of maleic anhydride with ethylene or vinyl methyl ether, 1, 3, 5-trihydroxy benzene-2, 4, 6-trisulphonic acid, and carboxymethyloxysuccinic acid, the various I alkali metal, ammonium and substituted ammonium salts of polyacetic acids such as ethylenediaminetetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.

Citrate builders, e.g., citric acid and soluble salts thereof (particularly sodium salt), builders suitable herein due to their availability from renewable resources and their biodegradability.

Methyl glycine diacetic acid and/or salts thereof (MGDA) may also be utilized as builders in the present composition. A preferred MGDA compound is a salt of methyl glycine diacetic acid. Suitable salts include the diammonium salt, the dipotassium salt and, preferably, the disodium salt.

Glutamatic diacetic acid and/or salts thereof (GLDA) may also be utilized as builders in the present composition. A preferred GLDA compound is a salt of glutamic diacetic acid. Suitable salts include the diammonium salt, the dipotassium salt and, preferably, the disodium salt.

Chelating Agents - The compositions herein can also optionally contain one or more transition-metal selective sequestrants, "chelants" or "co-chelating agents", e.g., iron and/or copper and/or manganese chelating agents. Chelating agents suitable for use herein can be selected from the group consisting of aminocarboxylates, polyfunctionally-substituted aromatic chelating agents, and mixtures thereof. Commercial chelating agents for use herein include the BEQUEST™ series, and chelants from Monsanto, DuPont, and Nalco, Inc.

Formulations may comprise other co-builders. It is possible to use water-soluble and water-insoluble builders, whose main task consists in binding calcium and magnesium. The other builders used may be, for example: low molecular weight carboxylic acids and salts thereof, such as alkali metal citrates, in particular anhydrous trisodium citrate or trisodium citrate dihydrate, alkali metal succinates, alkali metal malonates, fatty acid sulfonates, oxydisuccinate, alkyl or alkenyl disuccinates, gluconic acids, oxadi-acetates, carboxymethyloxysuccinates, tartrate monosuccinate, tartrate disuccinate, tartrate monoacetate, tartrate diacetate, .alpha.-hydroxypropionic acid; oxidized starches, oxidized polysaccharides; homo- and copolymeric polycarboxylic acids and salts thereof, such as polyacrylic acid, polymethacrylic acid, copolymers of maleic acid and acrylic acid; graft polymers of monoethylenically unsaturated mono- and/or dicarboxylic acids on monosaccharides, oligosaccharides, polysaccharides or polyaspartic acid; aminopolycarboxylates and polyaspartic acid; phosphonates such as 2-phosphono-1,2,4-butanetricarboxylic acid, aminotri-(methylenephosphonic acid), 1-hydroxyethylene(1, 1-diphosphonic acid), ethylenediaminetetramethylenephosphonic acid, hexamethylenediaminetetramethylenephosphonic acid or diethylenetriamine-pentamethylenephosphonic acid; silicates such as sodium disilicate and sodium metasilicate; water-insoluble builders such as zeolites and crystalline sheet silicates.

In addition, formulations may comprise one or more complexing agents. Preferred complexing agents are selected from the group consisting of nitrilotriacetic acid, ethylenediaminetetraacetic acid, diethylenetriaminepentaacetic acid, hydroxyethylethylenediaminetriacetic acid, and methylglycinediacetic acid, glutamic acid diacetic acid, iminodisuccinic acid, hydroxyiminodisuccinic acid, ethylenediaminedisuccinic acid, aspartic acid diacetic acid, and salts thereof.

One class of optional compounds for use herein includes chelating agents or mixtures thereof in combination with the improved inventive polymers. Chelating agents can be incorporated in the compositions herein in amounts ranging from 0.0% to 10.0% by weight of the total composition, preferably from 0.01% to 5.0%.

Suitable phosphonate chelating agents for use herein may include alkali metal ethane 1-hydroxy diphosphonates (HEDP), alkylene poly (alkylene phosphonate), as well as amino phosphonate compounds, including amino aminotri(methylene phosphonic acid) (ATMP), nitrilo trimethylene phosphonates (NTP), ethylene diamine tetra methylene phosphonates, and diethylene triamine penta methylene phosphonates (DTPMP). The phosphonate compounds may be present either in their acid form or as salts of different cations on some or all of their acid functionalities. Preferred phosphonate chelating agents to be used herein are diethylene triamine penta methylene phosphonate (DTPMP) and

ethane 1-hydroxy diphosphonate (HEDP). Such phosphonate chelating agents are commercially available from Italmach Chemicals under the trade name DEQUEST™.

Polyfunctionally-substituted aromatic chelating agents may also be useful in the compositions herein. See U.S. Pat. No. 3,812,044, issued May 21, 1974, to Connor et al. Preferred compounds of this type in acid form are dihydroxydisulfobenzenes such as 1,2-dihydroxy-3,5-disulfobenzene.

Co-builders for use herein include phosphate builders and phosphate free builders. If present, builders are used in a level of from 5% to 60%, from 10% to 50%, or even from 10% to 50% by weight of the detergent composition. In some embodiments the detergent product comprises a mixture of phosphate and non-phosphate builders.

**Drying aids**

In another embodiment, the detergent composition of the invention comprises a drying aid. By "drying aid" herein is meant an agent capable of decreasing the amount of water left on washed items, in particular in plastic items that are more prone to be wet after the washing process due to their hydrophobic nature. Suitable drying aids include polyesters, especially anionic polyesters derived from terephthalic acid, 5-sulphoisophthalic acid or a salt of 5-sulphoisophthalic, ethyleneglycol or polyethyleneglycol, propyleneglycol or polypropyleneglycol, and, polyalkyleneglycol monoalkylethers, optionally together with further monomers with 3 to 6 functionalities which are conducive to polycondensation, specifically acid, alcohol or ester functionalities. Suitable polyesters to use as drying aids are disclosed in WO 2008/110816 and preferably have one or more of the following properties:

(a) a number average molecular weight of from about 800 Da to about 25,000 Da, or from about 1,200 Da to about 12,000 Da.
(b) a softening point greater than about 40°C from about 41 °C to about 200°C, or even 80°C to about 150°C;
(c) a solubility greater than about 6% by weight in water of 3 ° German hardness at 200°C.

At 30°C the solubility will typically be greater than about 8% by weight, at 40°C and 50°C , the solubility will typically be greater than about 40% by as measured in water of 3 ° German hardness.

Other suitable drying aids include specific polycarbonate-, polyurethane- and/or polyurea- polyorganosiloxane compounds or precursor compounds thereof of the reactive cyclic carbonate and urea type, as described in USPA 2010/0041574 A1 and USPA 2010/0022427 A1. Improved drying can also be achieved by use of non-ionic surfactants, such as:

(a) $R^1O-[CH_2CH(CH_3)O]_x[CH_2CH_2O]_y[CH_2CH(CH_3)O]_zCH_2CH(OH)-R^2$, in which $R^1$ represents a linear or branched aliphatic hydrocarbon radical having 4 to 22 carbon atoms or mixtures thereof and $R^2$ represents a linear or branched hydrocarbon radical having 2 to 26 carbon atoms or mixtures thereof, x and z represent integers from 0 to 40, and y represents a integer of at least 15, or from 15 to 50. See for example as in WO 2009/033972; or
(b) $RO-[CHCH(R^a)O]_l[CH_2CH_2O]_m[CH_2CH(R^1)O]_nC(O)-R^2$ where R is a branched or unbranched alkyl radical having 8 to 16 carbon atoms, $R^a$ and $R^1$ independently of one another, are hydrogen or a branched or unbranched alkyl radical having 1 to 5 carbon atoms, $R^2$ is an unbranched alkyl radical having 5 to 17 carbon atoms; 1 and n are independently of one another, an integer from 1 to 5 and m is an integer from 13 to 35, as described in USPA 2008/016721.

Examples of suitable materials include Plurafac LF731 or Plurafac LF-7319 (BASF) and the Dehy quart® CSP and Poly quart® range (Cognis).

In one aspect, the detergent composition of the invention comprises from about 0.1% to about 10%, from about 0.5% to about 5% and especially from about 1% to about 4% by weight of the composition of a drying aid.

**Rheology Systems**

Suitable are various carboxyvinyl polymers, homopolymers and copolymers are commercially available from Lubrizol Advanced Materials, Inc. Cleveland, Ohio, under the trade name CARBOPOL®. These polymers are also known as carbomers or polyacrylic acids. Carboxyvinyl polymers useful in formulations of the present invention include CARBOPOL® 941 having a molecular weight of about 1,250,000, and CARBOPOL 934, 940, 676, 674 having molecular weights of about 3,000,000 and 4,000,000, respectively. The series of CARBOPOL® which use ethyl acetate and cyclohexane in the manufacturing process are also useful, including, but not limited to, for example, CARBOPOL® 690, 691, ETD 2691, ETD 2623, EZ-2, EZ-3, and EZ-4.

The composition may also comprise either a soluble silicate or an associative thickener to address any texture issues that may arise with the use of a xanthan gum thickener. Semisynthetic thickeners such as the cellulosic type

thickeners: hydroxyethyl and hydroxymethyl cellulose (ETHOCEL® and METHOCEL® available from Dow Chemical) can also be used. Mixtures Inorganic clays (e.g. aluminum silicate, bentonite, fumed silica) are also suitable for use as a thickener herein. The preferred clay thickening agent can be either naturally occurring or synthetic. A suitable synthetic clay is the one disclosed in the U.S. 3,843,598. Naturally occurring clays include some smectite and attapulgite clays as disclosed in U.S. 4,824,590.

Suitable polysaccharide polymers for use herein include substituted cellulose materials like carboxymethylcellulose, ethyl cellulose, hydroxyethyl cellulose, hydroxypropyl cellulose, hydroxymethyl cellulose, succinoglycan and naturally occurring polysaccharide polymers like Xanthan gum, gellan gum, guar gum, locust bean gum, tragacanth gum, succinoglucan gum, or derivatives thereof, or mixtures thereof. Xanthan gum is commercially available from Kelco under the tradename Kelzan T™.

Rheology modifiers and thickeners can be present at levels between 0.1% to 5% by weight of the total composition, more preferably 0.5% to 2%, even more preferably 0.8% to 1.2%.

**Metal care agents**

Metal care agents may prevent or reduce the tarnishing, corrosion or oxidation of metals, including aluminium, stainless steel and non-ferrous metals, such as silver and copper. Suitable examples include one or more of the following:

(a) benzatriazoles, including benzotriazole or bis-benzotriazole and substituted derivatives thereof. Benzotriazole derivatives are those compounds in which the available substitution sites on the aromatic ring are partially or completely substituted. Suitable substituents include linear or branch-chain $C_1$-$C_2$o- alkyl groups and hydroxyl, thio, phenyl or halogen such as fluorine, chlorine, bromine and iodine.

(b) metal salts and complexes chosen from the group consisting of zinc, manganese, titanium, zirconium, hafnium, vanadium, cobalt, gallium and cerium salts and/or complexes, the metals being in one of the oxidation states II, III, IV, V or VI. In one aspect, suitable metal salts and/or metal complexes may be chosen from the group consisting of Mn(II) sulphate, Mn(II) citrate, Mn(II) stearate, Mn(II) acetylacetonate, $K_2TiF_6$, $K_2ZrF_6$, $CoSO_4$, $Co(NO_3)_2$ and $Ce(NO_3)_3$, zinc salts, for example zinc sulphate, hydrozincite or zinc acetate.;

(c) silicates, including sodium or potassium silicate, sodium disilicate, sodium metasilicate, crystalline phyllosilicate and mixtures thereof. Further suitable organic and inorganic redox-active substances that act as silver/copper corrosion inhibitors are disclosed in USP 5,888,954.

In one aspect, the detergent composition of the invention comprises from 0.1% to 5%, from 0.2% to 4% or from 0.3% to 3% by weight of the total composition of a metal care agent.

The corrosion inhibitors used may, for example, be silver protectants from the group of the triazoles, the benzotriazoles, the bisbenzotriazoles, the aminotriazoles, the alkylaminotriazoles and the transition metal salts or complexes. Particular preference is given to using benzotriazole and/or alkylaminotriazole. In addition, active chlorine-containing agents which can distinctly reduce the corrosion of the silver surface frequently find use in detergent formulations. In chlorine-free detergents, preference is given to using oxygen- and nitrogen-containing organic redox-active compounds such as di- and trihydric phenols, for example hydroquinone, pyrocatechol, hydroxyhydroquinone, gallic acid, phloroglucinol, pyrogallol and derivatives of these compound classes. Salt- and complex-type inorganic compounds such as salts of the metals Mn, Ti, Zr, Hf, V, Co and Ce frequently also find use. Preference is given in this context to the transition metal salts which are selected from the group of the manganese and/or cobalt salts and/or complexes, more preferably from the group of the cobalt (amine) complexes, the cobalt (acetate) complexes, the cobalt (carbonyl) complexes, the chlorides of cobalt or manganese, and of manganese sulfate. It is likewise possible to use zinc compounds or bismuth compounds or sodium silicate to prevent corrosion on the ware.

The formulations can also contain one or more material care agents which are effective as corrosion inhibitors and/or anti-tarnish aids.

**Solvents**

The improved copolymers of the present invention are particularly useful for water-based formulations, water-free formulations, powders, and formulations containing water-miscible auxiliary solvents, but are not limited thereto. Useful solvents commonly employed are typically liquids, such as water (deionized, distilled or purified), alcohols, and polyols, and mixtures thereof. Non-aqueous or hydrophobic auxiliary solvents are commonly employed in substantially water-free products, such as aerosol propellant sprays, automotive and household surface cleaners, or for specific functions, such as removal of oily soils, sebum, stain, or for dissolving dyes, fragrances, or are incorporated in the oily phase of an emulsion. Non-limiting examples of auxiliary solvents, other than water, include linear and branched alcohols, such as ethanol, propanol, isopropanol, and hexanol; aromatic alcohols, such as benzyl alcohol, and cyclohexanol;

saturated $C_{12}$-$C_{30}$ fatty alcohol, such as lauryl alcohol, myristyl alcohol, cetyl alcohol, stearyl alcohol, and behenyl alcohol. Non-limiting examples of polyols include polyhydroxy alcohols, such as glycerin, propylene glycol, butylene glycol, hexylene glycol, $C_2$-$C_4$ alkoxylated alcohols and $C_2$-$C_4$ alkoxylated polyols, such as ethoxylated, propoxylated, and butoxylated ethers of alcohols, diols, and polyols having about 2 to about 30 carbon atoms and 1 to about 40 alkoxy units, polypropylene glycol, and polybutylene glycol. Non-limiting examples of non-aqueous auxiliary solvents include silicones, and silicone derivatives, such as cyclomethicone, ketones such as acetone and methylethyl ketone; natural and synthetic oils and waxes, such as vegetable oils, plant oils, animal oils, essential oils, mineral oils, $C_7$-$C_{40}$ isoparaffins, alkyl carboxylic esters, such as ethyl acetate, amyl acetate, and ethyl lactate, jojoba oil, and shark liver oil.

Organic Solvent - One embodiment of the present invention relates to a composition comprising an organic solvent selected from the group consisting of low molecular weight aliphatic or aromatic alcohols, low molecular weight alkylene glycols, low molecular weight alkylene glycol ethers, low molecular weight esters, low molecular weight alkylene amines, low molecular weight alkanolamines, and mixtures thereof.

Some of the foregoing non-aqueous auxiliary solvents may also be diluents, solubilizers, conditioners and emulsifiers.

**Fillers**

Fillers enable the adjustment of the active matter in the detergent to the doses used. Filler products include sodium sulphate in powders, water and solvents in liquids.

**Silicates**

Suitable silicates are sodium silicates such as sodium disilicate, sodium metasilicate and crystalline phyllosilicates. Silicates if present are at a level of from about 1% to about 20%, or from about 5% to about 15% by weight of the automatic dishwashing detergent composition.

**pH Adjusting Agents**

A pH adjusting agent can be added to a formulation containing an improved copolymer. Thus, the pH adjusting agent can be utilized in any amount necessary to obtain a desired pH value in the final composition. Non-limiting examples of alkaline pH adjusting agents include alkali metal hydroxides, such as sodium hydroxide, and potassium hydroxide; ammonium hydroxide; organic bases, such as triethanolamine, diisopropylamine, dodecylamine, diisopropanolamine, aminomethyl propanol, cocamine, oleamine, morpholine, triamylamine, triethylamine, tromethamine (2-amino-2-hydroxymethyl)-1,3-propanediol), and tetrakis(hydroxypropyl)ethylenediamine; and alkali metal salts of inorganic acids, such as sodium borate (borax), sodium phosphate, sodium pyrophosphate, and mixtures thereof. Acidic pH adjusting agents can be organic acids, including amino acids, and inorganic mineral acids. Non-limiting examples of acidic pH adjusting agents include acetic acid, citric acid, fumaric acid, glutamic acid, glycolic acid, hydrochloric acid, lactic acid, nitric acid, phosphoric acid, sodium bisulfate, sulfuric acid, tartaric acid, and the like, and mixtures thereof.

**Conditioning Aids**

The improved copolymers of the present invention can be employed in combination with silicone fluids. The most common class of silicone polymers are the linear polydimethyl siloxanes having the general formula $CH_3$-$(Si(CH_3)_2$-$O)_w$-$Si(CH_3)_3$ where w denotes an integer greater than 2. Silicones can also be branched materials wherein one or more alkyl groups in a polymer are replaced with an oxygen to create a branch point. Silicone fluids are typically water-insoluble oils having a viscosity in the range of a few mPas to several hundred thousand mPas.

A class of silicones are the so-called silicone gums, as described, for example in U.S. Pat. No. 4,902,499, , which generally have a viscosity (at about 20°C.) of greater than about 600,000 mPas and have a weight average molecular weight of at least about 500,000 Daltons as determined by intrinsic viscosity measurement.

Another class of silicone materials that are particularly useful in combination with the copolymers of the present invention are the volatile silicones. Volatile silicones include cyclic and linear polydimethylsiloxanes. Cyclic volatile silicones typically contain about 3 to about 7 silicon atoms, alternating with oxygen atoms, in a cyclic ring structure. Each silicon atom is also substituted with two alkyl groups, typically methyl groups. Linear volatile silicones are silicone fluids, as described above, having viscosities of not more than about 25 mPas. A description of volatile silicones is found in Todd and Byers, "Volatile Silicone Fluids for Cosmetics", Cosmetics and Toiletries, Vol. 91(1), pp. 27-32 (1976), and in Kasprzak, "Volatile Silicones," Soap/Cosmetics/Chemical Specialities, pp. 40-43 (December 1986) e.

Other silicone oils include the dimethicone copolyols, which are linear or branched copolymers of dimethylsiloxane (dimethicone) and alkylene oxides. The dimethicone polyols can be random or block copolymers. A generally

useful class of dimethicone polyols are block copolymers having blocks of polydimethylsiloxane and blocks of polyalkylene oxide, such as blocks of polyethylene oxide, polypropylene oxide, or both. Silicone fluids, including volatile silicones, silicone gums, and silicone copolymers, are available from a variety of commercial sources such as Dow Corning, Momentive, Wacker Chemie, Shin Etsu and Lubrizol Advanced Materials.

Other oily materials that are useful in combination with the improved copolymers of the present invention include, for example, acetylated lanolin alcohols; lanolin alcohol concentrates; esters of lanolin fatty acids such as the isopropyl esters of lanolin fatty acid; polyol fatty acids; ethoxylated alcohols, such as ethoxylate and castor oils; sterols; sterol esters; sterol ethoxylates; and like materials. Many of such esters and ethoxylates are also useful as non-ionic surfactants.

Numerous ingredients are known in the art as conditioning agents and humectants, and in addition to those previously discussed, non-limiting examples include PCA (DL-pyrrolidone carboxylic acid) and its salts, such as lysine PCA, aluminum PCA, copper PCA, chitosan PCA, and the like, allantoin; urea; hyaluronic acid and its salts; ceramides; sorbic acid and its salts; sugars and starches and derivatives thereof; and lactamide MEA.

**Color**

The improved copolymers may also be employed in colored compositions. Accordingly, they may comprise a dye or a mixture thereof.

**Perfume Additives**

Perfumes and Non-Blooming Perfumes - Perfumes and perfumery ingredients useful in the present compositions and processes comprise a wide variety of natural and synthetic chemical ingredients, including, but not limited to, aldehydes, ketones, and esters.

**Buffers**

Alkalinity buffers which may be added to the compositions of the invention include monoethanolamine, triethanolamine, and borax.

Other materials such as clays, particularly of the water-insoluble types, may be useful adjuncts in compositions of this invention. Particularly useful is bentonite or laponite. This material is primarily montmorillonite which is a hydrated aluminum silicate in which about 1/6th of the aluminum atoms may be replaced by magnesium atoms and with which varying amounts of hydrogen, sodium, potassium, calcium, etc. may be loosely combined. The bentonite in its more purified form (i.e. free from any grit, sand, etc.) suitable for detergents contains at least 50% montmorillonite and thus its cation exchange capacity is at least about 50 to 75 meq per 100g of bentonite. Particularly preferred bentonites are the Wyoming or Western U.S. bentonites which have been sold as Thixo-jels 1, 2, 3 and 4 by Georgia Kaolin Co. These bentonites are known to soften textiles as described in British Patent No. 401, 413 to Marriott and British Patent No. 461,221.

In addition, various other detergent additives or adjuvants may be present in the detergent product to give it additional desired properties, either of functional or aesthetic nature.

Improvements in the physical stability and anti-settling properties of the composition may be achieved by the addition of a small effective amount of an aluminum salt of a higher fatty acid, e.g., aluminum stearate, to the composition. The aluminum stearate stabilizing agent can be added in an amount of 0 to 3%, preferably 0.1 to 2.0% and more preferably 0.5 to 1.5%.

There also may be included in the formulation, minor amounts of soil suspending or anti-redeposition agents, e.g. polyvinyl alcohol, fatty amides, sodium carboxymethyl cellulose, hydroxypropyl methyl cellulose. A preferred anti-redeposition agent is sodium carboxylmethyl cellulose having a 2:1 ratio of CM/MC which is sold under the tradename Relatin DM 4050.

Fluorescers may also be included in formulations, such as, for example, 4,4'-di[(4-anilino-6R,1,3,5triazin-2-yl)amino]stilbene 2,2'disulphonate, or 4,4'-di(2-sulphostyryl)bi-phenyl.

**Unit Dose**

In one aspect, the detergent composition of the invention is in unit dose form. Detergent products in unit dose form include tablets, capsules, sachets, pouches, and pods. The detergent compositions may be in a form of liquid, gel or powder. In one aspect, for use herein are tablets wrapped with a water- soluble film and water-soluble pouches. The weight of the composition of the invention is from about 10 to about 25 grams, from about 12 to about 24 grams or even from 14 to 22 grams. These weights are extremely convenient for detergent product dispenser fit. In the cases of unit dose products having a water-soluble material enveloping the detergent composition, the water-soluble material is not

considered as part of the composition. In one aspect, the unit dose form is a water-soluble pouch (i.e., water-soluble film enveloping detergent composition), in one aspect, a multicompartment pouch having a plurality of films forming a plurality of compartments. This configuration contributes to the flexibility and optimization of the composition. It allows for the separation and controlled release of different ingredients. In one aspect, one compartment contains detergent composition in solid form and another compartment contains detergent composition in liquid form.

In one aspect, the films of these two compartments have different dissolution profiles, allowing the release of the same or different agents at different times. For example, the agent from one compartment (first compartment) can be delivered early in the washing process to help with soil removal and a second agent from another compartment (second compartment) can be delivered at least two minutes, or even at least five minutes later than the agent from the first compartment.

A multi-compartments pack is formed by a plurality of water-soluble enveloping materials which form a plurality of compartments, one of the compartments would contain the automatic detergent composition of the invention, another compartment can contain a liquid composition, the liquid composition can be aqueous (i.e. comprises more than 10% of water by weight of the liquid composition) and the compartment can be made of warm water soluble material. In some embodiments the compartment comprising the dishwashing detergent composition of the invention is made of cold water soluble material. It allows for the separation and controlled release of different ingredients. In other embodiments all the compartments are made of warm water soluble material.

**PROCESS OF LAUNDRY POWDER DETERGENTS:**

A process for making a high active, high bulk density detergent composition as well as the composition itself, the process comprising the steps of (i) introducing a binder component, comprising a neutralized or partially neutralized surfactant, surfactant precursor, improved polymer, and/or its salts and a solid component of initial particle size from submicron to 500 μm into a high shear mixer to thereby form a particulate mixture and (ii) subjecting said mixture to high shear mixing and thereby granulating 'the components to form granules of a size within the range of from 1 to 1200 μm. Preferably after this mixing a coating agent such as zeolite is added to the mixer.

The detergent composition is suitably a complete detergent composition. The term "complete" is used to refer to a detergent composition comprising sufficient surfactant, builder, and alkalinity source to function as an effective fabric washing powder. Alkalinity source refers to soda ash or phosphates. The term "complete" does not restrict the addition of certain minor components in conventional amounts for example at weights of less than 5%. Such minor components include enzymes, bleach, perfume, anti-deposition agent, or dye, to enhance the performance of the washing powder.

The particulate detergent composition may, if desired, be used as a feedstock in a detergent production process. For example, a liquid component surfactant such as nonionic surfactant may be sprayed onto the composition and it may then be coated with for example zeolite. If the detergent composition is used as a feedstock, it is preferred that it be the direct product of the process of the present invention. That is, additional components are not incorporated into the detergent particles prior to their use as a feedstock. However, if desired, the particles may be admixed with separate particles comprising other materials. This provides the advantage of allowing the detergent composition to be produced at one location by a single-step process and optionally admixture with separate particles and then transported to a remote location for storage or further processing as desired.

As a result of this viscosity increase, the process appears to be more easily controlled resulting in better powder properties for the detergent composition.

Examples of such viscosity raising components are water and, particularly, fatty acid in combination with a stoichiometric amount of alkaline material (such as caustic soda) sufficient to neutralize the fatty acid which obviously results in the formation of soap.

In the process a solid component, which can comprise detergency builders such as water-soluble alkaline inorganic materials (for example sodium carbonate seeded with calcium carbonate), zeolite, sodium tripolyphosphate, other water-soluble inorganic materials, for example, sodium bicarbonate or silicate, fluorescers, polycarboxylate polymers, anti-redeposition agents and fillers, is mixed with a binder component which in addition to a neutralized or partially neutralized surfactant can comprise water, silicate solution, liquid polymer components, polyethylene glycols, perfumes, fatty acids and other materials. In the context of the present invention, the term binder component includes any component which is plastically deformable under conditions encountered during the process.

Examples of materials which may be postdosed to the composition include enzymes, bleaches, bleach precursors, bleach stabilizers, lather suppressors, perfumes and dyes. Liquid or pasty ingredients may conveniently be absorbed on to solid porous particles, generally inorganic, which may then be postdosed to the composition obtained by the process of the invention.

The process is very flexible with respect to the chemical composition of the starting materials. Phosphate as well as zeolite built compositions may be made. The process is also suitable for preparing calcite/carbonate containing compositions.

The particulate solid component has an initial particle size of 0.1 to 500 μm, preferably 1 to 350 μm, more preferably from 0.1 to 300 μm. The solid component preferably comprises from 5 to 95% of detergent builders, more preferably from 10 to 80%, most preferably from 20 to 60% by weight.

Preferably the binder component also comprises the improved copolymers and / or its salts. Preferably the binder component comprises a mixture of neutralized or partially neutralized, or unneutralized surfactants for example a mixture of linear or primary alkylbenzene sulfonate or sulfonic acid containing from 11 to 14 carbon atoms and a $C_{12}$ to $C_{15}$ primary alcohol ethoxylated with 3 to 7 moles of ethylene oxide per mole of alcohol in a weight ratio of anionic to nonionic of 3 to 1 or a mixture of a $C_{14}$ to $C_{17}$ primary or secondary alcohol sulphate with a $C_{12}$ to $C_{15}$ primary alcohol ethoxylated with 3 to 7 moles of ethylene oxide per mole of alcohol in a weight ratio of 2 to 1.

The high shear mixer advantageously used to carry out the process is preferably a Littleford (TM) FM 130D mixer. This apparatus consists essentially of a large, static hollow cylinder with its longitudinal axis horizontal. Along this axis is a rotating shaft with several different types of blades mounted thereon. Preferably, when used to carry out the process of the present invention the shaft tip speed is between 1 m/sec and 20 m/sec, more preferably 1 m/sec and 12 m/sec. The mixer can be equipped with one or more high speed cutters and preferably these are operated at tip speeds from 15 m/sec to 80 m/sec, more preferably from 20 m/sec to 70 m/sec. Other suitable mixers for the process of the invention are the Lodige™, Eirich™ RVO2, Powrex™ VG100, Zanchetta™, Schugi™ and Fukae™.

In the process, the solid component is fed into the mixer followed by the binder component which is either sprayed on to the solid component or pumped into the mixer. The components are mixed for a total residence time preferably of from 0.2 to 8 minutes, more preferably of from 0.25 to 5 minutes. Optimally after this mixing time a coating agent such as zeolite can be added to the mixer and the mixer operated with only the main shaft for 20 to 60 seconds. The granules made by the process preferably have a bulk density of from 600 g/liter to 1150 g/liter and a particle size (measured by Rosin-Rammler) of from 300 to 1,200 μm more preferably from 400 to 800 μm.

The ratio of binder component to solid component is preferably in a weight ratio of from 3:2 to 2:3, more preferably 1:1 to 2:3.

The process is operated at a temperature from ambient to 60°C, more preferably from ambient to 40°C.

**PREPARATION OF SPRAY-DRIED LAUNDRY DETERGENT:**

An aqueous alkaline laundry detergent slurry comprising: water, alkyl benzene sulphonate, sodium silicate; improved copolymer (e.g., acrylic/itaconic acid co-polymer), sodium sulphate, sodium carbonate, magnesium sulphate, and other optional ingredients is prepared. This aqueous slurry is sprayed into a counter current spray drying tower and spray-dried to produce spray-dried laundry detergent powder.

The amount of each chemical component described is presented exclusive of any solvent or diluent, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

## EXAMPLES

### Test Methods

Viscosity

Brookfield rotating spindle method (all viscosity measurements reported herein are conducted by the Brookfield method whether mentioned or not): The viscosity measurements are calculated in mPa·s, employing a Brookfield rotating spindle viscometer, Model RVT (Brookfield Engineering Laboratories, Inc.), at about 20 revolutions per minute (rpm), at ambient room temperature of about 20 to 25°C (hereafter referred to as viscosity). Spindle sizes are selected in accordance with the standard operating recommendations from the manufacturer. Generally, spindle sizes are selected as follows:

| Spindle Size No. | Viscosity Range (mPa·s) |
|---|---|
| 1 | 1 - 50 |
| 2 | 500 - 1,000 |
| 3 | 1,000 – 5,000 |
| 4 | 5,000 – 10,000 |
| 5 | 10,000 – 20,000 |
| 6 | 20,000 – 50,000 |
| 7 | >50,000 |

The spindle size recommendations are for illustrative purposes only. The artisan of ordinary skill in the art will select a spindle size appropriate for the system to be measured.

Turbidity Testing

The turbidity of a composition containing a copolymer of the invention is determined in Nephelometric Turbidity Units (NTU) employing a Nephelometric turbidity meter with distilled water (NTU = 0) as the standard.

Molecular Weight Determination

The weight average molecular weights referenced herein are measured by GPC using a Waters Model 515 pump, Waters Model 717 WISP autosampler with *Waters* Model 2410 Refractive Index @ 40°C. Approximately 0.01 g polymer sample is dissolved in 10 ml of 97.5% 0.1M Sodium Nitrate with 2.5% tetrahydrofuran (THF). The test sample solution is gently shaken for about two hours and filtered by passing the sample solution through a 0.45 μm PTFE disposable disc filter. The chromatographic conditions are: Mobile phase: 97.5% 0.1M Sodium Nitrate/ 2.5% THF (pH=10), 0.7 ml/min. Sample size: 100μl Column set: *TOSOH* Guard + 2 x TSKgel GMPWxl (13u), 300 x 7.8 mm, @ 35°C. Waters Empower Pro LC/GPC software is used to analyze the results and to calculate $M_w$ of the copolymers of the invention.

The molecular weight calibration curve was established with polyacrylic acid standards contained in the "PSS-PAAKIT" from *Polymer Standards Service-USA.* Acrylic acid with MW=94 Daltons was added to one standard. The calibration curve covered an Mp range from 94 to 1.10 x $10^6$ Daltons.

$^1H$ NMR

Nuclear magnetic resonance (NMR) spectroscopy is an analytical technique that can help determine among other things detailed information about the structure, molecular dynamics, and chemical environment of molecules. The $^1H$ NMR spectra referenced herein are measured by dissolving the samples in $D_2O$ solvent in 5mm NMR tubes and observed by $^1H$ NMR on the Bruker AV500.

The $^1H$ NMR spectra referenced herein are measured by dissolving the samples in $D_2O$ solvent in 5mm NMR tubes and observed by $^1H$ NMR on the Bruker AV500.

Residual Monomers

Residual monomers such as, itaconic acid, acrylic acid and AMPS are measured by HPLC using a Varian 5020 with UV detector, Spectra-Physics 4100 data analyzer and column C-18 modified silica such as Phenomenex Jupiter 5u C-18 300A, 4.6 mm I.D. x 25 cm at 20°C. Mobile phase is the solution of 0.01M $KH_2PO_4$ with flow rate 1 ml/minute. Monomer detection limit is < 5 ppm.

$Cl_2$ Retention

Percent chlorine retention data are generated using a simplified formulation containing 1% total solid polymer

in water with sodium hypochlorite (1% active $Cl_2$) and adjusting the final pH of the formulation with 18% NaOH to pH > 12. The following titration procedure is used to calculate the weight % of $Cl_2$ retention. The result 1.00 equals to 100% $Cl_2$ retention.

Titration Preparation

Titration is performed as follows:

1) While the chlorine bleach solution is mixing dissolve 1.99 to 2.01g of potassium iodide in 50 mL DI water using a 250 mL Erlenmeyer flask.
2) Add approximately 2 mL of HCl (37% assay) using a pipette and mix well.
3) Now weigh 2.5 to 2.7 g of the chlorine bleach solution into the flask and record the amount to 3 decimal places. The solution will turn reddish brown.
4) Begin titrating with 0.1N sodium thiosulfate. Continue until the solution turns straw yellow.
5) Now add about 5 mL of starch indicator solution. The chlorine bleach solution will now turn blue/black.
6) Continue 0.1N sodium thiosulfate titration slowly until the chlorine bleach solution turns clear. Wait a couple of minutes after the solution turns clear to see if it turns dark again. If so, add more titrant. If not, record amount used in mL.
7) Use the following formulation to calculate the weight % of $Cl_2$ retention.

$$\text{Calculation} \quad \frac{(\text{mL titration})\,(0.3546)}{\text{Sample wt.}} = \text{Weight \% } Cl_2$$

Calcium Binding Capacity:

The calcium chelating capacity of the polymers is measured using Thermo Orion Calcium Ion Selective Electrode (ISE) connected to an Orion Start Plus Meter. The instrument is calibrated using four standard(Calcium chloride ($CaCl_2$) solutions with concentrations of 0.0001 M, 0.001 M, 0.01 M and 0.1 M. 1% chelator solution is prepared in DI water and its pH is adjusted to desired value using NaOH solution.

The following procedure is used for a typical sample titration:

- Burette is filled with 1% chelator solution.
- In a 250 mL beaker containing a magnetic stir bar, 100 mL of 0.01 M $CaCl_2$ solution is placed. 2 mL of Ionic Strength Adjuster (ISA) is added.
- The ISE and reference electrodes are rinsed with distilled water, wiped and placed in the solution.
- The chelator solution is titrated from the burette and the $Ca^{2+}$ concentration is monitored in the Orion Star Plus meter.
- The chelator solution is added gradually until the meter shows 0.00 M concentration of $Ca^{2+}$.
- The end point of the titration is used to calculate the Calcium binding capacity of the polymer in mg of $CaCO_3$/g of polymer using the following equation:

$$\text{mg of } CaCO_3/\text{g of polymer} = \frac{0.100087 * M}{0.01} * 100 * \frac{1000}{BR}$$

where $M$ = starting molarity of $CaCl_2$ solution and $BR$ = Burette reading, mL at the end point of the titration.

Abbreviations

The following abbreviations and trade names are utilized in the examples.

## ABBREVIATIONS and Trade Names

| Abbreviation | Chemical Name |
|---|---|
| **IA** | Itaconic acid |
| **AA** | Acrylic acid |
| **AMPS™ Monomer** | 2-acrylamido-2-methylpropane sulfonic acid (Lubrizol Advanced Materials, Inc.) sodium salt |
| **SPS** | Sodium persulfate |
| **FF6** | Reducer (mixture of a disodium salt of 2-hydroxy-2-sulfinatoacetic acid and sodium sulfite) available from Brüggolit |
| **NaOH** | Sodium hydroxide |
| **STPP** | Sodium tripolyphosphate |
| **EDTA** | Ethylenediaminetetraacetic acid |
| **PAA** | Low molecular weight polyacrylic acid (Source: Acusol™ 445 from Dow™ ("CL1"); Noverite™ K-752 from Lubrizol™ ("CL2"); Noverite K-7058 from Lubrizol ("CL3"); Noverite K-732 from Lubrizol ("CL4"); Sokalan™ PA 25 from BASF™ ("CL5")) |
| **PIA** | Polyitaconic acid (Source: Itaconix™ DSP-2K ("CL6")) |
| **MGDA** | Methylglycinediacetic acid, sodium salt (Source: Trilon™ M from BASF ("CL7")) |
| **GLDA** | Glutamic acid diacetic acid, tetrasodium salt (Source: Dissolvine™ GL from Akzo Nobel ("CL8")) |
| **PAA/SA** | Polyacrylic acid/sulfonic acid copolymer (Noverite K775 from Lubrizol ("CL9"); Acusol 588 from Dow ("CL10")) |
| **P(AA/MA)** | Acrylic acid/maleic acid copolymer (Sokalan CP-45 ("CL11"); Sokalan CP-5 from BASF ("CL12"); Acusol 460N from Dow ("CL13")) |
| **EDDS** | Ethylenediaminedisuccinate |
| **Hybrid Polymer** (based on natural and synthetic monomers) | (Source: Alcogaurd™ H 5941 from Akzo Nobel ("CL14")) |

### Sample 1: Polyitaconic acid (Reference)

Into an agitator equipped reactor containing 250 grams of deionized water (D.I.) and 250 grams of itaconic acid are added under nitrogen atmosphere and mixed at 300 rpms. The contents of the reactor are heated to about 60°C with mixing agitation (300 rpm) under a nitrogen atmosphere for 30 minutes. When the contents of the reactor reaches a temperature of approximately 60°C, 30 grams of FF6 solution (0.084% aqueous solution weight/weight) and 26.25 gram sodium persulfate solution (38 percent aqueous solution weight/weight) are injected into the heated IA solution in 10 minutes interval. After 30 minutes, the reaction temperature is raised to 80 to 85°C. When the contents of the reactor reaches a temperature of approximately 80 to 85°C, 28.5 percent sodium persulfate solution (aqueous solution weight/weight) is also metered at 0.44 mL/minute into the reaction mixture for 75 minutes. The temperature of the reaction is maintained at about 80 to 85°C for an additional four hours to complete the polymerization. The resulting polyitaconic acid product is cooled to room temperature and the pH of the product is adjusted from < 1.0 to 2.5 with 50% NaOH before discharging from the reactor.

### Samples 2-4: Polyitaconic acid (Reference)

Sample 1 is repeated to make Samples 2-4 with pre-neutralized itaconic acid as mentioned in Table 1 to investigate the effect of neutralization on IA isomerization as well as its conversion. A neutralizing solution of 50% NaOH at different percent based on the acid groups of the IA monomer is added along with IA and is referred to as the percent degree of neutralization (%DN). Samples 2-4 contain 5, 10 and 20% DN neutralizing solution respectively.

## Comparative Sample I

A polyitaconic acid polymer is prepared in water using the procedure of Example I in US Patent No. 7,910,676 at 50% DN using 70% tBHP initiator at reflux condition.

## Example 1 (Reference)

Polymer Samples 1 to 4 and Comparative Sample I are characterized for %total solid, pH, product viscosity, conversion (by HPLC), and IA isomerization by $^1$H NMR. The results are shown in Table 1 below. A significant amount of citraconic acid (IA isomer) is noticed by the presence of cis- and trans- $CH_3$-peak at 2.1 and 1.97 ppm and cis- and trans- methine -CH- peak at 5.8 and 6.55 ppm as shown in Figure 1 in the Comparative Sample I as well as poor IA conversion. Samples 1-4 are markedly free of IA isomer with better conversion.

**Table 1: Polyitaconic acid made with different pre-neutralized conditions (%DN)**

| | Sample | | | | |
|---|---|---|---|---|---|
| **Test** | 1 | 2 | 3 | 4 | Comp. I |
| **%DN** | 0 | 5 | 10 | 20 | 50 |
| **Temp °C** | 85 | 85 | 85 | 85 | 100 |
| **pH** | 2.6 | 2.21 | 2.73 | 3.5 | 4.85 |
| **% Total Solids** | 39.5 | 42.3 | 49.7 | 37.3 | 51 |
| **Viscosity (mPa-s)** | 71 | 76 | 1340 | 56 | 540 |
| **Residual Monomer (ppm)** | 1160 | 18500 | 4050 | 20800 | 45600 |
| **$Cl_2$ Retention** | 0.97 | 0.93 | 0.91 | 0.93 | 0.89 |
| **Mn** | 1917 | 1692 | 2195 | 1564 | 1827 |
| **PDI** | 2.43 | 2.58 | 3.31 | 2.59 | 1.44 |
| **Isomerization by $^1$H NMR** | none | none | none | trace | significant |

## Sample 5: 90/10 Mole % Itaconic acid / acrylic acid copolymer

Into an agitator equipped reactor containing 225 grams of deionized water (D.I.) and 235.5 grams of itaconic acid are added under nitrogen atmosphere and mixed at 300 rpms. The contents of the reactor are heated to about 60°C with mixing agitation (300 rpm) under a nitrogen atmosphere for 30 minutes. When the contents of the reactor reaches a temperature of approximately 60°C, 30 grams of FF6 solution (0.084% aqueous solution weight/weight) and 26.25 gram sodium persulfate solution (38 percent aqueous solution weight/weight) are injected into the heated IA solution in 10 minutes interval. After 30 minutes, the reaction temperature is raised to 85°C. When the contents of the reactor reaches a temperature of approximately 85°C, 28.5 percent sodium persulfate solution (aqueous solution weight/weight) is also metered at 0.44 mL/minute into the reaction mixture for 75 minutes. Concurrently, the co-monomer solution, made from 14.5 grams AA monomer mixed with 12.5 grams of water, is also gradually metered (0.43 g/min.) into the reactor over a period of about 60 minutes to react with IA. The temperature of the reaction is maintained at about 85°C for an additional four hours to complete the polymerization. The resulting copolymer of itaconic acid and acrylic acid product is cooled to room temperature and the pH of the product is adjusted to 2.5 with 50% NaOH before discharging from the reactor.

## Samples 6-12: Itaconic acid / acrylic acid copolymers

Polymers 6 through 12 are also synthesized as set forth in Sample 5. A neutralizing solution of 50% NaOH at 5 percent based on the acid groups of the total monomers (5% DN) is added along with IA in Samples 11 and 12. The monomer components for these Samples are set forth in Table 2 below.

## Comparative Sample II

A copolymer of 90/10 mole % of IA/ AA is prepared using the procedure of Example 2B in US Patent No. 4,485,223 at reflux condition with about 20 wt% (0.1 mole %) initiator.

## Example 2

Polymer Samples 6 to 12 and Comparative Sample II are characterized for %total solid, pH, product viscosity, conversion and IA isomerization by $^{1}H$ NMR. The results are shown in Table 2 below. The combination of both high initiator level and high temperature (reflux) conditions in the preparation of Comparative Sample II causes the initiator to decompose quickly, resulting in 1) a polymer solution having a dark color and undesirable sulfur odor, with oxidized and sulfurized itaconic acid impurities along with unreacted monomers (Figure 2), and 2) poor performance for chlorine retention. Surprisingly, the combination of both lower temperature (<85°C) and redox initiator (oxidizer-SPS and reducer-FF6) package employed in Samples 5 to 12 yields cosmetically acceptable color and odor, and relatively pure copolymer products (Figure 3) with desirable Mn and other properties. Furthermore, the use of less than 5% equivalent pre-neutralization (referred to as DN) eliminates the hazardous corrosiveness issue due to the low pH < 1 of the final product and subsequently makes the process suitable for commercial manufacturing options.

**Table 2: IA-AA copolymers**

| | Sample | | | | | | | | | |
|---|---|---|---|---|---|---|---|---|---|---|
| **Test** | 5 | 6 | 7 | 8 | 9 | 10 | 11 | 11a | 12 | Comp II |
| **Mole % IA/AA** | 90/10 | 80/20 | 70/30 | 60/40 | 50/50 | 30/70 | 60/40 | 60/40 | 70/30 | 90/10 |
| **Wt% IA/AA** | 94.2/5.8 | 88/12 | 80.8/19.2 | 73/27 | 64.8/35.6 | 43.6/56.4 | 73/27 | 73/27 | 80.8/19.2 | 94.2/5.8 |
| **Temp °C** | 85 | 85 | 85 | 85 | 85 | 85 | 85 | 75 | 85 | 102 (reflux) |
| **%DN** | 0 | 0 | 0 | 0 | 0 | 0 | 5 | 8.4 | 5 | 0 |
| **pH** | 2.5 | 2.51 | 2.5 | 2.53 | 2.52 | 2.5 | 2.75 | 2.72 | 2.74 | <1.0 |
| **% Total Solids** | 47 | 42.3 | 43.2 | 43.4 | 44.7 | 37.8 | 49 | 47.5 | 46.3 | 49.5 |
| **Viscosity (mPa-s)** | 198 | 137 | 179 | 268 | 334 | 250 | 712 | 1530 | 455 | 78 |
| **Total Residual Monomers (ppm)** | 1455 | 4154 | 182 | 44 | 34 | 17 | 71 | 17 | 45 | 14870 |
| **Mn** | 2474 | 2339 | 3679 | 4087 | 4275 | 5350 | 4048 | 6498 | 2138 | 666 |
| **PDI** | 2.1 | 2.09 | 2 | 3.24 | 6.26 | 9.14 | 2.7 | 4.4 | 2.4 | 3.05 |
| **$Cl_2$ Retention** | 0.99 | 0.99 | 0.97 | 0.98 | 0.98 | 0.98 | 0.96 | 0.84 | 0.91 | 0.62 |
| **NTU** | 2.11 | 0.79 | 0.55 | 0.94 | 1.29 | 0.62 | 3 | 1.3 | 2 | 50 |
| **Color (Gardner Scale)** | 10 | 9 | 8 | 5 | 6 | 4 | 6 | 10 | 8 | 16 |

## Samples 13 - 22: IA Copolymers and Terpolymers with AMPS Monomer

Polymers 13 through 22 are also synthesized as set forth in Sample 5 (e.g., at a reaction temperature of 85°C and with 0% DN) except a sodium salt of AMPS monomer is used in place of AA or in combination with AA. The monomer components for these Samples are set forth in Table 3 below.

**Table 3: IA Copolymers and Terpolymers with AMPS Monomer**

| | Sample | | | | | | | | | |
|---|---|---|---|---|---|---|---|---|---|---|
| **Test** | 13 | 14 | 15 | 16 | 17 | 18 | 19 | 20 | 21 | 22 |
| **Mole % IA/AA/ AMPS** | 90/0/10 | 80/0/20 | 70/0/30 | 60/0/40 | 50/0/50 | 30/0/70 | 60/30/10 | 60/25/15 | 60/20/20 | 60/10/30 |
| **Wt% IA/AA/ AMPS** | 83.6/0/16.4 | 69.4/0/30.6 | 57/0/43 | 46/0/54 | 36.2/0/63.8 | 19.6/0/80.4 | 63.5/17.5/19 | 60/13.8/26.2 | 56.4/10.4/33.2 | 52.6/4.9/46.5 |
| **pH** | 2.5 | 2.5 | 2.51 | 2.52 | 2.53 | 2.52 | 2.52 | 2.53 | 2.53 | 2.52 |
| **% Total Solids** | 41.1 | 40.1 | 41.3 | 40.4 | 39.3 | 28.8 | 46.9 | 46 | 39.9 | 39.7 |
| **Viscos-ity (mPa-s)** | 63 | 60 | 84 | 80 | 82 | 67 | 380 | 314 | 78 | 78 |
| **Total residu-al Mon-omers (ppm)** | 9410 | 30 | 30 | 18 | 12 | 80 | 45 | 23 | 15 | 159 |
| **Mn** | 2166 | 1398 | 3071 | 2988 | 3627 | 3210 | 3562 | 3733 | 2922 | 2566 |
| **PDI** | 2.05 | 2 | 2.79 | 3.51 | 4.14 | 5.05 | 4.79 | 5.02 | 3.6 | 4.15 |
| **$Cl_2$ Reten-tion** | 0.97 | 0.97 | 0.97 | 0.96 | 0.97 | 0.98 | 0.9 | 0.89 | 0.87 | 0.89 |
| **NTU** | 1.23 | 0.76 | 0.75 | 0.49 | 0.4 | 0.4 | 1.22 | 1.15 | 1.09 | 0.61 |
| **Color (Gard-ner Scale)** | 9 | 8 | 6 | 5 | 4 | 5 | 6 | 6 | 6 | 5 |

### Sample 23

In spray dryers the feed material in the form of slurry, solution or paste is sprayed through a pressure nozzle or centrifugal disks in a drying chamber with high temperature air flowing in parallel or counter direction. Buchi mini spray dryer is used to dry the product. It operates on the principle of nozzle spraying in parallel flow (sprayed product and drying air flows in the same direction). A polymer solution with about 55 - 70% liquid content is prepared, and pumped to spray dryer at 8 g/min at temperature 130 to 170 °C, most preferred at 150 °C. The aqueous polymer solution at room temperature is pumped and atomized through a nozzle in a drying chamber with air flowing in the same direction at temperature of 150 °C. Dry powder coming out of spray drying tower with air is carried to a cyclone where the product is separated from the air stream. The temperature of powder exiting the spray dryer is below 150 °C with loss on drying (LOD) below 10 wt.%. The powder morphology changed from white fluffy powder to free flowing particle with increase in liquid contents in polymer solution.

### Sample 24

Into an agitator equipped reactor containing 500 grams of deionized water (D.I.), 365 grams of itaconic acid and 15 grams of 50% NaOH were added under nitrogen atmosphere and mixed at 300 rpms. The contents of the reactor were heated to about 60°C with mixing agitation (300 rpm) under a nitrogen atmosphere for 30 minutes. When the contents of the reactor reached a temperature of approximately 60°C, 71 grams of FF6 solution (7% aqueous solution

weight/weight) and 52.2 grams of sodium persulfate solution (3.83 percent aqueous solution weight/weight) were injected into the heated IA solution in 10 minute interval. After 30 minutes, the reaction temperature was raised to 85°C. When the contents of the reactor reached a temperature of approximately 85°C, 8.6 grams of 35% $H_2O_2$ was added as batch in 2 additions and followed by metered addition of 28.5 percent sodium persulfate solution (aqueous solution weight/weight) at 0.43 mL/minute into the reaction mixture for 135 minutes. Concurrently, the comonomer solution, made from 135 grams AA monomer mixed with 25 grams of water, was also gradually metered (1.27 g/min.) into the reactor over a period of about 120 minutes to react with IA. The temperature of the reaction was maintained at about 85°C for an additional four hours to complete the polymerization. About 17 grams of 35% $H_2O_2$ was added in 2 additions in 60 minute intervals as post treatment. The resulting copolymer of itaconic acid and acrylic acid product was cooled to room temperature and adjusted the product pH to 7 - 8 with 50% NaOH before discharging from the reactor.

**Sample 25**

Into an agitator equipped reactor containing 500 grams of deionized water (D.I.), 317.5 grams of itaconic acid and 15 grams of 50% NaOH were added under nitrogen atmosphere and mixed at 300 rpms. The contents of the reactor were heated to about 60°C with mixing agitation (300 rpm) under a nitrogen atmosphere for 30 minutes. When the contents of the reactor reached a temperature of approximately 60°C, 71 grams of FF6 solution (7% aqueous solution weight/weight) and 52.2 grams of sodium persulfate solution (3.83 percent aqueous solution weight/weight) were injected into the heated IA solution in 10 minute intervals. After 30 minutes, the reaction temperature was raised to 80°C. When the contents of the reactor reached a temperature of approximately 80°C, 8.6 grams of 35% $H_2O_2$ was added as batch in 2 additions and followed by metered addition of 28.5 percent sodium persulfate solution (aqueous solution weight/weight) at 0.43 mL/minute into the reaction mixture for 135 minutes. Concurrently, the comonomer solution, made from 87.5 grams AA monomer mixed with 181.64 grams of AMPS 2403 monomer, was also gradually metered (1.93 g/min.) into the reactor over a period of about 120 minutes to react with IA. The temperature of the reaction was maintained at about 80°C for an additional four hours to complete the polymerization. About 17 grams of 35% $H_2O_2$ was added in 2 additions in 60 minutes interval as post treatment. The resulting copolymer of itaconic acid and acrylic acid product was cooled to room temperature and adjusted the product pH to 7 - 8 with 50% NaOH before discharging from the reactor.

**Sample 26**

Into an agitator equipped reactor containing 700 grams of deionized water (D.I.), 317.5 grams of itaconic acid and 15 grams of 50% NaOH were added under nitrogen atmosphere and mixed at 300 rpms. The contents of the reactor were heated to about 60°C with mixing agitation (300 rpm) under a nitrogen atmosphere for 30 minutes. When the contents of the reactor reached a temperature of approximately 60°C, 71 grams of FF6 solution (7% aqueous solution weight/weight) and 52.2 grams of sodium persulfate solution (3.83 percent aqueous solution weight/weight) were injected into the heated IA solution in 10 minutes interval. After 30 minutes, the reaction temperature was raised to 65-70°C. When the contents of the reactor reached a temperature of approximately 70°C, 8.6 grams of 35% $H_2O_2$ was added as batch in 2 additions and followed by metered addition of 28.5 percent sodium persulfate solution (aqueous solution weight/weight) at 0.43 mL/minute into the reaction mixture for 135 minutes. Concurrently, the comonomer solution, made from 87.5 grams AA monomer mixed with 181.64 grams of AMPS 2403 monomer, was also gradually metered (1.93 g/min.) into the reactor over a period of about 120 minutes to react with IA. The temperature of the reaction was maintained at about 80°C for an additional four hours to complete the polymerization. About 17 grams of 35% $H_2O_2$ was added in 2 additions in 60 minute intervals as post treatment. The resulting copolymer of itaconic acid and acrylic acid product was cooled to room temperature and adjusted the product pH to 7 - 8 with 50% NaOH and followed by an enzyme treatment using Terminox Ultra 200L (Novozyme) at 0.00125%. The final product was heated for an hour at about 40-85°C to deactivate the enzyme and then cooled to room temperature before discharging from the reactor.

**Sample 27**

Powder versions of samples 24 and 25 were made. Spray drying of polymer samples 24 and 25 was conducted on Buchi 190 mini spray dryer or 2.5 ft Niro spray dryer. A polymer solution with about 60-65% liquid content was prepared, and pumped to spray dryer at 5-10 g/min at temperature 130 to 190°C, most preferred at 150-170°C. Dry powder coming out of spray drying tower with air was carried to a cyclone where the product was separated from the air stream. The temperature of powder exiting the spray dryer was below 150°C with loss on drying (LOD) below 10%. Outlet air temperature was 85 to 105°C, most preferred at 90 °C. The powder properties of the sample are provided in the table below.

Powder properties

| | Sample 27a | Sample 27b |
|---|---|---|
| Moisture, % | 7.1 | 8.1 |
| Bulk density, $kg/m^3$ | 498 | 624 |
| pH (1% solution) | 9.65 | 9.6 |
| Particle size $D_{50}$, $\mu m$ | 100 - 1200 | 100 - 1200 |

**Sample 27c**

The effect of different binders on powder (spray-dried) particle size was also studied. Polymeric binders such as Polyvinyl Alcohol, Polyvinylpyrrolidone as well as a non-ionic surfactant were used between 1-5 wt% level, preferably 3-5 wt%. Addition of non-ionic surfactant affected the particle size of the powder generated after spray drying. For example, spray dried powder generated from liquid containing 1.5-3 wt% non-ionic surfactant had about 90 % powder > 250 microns with about 55 % powder > 500 microns size.

**Sample 28**

Granular versions of polymer were also prepared by drum drying and spray granulation technique. Material from drum drying process was flaky, and had very low bulk density. However, product from spray granulation (on Glatt-Powder-Coater-Granulator (GPCG) 3.1) of polymer sample 25 (granular version is sample 28 in table below) was free flowing granular material with particle size between 200-1000 microns. About 12% particles in the product were < 200 microns. It should be noted that pilot spray granulation process was a continuous process, and fine particles (< 200 microns) would be recycled to get product with bulk density (500 - 1200 $kg/m^3$). Granular properties of the granulated sample are provided in the table below.

Granular properties

| | Sample 28 |
|---|---|
| Moisture, % | 6.1 |
| Bulk density, $kg/m^3$ | 551 |
| pH (1% solution) | 11 |
| Particle size $D_{50}$, $\mu m$ | 200-1000 |
| Coarse, (> 1000 $\mu m$) % | 0.8 |
| Fines, (< 400 $\mu m$) % | 4.5 |

**Sample 29**

Into an agitator equipped reactor containing 520 grams of deionized water (D.I.), 520 grams of isopropyl alcohol, and 474.5 grams of itaconic acid were added under nitrogen atmosphere and mixed at 300 rpms. The contents of the reactor were heated to about 82°C with mixing agitation (300 rpm) under a nitrogen atmosphere for 30 minutes. When the contents of the reactor reached a temperature of approximately 82°C, 97.5 grams of FF6 solution (6.66% aqueous solution weight/weight), 106.6 grams of sodium persulfate solution (26.7 percent aqueous solution weight/weight), 18.7 grams of 35% $H_2O_2$ were injected into the heated IA solution. Immediately, a metered addition of 26.8 percent sodium persulfate solution (aqueous solution weight/weight) was started at 0.85 mL/minute into the reaction mixture for 105 minutes. Along with metered initiator, the comonomer solution, made from 175.5 grams AA monomer, is also gradually metered (1.86 g/min.) into the reactor over a period of about 90 minutes to react with IA. The temperature of the reaction was maintained at about 82-85°C for an additional four hours to complete the polymerization and followed by solvent exchange with water at 65°C. The resulting copolymer product was cooled to room temperature and adjusted to pH to 3.0 - 3.5 with 50% NaOH before discharging from the reactor. The final product was identified as a copolymer of itaconic acid and acrylic acid with partial IPA esterification based on proton NMR (a peak at 1.24 ppm from IPA ester content). Additionally, the final product contains lactone structures (peaks at 1.47 and 1.39 ppm) which can come from both

itaconic and acrylic acid.

### Samples 30-32

Polymer samples 30 through 32 were also synthesized for reproducibility as set forth in Sample 29. The monomer components for these examples were set forth in the Table below. All polymers contained partial esterification and traces of lactone structures on the backbone.

| Partially Esterified Itaconic acid / acrylic acid copolymers in Water / IPA Mixture | | | | | | | | | | | |
|---|---|---|---|---|---|---|---|---|---|---|---|
| Sample ID | Wt% IPA/DI W | Mole % IA/AA | Wt% IA/AA | Temp °C | %TS | Viscosity mPa-s | %Conversion (total, ppm) | Mn | PDI | NTU | Color (Gardner) |
| 29 | 50/50 | 60/40 | 73/27 | 82 | 44.2 | 145 | 99.8 | 1568 | 1.6 | 5.5 | <1 |
| 30 | 60/40 | 60/40 | 73/27 | 82 | 45.5 | 261 | 99.95 | 2557 | 1.9 | 3.4 | 1 |
| 31 | 50/50 | 60/40 | 73/27 | 75 | 40.8 | 254 | 99.8 | 1891 | 1.6 | 3.4 | <1 |
| 32 | 50/50 | 60/40 | 73/27 | 82 | 44.6 | 296 | 99.9 | 3254 | 2.6 | 2.7 | 4 |

### Sample 33

Into an agitator equipped reactor containing 475 grams of deionized water (D.I.), 475 grams of isopropyl alcohol, and 456.25 grams of itaconic acid were added under nitrogen atmosphere and mixed at 300 rpms. The contents of the reactor were heated to about 82°C with mixing agitation (300 rpm) under a nitrogen atmosphere for 30 minutes. When the contents of the reactor reached a temperature of approximately 82°C, 37 grams of 4.43% of *t-butyl perpivalate solution* in 1:1 wt/v of deionized water and isopropyl alcohol, 46.8 grams of FF6 solution (6.66% aqueous solution weight/weight), 101.6 grams of sodium persulfate solution (26.7 percent aqueous solution weight/weight), 17.8 grams of 35% $H_2O_2$ were injected into the heated IA solution. Immediately, a metered addition of 26.8 percent sodium persulfate solution (aqueous solution weight/weight) is started at 0.88 mL/minute into the reaction mixture for 105 minutes. Along with metered initiator, the comonomer solution, made from 168.75 grams AA monomer, was also gradually metered (1.86 g/min.) into the reactor over a period of about 90 minutes to react with IA. The temperature of the reaction was maintained at about 82-85°C for an additional four hours to complete the polymerization. The resulting copolymer product was cooled to room temperature and adjusted the product pH to 3.0 - 3.5 with 50% NaOH before discharging from the reactor. The final product was identified as a copolymer of itaconic acid and acrylic acid with partial IPA esterification based on proton NMR (a peak at 1.24 ppm from IPA ester content). Additionally, the final product contained lactone structures (peaks at 1.47 and 1.39 ppm) which can come from both itaconic and acrylic acid.

### Samples 34-43

Polymer samples 34 through 43 were also synthesized as set forth in Sample 33 by varying either monomer or solvent or solvent ratios. The monomer components for these samples were set forth in the Table below. All polymers contained partial esterification and traces of lactone structures on the backbone.

| Partially Esterified Itaconic acid / acrylic acid copolymers in Water / IPA Mixture | | | | | | | | | | | |
|---|---|---|---|---|---|---|---|---|---|---|---|
| Sample ID | Wt% IPA/DIW | Mole % IA/AA | Wt% IA/AA | Temp °C | %TS | Viscosity mPa-s | %Conversion (total, ppm) | Mn | PDI | NTU | Color (Gardner) |
| 33 | 50/50 | 60/40 | 73/27 | 82 | 44.9 | 166 | 99.8 | 1691 | 1.6 | 4 | <1 |
| 34 | 60/40 | 60/40 | 73/27 | 82 | 45.2 | 285 | 99.7 | 2521 | 1.9 | 1.4 | <1 |
| 35 | 50/50 | 60/40 | 73/27 | 75 | 43.4 | 174 | 99.8 | 1952 | 1.7 | 4.2 | <1 |
| 36 | 50/50 | 40/60 | 54.6/45.4 | 75 | 37.9 | 153.6 | 99.99 | 2826 | 2.6 | 5.5 | <1 |
| 37 | 50/50 | 50/50 | 64.4/35.6 | 75 | 42.5 | 242 | 99.99 | 2470 | 2 | 3.1 | <1 |
| 38 | 50/50 | 25/75 | 36.4/63.6 | 75 | 43.1 | 240 | 99.999 | 2938 | 2.8 | 2.9 | <1 |
| 39 | 50/50 | 75/25 | 84.4/15.6 | 75 | 43.3 | 116 | 98.5 | 1586 | 1.6 | 3.5 | 2 |
| 40 | 75/25 | 60/40 | 73/27 | 75 | 44.1 | 177 | 98.8 | 1635 | 1.7 | 5 | 2 |
| 41 | 25/75 | 60/40 | 73/27 | 75 | 44.2 | 310 | 99.999 | 2775 | 1.9 | 3.1 | <1 |
| 42 | 50/50 | 35/65 | | 75 | 42 | 256.8 | 99.98 | 3331 | 2.7 | 4.4 | <1 |
| 43 | 50/50 | 30/70 | 43.8/56.2 | 75 | 42.7 | 290 | | 3248 | 2.8 | | |
| 44 | 50/50 - Ethanol/Water | 40/60 | 54.6/45.4 | 75 | 43 | 330 | | 3882 | 3.3 | | |

**Sample 45**

Into an agitator equipped reactor containing 540 grams of deionized water (D.I.), 339 grams of isopropyl alcohol, and 571.5 grams of itaconic acid were added under nitrogen atmosphere and mixed at 300 rpms. The contents of the reactor were heated to about 82°C with mixing agitation (300 rpm) under a nitrogen atmosphere for 30 minutes. When the contents of the reactor reached a temperature of approximately 82°C, 71.5 grams of FF6 solution (10.0% aqueous solution weight/weight), 133.2 grams of sodium persulfate solution (27.0 percent aqueous solution weight/weight), 15.4 grams of 35% $H_2O_2$ were injected into the heated IA solution. Immediately, a metered addition of 25.1 percent sodium persulfate solution (aqueous solution weight/weight) is started at 1.15 mL/minute into the reaction mixture for 105 minutes. Along with the metered initiator, the comonomer solution, made from 157.5 grams AA monomer and 328.2 grams of AMPS 2403 monomer, was also gradually metered (4.69 g/min.) into the reactor over a period of about 90 minutes to react with IA. The temperature of the reaction was maintained at about 82-85°C for an additional four hours to complete the polymerization and followed by solvent exchange with water at 65°C. The resulting product derived from itaconic acid / acrylic acid / AMPS was cooled to room temperature and adjusted to pH to 3.0 - 3.5 with 50% NaOH before discharging from the reactor. The final product was identified as a terpolymer of itaconic acid, acrylic acid and AMPS with partial IPA esterification based on proton NMR (a peak at 1.24 ppm from IPA ester content). Additionally, the final product contained lactone structures (peaks at 1.47 and 1.39 ppm) which can come from both itaconic and acrylic acid.

**Sample 46**

Polymer sample 46 was also synthesized as set forth in Sample 45 by varying solvent and solvent ratio. The monomer components for these samples are set forth in the Table below. All polymers contained partial esterification and traces of lactone structures on the backbone.

| Partially Esterified Itaconic acid / Acrylic acid/ AMPS Terpolymer in Water / IPA Mixture | | | | | | | | | | | |
|---|---|---|---|---|---|---|---|---|---|---|---|
| Sample ID | Solvent ratio | Mole% IA/AA/ AMPS | Wt% IA/AA/ AMPS | Temp °C | %T S | Viscosity mPa-s | %Conversion (total, ppm) | Mn | PDI | NTU | Color (Gard-ner) |
| 45 | 63/37 | 60/30/10 | 63.5/17.5/19 | 82 | 46.4 | 182 | 99.999 | 2531 | 1.9 | 1.5 | 2 |
| 46 | IPA/DIW 50/50 - Ethanol/ Water | 60/30/10 | 63.5/17.5/19 | 75 | 42.4 | 263 | | 3674 | 2.1 | | |

## Example 3

The calcium binding capacities of the itaconic acid homo polymers at varying pH levels of 11.5, 9.5 and 8.5 were tested. Higher Ca binding numbers are preferred for chelation. The data shows pH plays a role in Ca binding capacities of the polymers. The homopolymers show comparable or improved performance to the comparative polymers and chelators.

Table 4 shows the Ca binding capacities of the homopolymers prepared at varying pH levels. Higher Ca binding capacities are preferred. The polymer of Sample 1 has better Ca binding capacity than commercial itaconic acid polymer CL6.

Table 5 shows the Ca binding capacities of IA-AA copolymers at pH 8.5, 9.5 and 11.5. Sample 5 has much higher binding capacities compared to the comparative sample II at pH 11.5.

Ca binding capacities of commercially available chelators are shown in Table 6.

The chelate precipitation behavior is markedly different depending on the polymer composition. The precipitate from the AA homopolymers (CL1-CL5) after Ca chelation is tacky and gooey, whereas the chelate precipitated from the IA/AA copolymer titration is powdery.

Table 7 shows the Ca binding capacities of IA-AA-AMPS terpolymers. Even though the Ca binding capacities of terpolymers are lower than the IA-AA copolymers at pH 11.5, these polymers have much reduced precipitation after chelation with Ca. Sample 19 has better Ca binding capacity than other terpolymers and IA-AA copolymers at pH 8.5.

**Table 4**

| Sample | Ca Binding, mg of $CaCO_3$/g of polymer | | |
|---|---|---|---|
| | pH 11.5 | pH 9.5 | pH 8.5 |
| 1 | 464.0 | 350.3 | 228.3 |
| CL1 | 287.0 | 155.9 | 180.5 |
| CL2 | 282.7 | 176.4 | 161.8 |
| CL6 | 392.9 | NA | NA |

**Table 5**

| Sample | Ca Binding, mg of $CaCO_3$/g of polymer | | |
|---|---|---|---|
| | pH 11.5 | pH 9.5 | pH 8.5 |
| Comparative Sample II | 320.3 | NA | NA |
| 5 | 670.6 | 178.5 | NA |
| 7 | 500.4 | 407.0 | 231.6 |
| 8 | 558.6 | 400.3 | 171.6 |
| 11 | 614.8 | NA | NA |
| 12 | 557.0 | 314,2 | 248.4 |

The Ca2+ binding capacity at pH 10.5 for partially esterified itaconic acid copolymers are summarized below in the table. All inventive copolymers at pH 10.5 have superior Ca binding capacities compared to commercial PAA polymers (CL1 and CL2). Copolymer samples 1 through 16 showed equal or better performance compared to commercial CL11 and CL12 copolymers.

| Table 5A | |
|---|---|
| **Sample ID** | **mg CaCO3/g of polymer at pH 10.5** |
| **CL11** | **206.77** |
| **CL12** | 255.22 |
| **CL1** | 176.82 |
| **CL6** | 309.64 |
| **CL2** | 149.34 |
| **29** | 263.39 |
| **30** | 297.13 |
| **31** | **340.92** |
| **32** | **312.77** |
| **33** | 272.46 |
| **34** | 280.84 |
| **35** | 351.92 |
| **36** | 288.48 |
| **37** | 297.2 |
| **38** | 227.69 |
| **39** | **241.24** |
| **40** | **233.53** |
| **41** | 271.66 |
| **42** | 289.4 |
| **43** | 265.1 |
| **44** | 266.9 |
| **45** | 189.05 |

**Table 6 Commercial Chelators**

| **Sample** | **Ca Binding, mg of $CaCO_3$/g of polymer** | | |
|---|---|---|---|
| | **pH 11.5** | **pH 9.5** | **pH 8.5** |
| **STPP** | 479.5 | 387.4 | 274.5 |
| **CL7** | 284.8 | NA | NA |
| **CL8** | 228.1 | NA | NA |
| **Citric Acid** | NA | 127.28 | NA |
| **EDTA** | NA | 249.05 | NA |

**Table 7**

| **Sample** | | |
|---|---|---|
| | **pH 11.5** | **pH 8.5** |
| **19** | 368.2 | 252.9 |
| **20** | 315.9 | NA |
| **21** | 265.9 | 198.7 |
| **22** | 258.8 | 155.2 |

**Example 4 - Auto-Dishwashing formulations:**

4A. Liquid Automatic Dishwashing Detergent Gel

Formulations D1-D6 listed in Tables 8 and 9 are various formulations of liquid automatic dishwashing detergent. Table 8 contains formulations with bleach. Table 9 contains formulations with enzymes. These formulations are prepared by the following general process:

1) Add water to a mixing tank
2) Sifting in Carbopol Polymer 676 while mixing until hydrated
3) Add the comparative or inventive chelator while mixing
4) Add NaOH solution while mixing
5) Add sodium carbonate, sodium bicarbonate, sodium sulfate, sodium citrate, propylene glycol, and sodium silicate while mixing
6) Add Sodium Hypochlorite if needed
7) Premix $CaCl_2$ solution with enzymes and add the premix to the tank while mixing, where enzymes are employed
8) Post dose corresponding bleach system and enzyme(s) and miscellaneous. Follow by a quick mixing to ensure the well distribution of ingredients.

Automatic dish liquid (ADL) formulations in Table 8 are prepared by using 2.0 - 5.0 weight % of the polymer active or benchmark builders and 1 weight % chlorine.

Table 8

| Chemical | Function | D1 | D2 | D3 | D4* | D5 | D6 |
|---|---|---|---|---|---|---|---|
| Chelator Type | | Sam-ple 7 | Sampl e 8 | CL 6 | CL3+CL 9 | Sampl e 8+CL 9 | Sampl e 19 |
| Total Chelator actives, wt% | | 5 | 3.5 | 3.5 | 3.5 | 2.5 | 2 |
| Sample 7 (43.1%) | Polymer Builder | 11.6 | 0 | 0 | 0 | 0 | 0 |
| Sample 8 (43.5%) | Polymer Builder | 0 | 8.06 | 0 | 0 | 2.87 | 0 |
| CL6 | Polymer Builder | 0 | 0 | 4.1 2 | 0 | 0 | 0 |
| CL3 (50%) | Polymer Builder | 0 | 0 | 0 | 3.5 | 0 | 0 |
| Sample 19 (50%) | Polymer Builder | 0 | 0 | 0 | 0 | 0 | 4.0 |
| CL9 (50%) | Anti-filming polymer | 0 | 0 | 0 | 3.5 | 2.5 | 0 |
| Carbopol® 676 Polymer | Rheology Modifier | 1 | 1 | 1 | 1 | 1 | 1 |
| Sodium Hydroxide (50%) | Neutralizer | 8 | 7.5 | 4.5 | 8 | 8 | 7.5 |
| Sodium Carbonate (260-dense) | Builder | 8.5 | 8.5 | 8.5 | 8.5 | 8.5 | 8.5 |
| Sodium Silicate (RU) | Builder | 20 | 20 | 20 | 20 | 20 | 20 |
| Chemoxide LO | Surfactant | 0 | 0 | 0 | 0 | 0 | 0 |
| Sodium Hypochlorite (9.63%) | Disinfectant | 10.4 | 10.38 | 10 | 10.4 | 10.4 | 10.38 |
| Total (q.s. water) | | 100 | 100 | 100 | 100 | 100 | 100 |

*The formulation separated in 48 h, yet was used in performance testing by mixing well before each cycle.

Table 9

| Examples | D7 | D8 |
|---|---|---|
| Water | 53.6 | 53.6 |
| Carbopol 676 | 1 | 1 |
| Sample 7 | | 12 |
| Sample 8 | 12 | |
| 50% NaOH | 0.4 | 0.4 |
| Triethanolamine | 12 | 12 |
| Sodium sulfate | 8 | 8 |
| Sodium citrate | 5 | 5 |
| Propylene Glycol | 5 | 5 |
| $CaCl_2$ solution (0.1%) | 0.5 | 0.5 |
| Amylase[1] | 1.5 | 1.5 |
| Ptotease[1] | 0.5 | 0.5 |
| MISC | 0.5 | 0.5 |

1 Suitable amylases can be purchased from Novozymes, e.g. amylase sold under tradename Stainzyme Plus® or from Genencor, sold under tradename Powerase®.

Dishwashing Test using ADL (Automatic Dishwashing Liquid) - US Conditions

ADLs containing copolymers are selected for testing the ability to prevent spotting and filming on glassware and plasticware during machine dishwashing in 300 ppm water. The testing is done according to "CMSA Detergents Test Methods Compendium" Third Edition, 1995; ASTM D3556-85(2009) "Standard Test Method for Deposition on Glassware during Mechanical Dishwashing", as described below.

**Apparatus:** Clear Undecorated Glass Tumblers (4), Clear Undecorated Plastic Tumblers (4), Dinner Plates, 10 inch diameter (6), Saucers, 7 inch diameter (4), Knives (6), Forks (6), Spoons (6), Nonfat Powdered Milk, Margarine, Automatic Dishwasher, Laboratory Scale (sensitivity 0.1 grams), Citric Acid, Calcium chloride solution. All the articles are cleaned well and ensured to be spot-free before starting a new test.

**Procedure:** The soil is composed of 80% margarine and 20% powdered milk. The margarine is warmed until fluid (not over 100°F). Powdered milk is slowly sifted into the melted margarine and mixed thoroughly. 5 grams of soil is distributed on each of the 6 dinner plates by smearing it around with fingers or a spatula. In the lower rack of the dishwasher, 6 soiled dinner plates and the 4 saucers are evenly distributed. In the upper rack the tumblers are distributed evenly. All silverwares are placed in holding rack. The main dishwasher cup is filled with 60 grams of detergent and prewash cup is filled with 18 grams of detergent. The dishwasher is started to run on Normal Cycle using hot water (52° Celsius). After the wash is completed, the glass and plastic tumblers are removed while wearing gloves and checked in a specially made light box for spots and film. A system determined by the method rates the tumblers for spots and film:

| Rating* | Spotting | Filming |
|---|---|---|
| 1 | No spots | None |
| 2 | Random spots | Barely perceptible |
| 3 | About 1/4 of surface covered | Slight |
| 4 | About 1/2 of surface covered | Moderate |
| 5 | Virtually completely covered | Heavy |

* Taken from CSMA Detergents Division Test method Compendium - Third Edition - 1995 - p. 1-6. The test is repeated 5 times with each ADL using the same set of articles. Lower rating indicates better performance in a particular attribute.

Table 10 shows the spotting and filming ratings on the glass tumblers after the fifth wash cycle in 300 ppm hard water.

| Table 10 | | | | | | |
|---|---|---|---|---|---|---|
| | | | Glass | | Plastic | |
| **ADL formulation** | **Chelator** | **Chelator Concentration in ADL, %** | **Spotting** | **Filming** | **Spotting** | **Filming** |
| | | | Wash 5 | Wash 5 | Wash 5 | Wash 5 |
| **D1** | Sample 7 | 5 | 2 | 1 | 2 | 1 |
| **D2** | Sample 8 | 3.5 | 2.1 | 2 | 2.1 | 2 |
| **D3** | CL6 | 3.5 | 2.75 | 2.5 | 2.75 | 2.5 |
| **D4*** | CL3+CL9 | 3.5 | 1.5 | 5 | NA | NA |
| **D5*** | Sample 8+CL9 | 2.5 | 1 | 3.5 | NA | NA |
| **D6*** | Sample 19 | 2 | 1 | 3.5 | NA | NA |

*tested using 45 mL total detergent in the main wash and no pre-wash

Table 10 shows that the auto-dishwashing performance of chlorine gel formulation (D5) with 2.5% Sample 8/CL9 combination is better than gel (D4) with 3.5% CL3+CL9 combination on plastic and glass. The performance of gel with 2% Sample 19 is significantly better than the D4 gel with 3.5% CL3+CL9 combination under similar conditions.

From the above tables, it is evident that the performance of the ADL formulation in dishwasher tests at 300 ppm is affected by the chelator type and use level. The improved copolymer of the present technology show significantly better performance on glass and plastic in comparison to the comparative sample of CL6 in D3 at 3.5% use level. The performance on glass is superior to plastic with barely visible spotting and filming after 4 or 5 wash cycles.

4B Automatic Dishwashing Detergent Powder

Formulations D7-D12 listed in Table 11 are various formulations of automatic dishwashing detergent powder containing with or without enzymes. These formulations are prepared by the following process:

1) Add the sodium carbonate and sodium sulfate into a granulator. A food processor is used for these examples.
2) Gradually add copolymer of IA-AA (Sample 7 or Sample 8) from present invention into the selected granulator under operating condition until reaching the desire particle size
3) Add sodium silicate powder
4) Add SLF-18 and follow by a quick mixing
5) Optional to dry and/or screen the granules
6) Post dose corresponding bleach system and enzyme(s) and miscellaneous. Follow by a quick mixing to ensure the well distribution of ingredients.

| TABLE 11 (wt. %) | | | | | | |
|---|---|---|---|---|---|---|
| Samples | **D7** | **D8** | **D9** | **D10** | **D11** | **D12** |
| Sodium carbonate | 55 | 49 | 51 | 55 | 53 | 53 |
| **Sample 7** | | 12 | | 18 | 16 | |
| **Sample 8** | 18 | | 14 | | | 16 |
| Sodium silicate powder | 7 | 7 | 7 | 1.5 | 5 | 5 |
| SLF18 | 1.5 | 1.5 | 1.5 | | 3 | 3 |
| Sodium percarbonate | 15 | 15 | 15 | 11 | | |
| TAED | 0.5 | 0.5 | 0.5 | 3.8 | | |
| Bleach catalyst (1% active) | 0.5 | | 0.5 | 0.6 | | |
| CDB Clearon | | | | | 5 | 5 |
| CL11 | | | | | 2 | 2 |
| Amylase[1] | 1.3 | 1.8 | 1.5 | 0.7 | | |
| Sodium sulfate | 1 | 12.7 | 8.5 | 9 | 15.5 | 15.5 |
| MISC | 0.2 | 0.5 | 0.5 | 0.4 | 0.5 | 0.5 |

1 Suitable amylases can be purchased from Novozymes, e.g. amylase sold under tradename Stainzyme Plus® or from Genencor, sold under tradename Powerase®.

4C Liquid Automatic Dishwashing Detergent Tablet

Formulations D13-D16 listed in Table 12 are various formulations of liquid automatic dishwashing detergent tab with or without enzymes. These formulations are prepared by the following process:

1) Mix dipropylene glycol, SLF-18, glycerin, amine oxide till homogeneous
2) Add IA-AA copolymer from present invention while mixing
3) Sifting Carbopol Polymer 674 while mixing until hydrated
4) Add Triethanol amine while mixing
5) Add the all the rest ingredients and mix well.
6) Fill the PVA pouches with 20 grams of product

| Table 12 (wt. %) | | | | |
|---|---|---|---|---|
| Sample | **D13** | **D14** | **D15** | **D16** |
| Dipropylene glycol | 34 | 34 | 32 | 30 |
| SLF18 | 34 | 34 | 32 | 10 |
| Glycerin | 4 | 4 | 2 | 4 |
| Amine Oxide | 1 | 1 | 1 | 1 |
| **Sample 7** | | 12 | | 20 |
| **Sample 8** | 12 | | 15 | |
| Triethanol amine | 12 | 12 | 15.5 | 21 |
| Carbopol 674 | 0.5 | 0.5 | | 0.5 |
| CL11 | | | | 1 |
| Amylase[1] | 1.5 | 1.5 | 2.0 | 2.0 |
| Protease[1] | 0.5 | 0.5 | | |
| Sodium sulfate | | | | 10 |
| MISC | 0.5 | 0.5 | 0.5 | 0.5 |

[1] Suitable amylases can be purchased from Novozymes, e.g. amylase sold under tradename Stainzyme Plus® or from Genencor, sold under tradename Powerase®.

Further unit-dose automatic dish powders were prepared by dry-blending the ingredients shown in table 13. Plurafac SLF 180 being a liquid was pre-blended with sodium carbonate and sodium sulfate. When liquid builders were used, the amount was calculated based on active level desired in the formulation.

Table 13

| Ingredient | Function | Powder Number (#P1-P6 for effect of Sample 27b use level on performance) wt (g) | | | | | |
|---|---|---|---|---|---|---|---|
| | | P1 | P2 | P3 | P4 | P5 | P6 |
| Sodium citrate, chemistry connection | Builder | 3 | 3 | 3 | 6 | 6 | 6 |
| Sodium carbonate, dense 260, FMC | Buffer | 3 | 3 | 3 | 3 | 3 | 3 |
| Plurafac SLF 180, BASF | Nonionic surfactant | 0.6 | 0.6 | 0.6 | 0.6 | 0.6 | 0.6 |
| Sodium percarbonate, Aldrich | Bleach | 2.4 | 2.4 | 2.4 | 2.4 | 2.4 | 2.4 |
| TAED, 90%, Acros | Bleach Activator | 0.4 | 0.4 | 0.4 | 0.4 | 0.4 | 0.4 |
| Sodium Disilicate, Britesil H20, PQ | Corrosion inhibitor | 0.6 | 0.6 | 0.6 | 0.6 | 0.6 | 0.6 |
| Savinase 6.0T, Novozymes | Protease enzyme | 0.1 | 0.1 | 0.1 | 0.1 | 0.1 | 0.1 |
| Termamyl 120T, Novozymes | Amylase enzyme | 0.1 | 0.1 | 0.1 | 0.1 | 0.1 | 0.1 |
| Sample 27b ( 93.1%) | Polymer builder | 0.6 | 1.6 | 2.6 | 0.6 | 1.6 | 2.6 |
| Sodium Sulfate, Mallinckrodt | Filler | 9.2 | 8.2 | 7.2 | 6.2 | 5.2 | 4.2 |
| Total | | 20 | 20 | 20 | 20 | 20 | 20 |

**Auto dish performance testing (European conditions):**

The unit dose formulations were tested in GE dishwashing machines using 400 ppm hard water. The temperature of water supplied to the dishwasher was 48-52 °C. The calcium:magnesium ion ratio was 2:1 in the hard water. The dishwasher was loaded with clean glasses and plastic cups, 6 plates, 4 saucers and silverware (4 spoons, 4 forks, 4 knives).

1) 25 grams of the IKW ballast soil (DM-SBL from CFT) was taken in a watch glass, and placed on the top rack of the dishwasher.
2) 1 detergent dose was placed in the detergent compartment.
3) 'Normal' cycle with 'Heated Dry' option was selected.
4) After each wash, photos of all cups were taken in a light box and the cups were ranked for spotting and filming as per the procedure set forth above for the automatic dishwasher liquid.
5) The same dishwasher was used to complete all 5 wash cycles with a formulation.
6) After the wash was completed, the glass and plastic tumblers were removed while wearing gloves and checked in a specially made light box for spots and film. A system determined by this method rates the tumblers for spots and film:

| Rating* | Spotting | Filming |
|---|---|---|
| 1 | No spots | None |
| 2 | Random spots | Barely perceptible |
| 3 | About 1/4 of surface covered | Slight |
| 4 | About 1/2 of surface covered | Moderate |
| 5 | Virtually completely covered | Heavy |

* Taken from CSMA Detergents Division Test method Compendium - Third Edition - 1995 - p. I-6.
The test is repeated 5 times with each ADW unit-dose using the same set of articles. The data reported in the tables below are the sum of the spotting and filming ranks. Lower rating indicates better performance in a particular attribute.

Table 14 has the sum of spotting and filming ranks of glass and plastic after 5 washes for powder formulations P1-P6 (unit dose size = 20 g).

| Table 14. Auto-dish performance results after 5 washes for the formulations shown in table 19 | | | | |
|---|---|---|---|---|
| Powder | Citrate, wt% | Sample 27b,wt% | Glass (Spotting+Filming Rank) | Plastic (Spotting+Filming Rank) |
| P1 | 15% | 3 | 5.583 | 7.5 |
| P2 | | 8 | 4.917 | 5 |
| P3 | | 13 | 3.834 | 5 |
| P4 | 30% | 3 | 6 | 6.5 |
| P5 | | 8 | 4.583 | 5.875 |
| P6 | | 13 | 3.25 | 5.875 |

Table 14 shows that for standard auto dish formulation chassis containing 15 or 30% sodium citrate, the spotting and filming performance improves with increasing Sample 27b from 3 to 13%.

| Table 15 15% Citrate, 3% polymer | | | |
|---|---|---|---|
| Ingredient | Function | P1 | Comparative for P1 – ("CP1") |
| Sodium citrate | Builder | 3 | 3 |
| Sodium carbonate, dense 260, FMC | Buffer | 3 | 3 |
| Plurafac SLF 180, BASF | Nonionic surfactant | 0.6 | 0.6 |
| Sodium percarbonate, Aldrich | Bleach | 2.4 | 2.4 |
| TAED, 90%, Acros | Bleach Activator | 0.4 | 0.4 |
| Sodium Disilicate, Britesil H20, PQ | Corrosion inhibitor | 0.6 | 0.6 |
| Savinase 6.0T, Novozymes | Protease enzyme | 0.1 | 0.1 |
| Termamyl 120T, Novozymes | Amylase enzyme | 0.1 | 0.1 |
| CL4 | Polymer builder | 0 | 0.3 |
| CL9 | Anti-filming polymer | 0 | 0.3 |
| Sample 27b, (93.1%) | Polymer builder | 0.6 | 0 |
| Sodium Sulfate, Mallinckrodt | Filler | 9.2 | 9.2 |
| Total | | 20 | 20 |

| Table 16. 15% Citrate, 3% polymer | | | |
|---|---|---|---|
| Powder | Builder polymer | Glass (Spotting+Filming) | Plastic (Spotting+Filming) |
| P1 | Sample 27b | 5.583 | 7.5 |
| CP1 (Comparative example for #1) | CL4+CL9 | 5.92 | 8 |

Performance of formula P1 with sample 27b as shown in tables 15 and 16 is better than the CP1 formula with CL4 (acrylate polymer builder) and CL9 (anti-filming polymer) for spotting and filming on glass and plastic.

Table 17. 30% Citrate, 13% polymer

| Ingredient | Function | P6 | Comparative – CP6A | Comparative – CP6B |
|---|---|---|---|---|
| Sodium citrate | Builder | 6 | 6 | 6 |
| Sodium carbonate, dense 260, FMC | Buffer | 3 | 3 | 3 |
| Plurafac SLF 180, BASF | Nonionic surfactant | 0.6 | 0.6 | 0.6 |
| Sodium percarbonate, Aldrich | Bleach | 2.4 | 2.4 | 2.4 |
| TAED, 90%, Acros | Bleach Activator | 0.4 | 0.4 | 0.4 |
| Sodium Disilicate, Britesil H20, PQ | Corrosion inhibitor | 0.6 | 0.6 | 0.6 |
| Savinase 6.0T, Novozymes | Protease enzyme | 0.1 | 0.1 | 0.1 |
| Termamyl 120T, Novozymes | Amylase enzyme | 0.1 | 0.1 | 0.1 |
| CL4 | Polymer builder | 0 | 1.3 | 0 |
| CL9 | Anti-filming polymer | 0 | 1.3 | 0 |
| Sample 27b, (93.1%) | Polymer builder | 2.6 | 0 | 0 |
| CL6 | Polymer builder | 0 | 0 | 2.6 |
| Sodium Sulfate, Mallinckrodt | Filler | 4.2 | 4.2 | 4.2 |
| Total | | 20 | 20 | 20 |

Table 18. 30% Citrate, 13% polymer

| Powder | Builder polymer | Glass (Spotting+Filming) | Plastic (Spotting+Filming) |
|---|---|---|---|
| P6 | Sample 27b | 3.25 | 5.875 |
| CP6A | CL4+CL9 | 5.25 | 5.25 |
| CP6B | CL6 | 6.5 | 6.5 |

Based on the formulations and data in tables 17 and 18, P6 has better performance for filming and spotting on glass; and for spotting on plastic compared to CP6A which contains CL4+CL9 at 13% level. It also has better performance compared to the comparative formulation CP6B containing CL6.

Table 19 shows comparative formulations CP3a to CP3e containing 13% comparative builders and 0.3% CL13. CL13 was incorporated as a polymeric anti-redisposition agent. The formulations were comparative examples for P3 which is a formulation with 13% Sample 27B and 15% citrate.

Table 19. Comparative formulation examples containing competitive builders for testing dishwashing performance.

| Ingredient/wt, g | Function | P3 | Comparative Examples for CP3a to CP3e |
|---|---|---|---|
| Builder | | Sample 27B | Comparative material |
| Sodium citrate | Builder | 3 | 3 |
| Chelator amount | Polymeric builder | 2.6 | 2.6 |
| CL13 | Anti-filming polymer | 0 | 0.06 |
| Sodium carbonate, dense 260, FMC | Buffer | 3 | 3 |
| Plurafac SLF 180, BASF | Nonionic surfactant | 0.6 | 0.6 |
| Sodium percarbonate, Aldrich | Bleach | 2.4 | 2.4 |
| TAED, 90%, Acros | Bleach Activator | 0.4 | 0.4 |
| Sodium Disilicate, Britesil H20, PQ | Corrosion inhibitor | 0.6 | 0.6 |
| Savinase 6.0T, Novozymes | Protease enzyme | 0.1 | 0.1 |
| Termamyl 120T, Novozymes | Amylase enzyme | 0.1 | 0.1 |
| Sodium Sulfate, Mallinckrodt | Filler | 7.2 | 7.14 |
| Total | | 20 g | 20 g |

Table 20. Spotting and filming results on glass and plastic after 5 washes in automatic dishwashing performance test using formulations in Table 19. (Comparative examples for P3)

| | Technology | Comparative Builders | | | | |
|---|---|---|---|---|---|---|
| | P3 | CP3a | CP3b | CP3c | CP3d | CP3e |
| Builder | 27b | CL5 | CL6 | CL14 | EDDS | CL13 |
| Glass (Spotting+Filming) | 3.834 | 7 | 6 | 5.42 | 5.75 | 7.33 |
| Plastic (Spotting+Filming) | 5 | 9.5 | 9.5 | 9 | 9 | 8.25 |

Tables 19 and 20 show that the P3 formulation with 13% Sample 27B is superior in auto-dishwashing performance compared to the CP3a to CP3e comparative builders. It is expected that addition of anti-redeposition polymer CL13 could enhance the performance in dishwasher. But the combination of builders with CL13 did not show improvement over a similar formulation containing only Sample 27B as multi-functional builder.

| Table 21. Solvent polymerized copolymer vs. CL6 | | | |
|---|---|---|---|
| Ingredient/wt, g | Function | Sample 45 – ("P7") | CL6 ("CP7") |
| Sodium citrate | Builder | 3 | 3 |
| Chelating polymer | Polymer builder | 2.6 (Sample 45) | 2.6 (CL6) |
| CL13 | Anti-filming polymer | 0 | 0.06 |
| Sodium carbonate, dense 260, FMC | Buffer | 3 | 3 |
| Plurafac SLF 180, BASF | Nonionic surfactant | 0.6 | 0.6 |
| Sodium percarbonate, Aldrich | Bleach | 2.4 | 2.4 |
| TAED, 90%, Acros | Bleach Activator | 0.4 | 0.4 |
| Sodium Disilicate, Britesil H20, PQ | Corrosion inhibitor | 0.6 | 0.6 |
| Savinase 6.0T, Novozymes | Protease enzyme | 0.1 | 0.1 |
| Termamyl 120T, Novozymes | Amylase enzyme | 0.1 | 0.1 |
| Sodium Sulfate, Mallinckrodt | | 7.2 | 7.14 |
| Total | Filler | 20 g | 20 g |

| Table 22. Spotting and filming performance of ADW powder with Sample 45 and CL6 after 5 dishwashing cycles. | | |
|---|---|---|
| Competitive Benchmarking | P7 (Sample 45) | CP7 (CL6) |
| Glass (Spotting+Filming) | 5.17 | 7 |
| Plastic (Spotting+Filming) | 6.5 | 9.5 |

Tables 21 and 22 show that ADW powder formulation with Sample 45 provides better spotting and filming performance on glass compared to a formula with commercially available CL6.

The formulations in table 23 were prepared by dry-blending the ingredients. Commercially available polymer builder solutions were spray dried to create a fine powder of the polymer for incorporation into the formula.

| Table 23. Dishwashing prototypes for multi-cycle filming test | | | | | | |
|---|---|---|---|---|---|---|
| Ingredient/Wt% | P8 | P9 | P10 | P11 | P12 | CP8 |
| Sodium citrate, chemistry connection | 30 | 30 | 30 | 30 | 30 | 30 |
| CL7 | 0 | 0 | 3 | 0 | 0 | 0 |
| Sodium carbonate, dense 260, FMC | 15 | 15 | 15 | 15 | 15 | 15 |
| Plurafac SLF 180, BASF | 5 | 5 | 5 | 3 | 3 | 5 |
| Sodium percarbonate, Aldrich | 12 | 12 | 12 | 12 | 12 | 12 |
| TAED, 90%, Acros | 2 | 2 | 2 | 2 | 2 | 2 |
| Sodium Disilicate, Britesil H20, PQ | 3 | 3 | 3 | 3 | 3 | 3 |
| Savinase 6.0T, Novozymes | 0.5 | 0.5 | 0.5 | 0.5 | 0.5 | 0.5 |
| Termamyl 120T, Novozymes | 0.5 | 0.5 | 0.5 | 0.5 | 0.5 | 0.5 |
| Sample 27b | 8 | 0 | 0 | 8 | 20 | 0 |
| Sample 27a | 0 | 8 | 8 | 0 | 0 | 0 |
| CL10 | 0 | 0 | 0 | 0 | 0 | 8 |
| Dequest 2016D | 1 | 1 | 1 | 0 | 0 | 1 |
| Sodium Sulfate, Mallinckrodt | 23 | 23 | 20 | 26 | 14 | 23 |
| Total, Wt% | 100 | 100 | 100 | 100 | 100 | 100 |

Autodish powder formulations P8-P12 are examples of high performance formulations for European dishwashing conditions. P8 and P9 were formulations with inventive polymers and citrate with 5% nonionic surfactant. P10 was a formulation containing the inventive polymer in combination with citrate and CL7. P11 is an example containing the inventive polymer and citrate with reduced level of nonionic surfactant and no phosphonate. P12 contains inventive polymer (Sample 27b) at 20% use level and no phosphonate. CP8 is a comparative example for P8, with CL10. These examples and the results in Table 24 help demonstrate the various combinations of commonly used ingredients with the inventive polymer to achieve improved cleaning performance on various substrates in multi-cycle filming tests.

Multi-cycle filming test were performed on each prototype using 20 g of unit-dose per dishwashing cycle. Fresenius Standard Method Method 2009 Version 01 was used for testing the prototypes in Miele continuous machine. The water hardness was 21 °d and temperature was 65 °C. 50 g of a standard frozen ballast soil comprising of tomato ketchup, mustard gravy, potato starch, benzoic acid, egg yolk, margarine, milk and water was used in every wash. The machine was loaded with glasses, melamine and glass plates and stainless steel cutlery. Each prototype was evaluated in 30-wash cycle test and filming was evaluated on glass, cutlery and plates after every 10, 20 and 30 wash cycles using the 8 point grading scale, where 8 indicates no filming and 1 indicates very strong filming.

| Table 24 has the average filming results after 10, 20 and 30 wash cycles | | | | | | | | | | | | |
|---|---|---|---|---|---|---|---|---|---|---|---|---|
| Prototype | Glass | | | Melamine Plate | | | Glass Plate | | | Stainless Steel Cutlery | | |
| | 10 wash | 20 wash | 30 wash | 10 wash | 20 wash | 30 wash | 10 wash | 20 wash | 30 wash | 10 wash | 20 wash | 30 wash |
| P8 | 5 | 4.7 | 4 | 6 | 6 | 6 | 5 | 4 | 4 | 6 | 5 | 5 |
| P9 | 4.1 | 3.4 | 3.1 | 8 | 7 | 5 | 6 | 5 | 3 | 7 | 5 | 5 |
| P10 | 4.5 | 4.2 | 3.4 | 7 | 6 | 4 | 5 | 5 | 4 | 5 | 4 | 3 |
| P11 | 4.8 | 4.3 | 3 | 6 | 5 | 2 | 6 | 5 | 2 | 6 | 4.5 | 3.5 |
| P12 | 4.4 | 3.9 | 3.6 | 6 | 5 | 3 | 5 | 4 | 4 | 5 | 4.5 | 4.5 |
| CP8 | 4.6 | 3.7 | 3.4 | 7 | 6 | 5 | 4 | 3 | 3 | 6 | 5 | 4 |
| *Finish® Powerball All-in-1 (Spain) | 6 | 5.2 | 2 | 7 | 5 | 1 | 8 | 7 | 3 | 7 | 6 | 4 |
| *Lidl W5 (Belgium) | 5.2 | 3 | 2 | 7 | 6 | 5 | 6 | 4 | 2 | 7 | 4 | 2 |

*Commercial finished products

The results in Table 24 show that the prototype formulations perform better than commercial finished products after 30 wash cycles. Also, P8 performs better than CP8 after 10, 20 and 30 wash cycles on glass cups and plates.

**Enzyme Gel Formulations**

Enzyme containing auto-dishwashing gel was prepared using the formulation in Table 25.

Table 25. Enzyme containing auto-dishwashing gel – "E1"

| Ingredient | Function | Wt% |
|---|---|---|
| Initial water | Diluent | 59 |
| Carbopol 690 | Rheology modifier | 1.5 |
| Sample 26 | Polymer builder | 6.84 |
| NaOH to pH 8.5 | Neutralizer/pH adjuster | 3.35 |
| Sodium Citrate | Builder | 20 |
| Sodium silicate RU | Corrosion inhibitor | 1 |
| Citric acid (50%) to pH 8.5 | pH adjuster | 0.35 |
| Glycerin | Hydrotrope | 2 |
| Plurafac SLF 180 | Nonionic surfactant | 2 |
| Savinase Ultra | Protease enzyme | 1 |
| Termamyl 330 L DX | Amylase enzyme | 1 |
| Water | Diluent | q.s. 100 |
| Total | | 100 |

The enzyme gel from table 25 was tested in 400 ppm hard water using IKW ballast soil. The spotting and filming rank after 5 wash cycles is shown in table 26 (lower number is better).

Table 26.Spotting and filming performance on glass and plastic after 5 wash cycles

| | E1 | Enzyme Product with CL8 |
|---|---|---|
| Glass (Spotting+Filming) | 4.83 | 7.5 |
| Plastic (Spotting+Filming) | 5 | 7.5 |

Table 26 shows the ADW wash performance of E1 from table 25 in comparison to a similar enzyme dishwashing product containing CL8.

**Powder ADW Formulation for efficient Tea Stain Removal**

Unit-dose automatic dish powders were prepared by dry-blending the ingredients shown in table 27. Plurafac SLF 180 being a liquid was pre-blended with sodium carbonate and sodium sulfate.

**Table 27.**

| Ingredients | P14 | P15 | CP14 | CP15 |
|---|---|---|---|---|
| | Wt, g | Wt, g | Wt, g | Wt, g |
| Sodium citrate | 6 | 6 | 5.4 | 5.4 |
| CL7 | 0 | 0 | 1.6 | 1.6 |
| Sodium carbonate, dense 260, FMC | 3 | 3 | 3 | 3 |
| Plurafac SLF 180, BASF | 1 | 1 | 1 | 1 |
| Sodium percarbonate, Aldrich | 2.4 | 2.4 | 2.4 | 2.4 |
| MnOx, Clariant | 0.11 | 0 | 0.11 | 0 |
| MnTACN, Clariant | 0 | 0.0075 | 0 | 0.0075 |
| Sodium Disilicate, Britesil H20, PQ | 0.6 | 0.6 | 0.6 | 0.6 |
| Savinase 6.0T, Novozymes | 0.1 | 0.1 | 0.1 | 0.1 |
| Termamyl 120T, Novozymes | 0.1 | 0.1 | 0.1 | 0.1 |
| Sample 27b | 1.6 | 1.6 | 0 | 0 |
| CL9 | 0 | 0 | 0.6 | 0.6 |
| Dequest 2016D | 0.2 | 0.2 | 0.2 | 0.2 |
| Sodium Sulfate, Mallinckrodt | 4.6 | 4.6 | 4.6 | 4.6 |
| Total, g | 20 | 20 | 20 | 20 |

**Tea-stain removal method:** Standard pre-stained tea panels (DM-11 from Center for Testmaterials (CFT, The Netherlands) were used for this test. The unit dose formulations were tested in GE dishwashing machines using 400 ppm hard water. The temperature of water supplied to the dishwasher is 48-52 °C. The calcium:magnesium ion ratio was 2:1 in the hard water. The dishwasher was loaded with clean glass and plastic cups, 6 plates, 4 saucers and silverware (4 spoons, 4 forks, and 4 knives)

1) The L*, a*, b* color values of the tea panels were measured before using a Hunter Colorimeter.
2) 1 tea-stained panel was placed in the top rack of the dishwasher.
3) 25 grams of the IKW ballast soil (DM-SBL from CFT) was taken in a watch glass, and placed on the top rack of the dishwasher.
4) 1 detergent dose was placed in the detergent compartment.
5) 'Normal' cycle with 'Heated Dry' option was selected and the dishwasher was started.
6) After the wash, the L*, a*, b* values were measured using Hunter Colorimeter.
7) Each formulation was tested 3 times using above steps with a new tea-stained panel each time.

The stain removal of index for each panel was calculated using the following equation:

$$RI = \sqrt{[(L_i - L_f)^2 + (a_i - a_f)^2 + (b_i - b_f)^2]}$$

where RI = Tea Stain removal index and subscripts *i* and *f* denote initial and final L*, a*, b* readings from Hunter colorimeter. Table 34 shows the average stain removal of each formulation.

**Table 28**

| Formulation | Average Stain removal index | Standard deviation |
|---|---|---|
| P14 | 12.7985 | 0.9249 |
| P15 | 18.9306 | 0.9963 |
| CP14 | 9.63079 | 0.7557 |
| CP15 | 17.5926 | 0.6402 |

Tables 27 and 28 show that use of Mn-based bleach catalyst with sodium percarbonate in the formulation efficiently removes the tea-stain from panels in the dishwasher. The tea stain removal from formulations with MnOx (P14, CP14) and MnTACN (P15 and CP15) indicate that the stain removal is better when Sample 27b is present in the formulation as the builder versus CL7 builder.

**Color Care in Dishwasher:**

It is desirable that prolonged use of auto-dishwashing detergent does not decay or damage the colorful designs on the glass cups. Some builders can cause fading or spotting of the colors which can become evident after continuous use for 50, 100 or 200 dishwashing cycles. The color care property of the inventive polymer and CL7 as comparative material was determined using the following method:

1.) 1% solution of the chelator was prepared in deionized water. Sample 27b and CL7 powder were used.
2.) 2 identical glass cups with exactly same colored design of red, yellow, orange and green stripes are cleaned with mild soap and water. The cups were 5 inches tall.
3.) Each cup was soaked in 1 L of chelator solution in a beaker. The beakers were placed in 45 °C oven for 5 days. These conditions were meant to accelerate the damaging effects of the builder/chelator.
4.) After 5 days, the cups were removed from each solution, rinsed with water and analyzed visually and by light microscopy. Thin polymeric coating was peeled off of the colored stripes and analyzed using Scanning electron microscopy (SEM) and by Energy dispersive X-ray spectroscopy (EDS).

Table 29 summarizes the visual and microscopy analysis of the glass cup surfaces soaked in aqueous solution of CL7 and the inventive copolymer 27b after 5 days at 45 °C.

| Table 29 | | |
|---|---|---|
| Analysis | 1% chelator solution | |
| | Sample 27b | CL7 (Comparative) |
| Visual appearance | Stripes with Vivid colors | Stripes with numerous pits/spots |
| Light microscopy | Polymeric coating on colored stripes intact | Polymeric coating on colored stripes disadhered |
| SEM/EDS | Very few spots of pigments on the film | Large area of pigments on the film. Metals detected by EDS: |
| | | Red stripe- Selenium, Cadmium |
| | | Green stripe- Cobalt, Nickel, Zinc |
| | | Yellow stripe- Selenium, Cadmium |
| *A slice of film which was not covering the pigmented stripe was also analyzed by EDS as a baseline and was found to be clean without any pigment or metal in the that film. | | |

The microscopy and elemental analysis confirms the color corrosion ability of CL7 by interacting with pigments and/or metals in the pigments. The inventive copolymer 27b is significantly milder on color which can translate to durability of colored designs after prolonged use in dishwasher.

## Example 5 - Hard Surface Cleaner

Hard Surface Cleaner: The improved copolymers of the present invention can be used as a chelating agent in a hard surface cleaner as shown in Table 30. The formulation is prepared by the following process.

In deionized water, Novethix L-10 polymer is added and mixed well. Sample 7 polymer is added and the formulation is neutralized to pH 8-8.5 using Triethanolamine. The surfactants and rest of the ingredients are added while mixing.

**Table 30. Multipurpose cleaner formula**

| Chemical Name | Weight % | Function |
|---|---|---|
| Deionized Water | 93.00 | Diluent |
| Novethix L-10 Polymer (30%) (Source: Lubrizold Advanced Materials, Inc.) | 0.50 | Rheology Modifier |
| Triethanolamine | 0.95 | Neutralizing amine |
| Chemoxide CAW(30 %) | 1.00 | Surfactant |
| Tomadol 25-7 | 1.00 | Surfactant |
| Ethanol | 3.00 | Solvent (Solubilizer) |
| Sample 7 | 0.50 | Chelating agent |
| Preservative | 0.05 | Shine Film |

**Example 6** - **Laundry Detergents**

6A Laundry Detergent Base Powder composition via Spray Dry

Examples L1-L4 listed in Table 31 are various formulations of Laundry Detergent Base Powders. The other ingredients, such enzymes, whitening agent, fragrance, dye and other minor ingredients may be posted blending with the base powders. The slurries of these base powder formulations were prepared by the following process:

1) Add the water, IA/AA copolymers of present invention, alkybenzene sulfonic acid, and coco fatty acid to a mixing tank
2) Neutralize the system with NaOH solution
3) Add all the rest ingredients while mixing until homogeneous.
4) Pump the slurry to the spray dry tower to form detergent powder. For the lab operation, the slurry of step 3 was put on to a non-metal pan and microwaved until dry; follow by the milling to the desired size. (The powders prepared by the lab process have higher bulk density than spray dried powder. But it is good for evaluate the detergency)
5) Post dose other ingredients, such as enzyme granule(s), whitening agent, perfume, dye or other benefit ingredients. Follow by a quick mixing to ensure the well distribution of ingredients.
6) Product from Step 5 may be further processed to be compressed into tablets or be packed into PVA pouch.

Table 31

| Examples | L1 | L2 | L3 | L4 |
|---|---|---|---|---|
| Water | 34 | 34 | 25.2 | 26.7 |
| Sample 7 | | 9 | | 17 |
| Sample 8 | 9 | | 17 | |
| Alkylbenzene Sulfonic acid | 15 | 15 | 8 | 8 |
| 50% NaOH | 4.5 | 4.5 | 2.3 | 2.3 |
| Sodium Carbonate | 25 | 25 | 30 | 30 |
| Sodium sulfate | 7 | 7 | 10 | 8 |
| Sodium silicate | 2 | 2 | 2 | 2 |
| Acrylate/maleate copolymer | 3 | 3 | 5 | 5 |
| Coco fatty acid | | | | 0.5 |
| MISC | 0.5 | 0.5 | 0.5 | 0.5 |

6B Laundry Detergent Base Powder Composition via Agglomeration

Formulations L5-L8 listed in Table 32 are various formulations of Laundry Detergent Base Powders. The other ingredients, such enzymes, whitening agent, fragrance, dye and other minor ingredients may be post blended with the base powders. The slurries of these base powder formulations were prepared by the following process:

1) Add sodium carbonate, sodium sulfate to a food processor: briefly blending for well distribution
2) Add IA-AA copolymer of present invention, alkylbenzene sulfonic acid, ethoxylated fatty alcohol and coco fatty acid one at a time while mixing until the desired particle size
3) Add the sodium silicate powder, acrylate/maleate copolymer powder and miscellaneous: briefly blending until homogeneous
4) Post dose other ingredients, such as enzyme granule(s), whitening agent, perfume, dye or other benefit ingredients. Follow by a quick mixing to ensure the well distribution of ingredients.
5) Product from Step 4 may be further process to be compressed into tablets or be packed into PVA pouches.

| Table 32 | | | | |
|---|---|---|---|---|
| **Samples** | **L5** | **L6** | **L7** | **L8** |
| Sodium Carbonate | 66 | 66 | 68.5 | 69.5 |
| Sodium sulfate | 5 | 5 | 4 | 4 |
| Sample 7 | | 6 | | 10 |
| Sample 8 | 6 | | 11 | |
| Alkylbenzene Sulfonic acid | 15 | 15 | 8 | 8 |
| Ethoxylated fatty alcohol | | | 2 | 2 |
| Coco fatty acid | | | | 0.5 |
| Sodium silicate | 2 | 2 | 2 | 2 |
| CL11 | 3 | 3 | 4 | 3.5 |
| MISC | 0.5 | 0.5 | 0.5 | 0.5 |

**Laundry detergency testing:** Powder laundry formulations containing inventive copolymers are selected for testing the cleaning ability either under different wash conditions or with low efficiency wash products in water having 300 ppm hardness by using a Tergotometer. Test formulations were used to wash pre-soiled "test cloths" together under standard conditions. The soiled fabrics were used to supply soil to the system and also to measure the cleaning efficiency of the formulations. After washing, the test cloths were rinsed, dried, and their reflectance was measured.

Test Formulations

| Table 33- Powder Detergent Formulations | | | | |
|---|---|---|---|---|
| **Chemical** | Function | L9 | L10 | L11 |
| **Biosoft® S-101**[5] | Surfactant | 10 | 10 | 10 |
| **Chelator** | Builder/Chelator | - | 5 | 5 |
| **Soda Ash** | Builder/Base | 90 | 85 | 85 |
| **Total** | | 100 | 100 | 100 |

[5]From Stepan

Hard Water Stock Solution-Prepare a hard water stock solution by dissolving 4.41 g of calcium chloride dihydrate ($CaCl_2 \cdot 2H2O$) and 2.03g of magnesium chloride hexahydrate ($MgCl_2 \cdot 6H2O$) in deionized water to a volume of 1 L. This solution contains 4000 ppm hardness (expressed as calcium carbonate) with a Ca:Mg molar ratio of 3:1. The 300 ppm solution is made by taking 75 ml of the stock solution and diluting with water to 1 L.

Test Cloths: The soiled test cloths (detergency monitors) were STC EMPA 101, 3 in. X 4 in. Cotton swatches soiled with carbon black and olive oil. Three soiled test cloths were included in each bin of the wash test.

Test Wash Procedure

1) Allow Tergotometer bath to equilibrate to 88-90°F
2) Add 1L of 300 ppm hardness wash water to each bin and allow to equilibrate to 88-90F

3) Add 10 g detergent to each bin and agitate for 1 minute
4) Add measured swatches to each bin
5) Wash swatches for 10 minutes
6) Dump wash water and squeeze out swatches
7) Rinse bin and shaft with DI water
8) Add 1L 300 ppm hard water to each bin and allow to equilibrate to 88-90F
9) Unfold swatches and place in same bin as before
10) Rinse for 3minutes
11) Squeeze out swatches, unfold and allow to dry
12) Measure swatches again when dry

The reflectance values of the swatches are measured (full spectrum with ultraviolet excluded) before and after the wash. Each swatch was measured three times and then averaged.

Particulate Soil Removal Evaluation (Soil Removal Index ("SRI") measurement, from ASTM D3050-05): Evaluation for removal of particulate soil was conducted from a single wash in warm water at 32.2°C (90 °F). A Hunter reflection meter was used to measure L, a, and b. These values were taken to calculate SRI Index values using the following equation:

$$SRI = 100 - [(L_c - L_w)^2 + (a_c - a_w)^2 + (b_c - b_w)^2]^{1/2}$$

where:

*L* = reflectance (white/black),
*α* = redness/greenness,
*b* = yellowness/blueness,
*c* = unsoiled fabric, and
*w* = soiled fabric.

Table 34 shows the SRI values after completing washing of EMPA 101 soiled cotton swatches. The higher SRI number indicates that the laundry detergent formulation (L11) with the inventive polymer (Sample 7) is significantly better than the comparative detergents L9 (no chelator) and L10 (with STPP) for soil removal in 300 ppm hard water.

**Table 34**

| LD formulation | Chelator | | dL* | da* | db* | SRI |
|---|---|---|---|---|---|---|
| L9 | Control | no chelator | 9.57 | 0.33 | 1.05 | 10.21 |
| L10 | STPP | Standard chelator | 10.36 | 0.30 | 1.04 | 9.95 |
| L11 | Sample 7 | 70/ 30 itaconic acid/ acrylic acid | 12.29 | 0.16 | 0.52 | 12.30 |

<u>6C - Laundry Slurry Formulation</u>

Laundry slurry (LS) formulations containing inventive copolymers are selected for testing multifunctional capability (processing aid / chelating). Table 35 summarizes formulation composition of all slurries at 40% water content.

Procedure to make the slurry: To surfactant and water mixture, polymer was added and neutralized by NaOH. After the polymer was fully neutralized, soda ash was added to avoid the formation of $CO_2$. The rest of ingredients were then added and mixed thoroughly, while the temperature was kept between 40°C and 50°C, preferably at 45°C. The viscosity was measured by-TA AR-G2 Rheometer with parallelled plate.

| Table 35 Summary of composition of slurries at 40% Water Content | | | | | | | |
|---|---|---|---|---|---|---|---|
| Raw material (%solids) | Function | LS - control | LS 1 | LS 2 | LS 3 | LS 4 | LS 5 |
| Water(DI) | Solvent | 10 | 8.09 | 7.62 | 8.03 | 7.82 | 8.33 |
| Sodium Dodecylbencen-sulphonate (40%) | Surfactant | 50 | 50 | 50 | 50 | 50 | 50 |
| Sample 5 (52.2%) | Chelator / processing aid | 0 | 1.91 | 0 | 0 | 0 | 0 |
| Sample 6 (42%) | Chelator / processing aid | 0 | 0 | 2.38 | 0 | 0 | 0 |
| Sample 19 (50.8%)* | Chelator / processing aid | 0 | 0 | 0 | 1.97 | 0 | 0 |
| Sample 8 (45.7%)* | Chelator / processing aid | 0 | 0 | 0 | 0 | 2.18 | 0 |
| CL11 (92%) | Chelator | 0 | 0 | 0 | 0 | 0 | 1.67 |
| Sodium Carbonate-Dense (Soda-ash) | Chelator/ Buffer | 3.3 | 3.3 | 3.3 | 3.3 | 3.3 | 3.3 |
| Zeolite A (Valfor 100) | Chelator | 10 | 10 | 10 | 10 | 10 | 10 |
| Sodium Carbonate-Dense | Chelator/ Buffer | 6.7 | 6.7 | 6.7 | 6.7 | 6.7 | 6.7 |
| Sodium Sulphate | Filler | 20 | 20 | 20 | 20 | 20 | 20 |
| Total | | 100 | 100 | 100 | 100 | 100 | 100 |
| Viscosity at 25°C (Pa.s) at a shear rate of 3 (1/s) | | 92.22 | 66.43 | 49.58 | 63.34 | 46.51 | 129.5 |
| Viscosity at 40°C (Pa.s) at a shear rate of 3 (1/s) | | 36.58 | 34.02 | 19.09 | 35.5 | 22.26 | 40.24 |
| Viscosity at 50°C (Pa.s) at a shear rate of 3 (1/s) | | 13.7 | 22.53 | 11.02 | 25.98 | 14.56 | 21.14 |

*Lots rerun and resulted in different %solids from that quoted in sample prep

From the data above, polymer samples 6 and 8 were observed to significantly reduce viscosity at 25°C, 40°C and 50°C as compared with the control slurry without addition of polymer. All of the IA/AA copolymers of the present technology (5, 6, 8 and 19) in Table 35 gave a lower viscosity at 25°C than control slurry at room temperature, while the slurry LS5 with CL11 polymer gave a much higher viscosity than control slurry with no polymer. This indicates IA/AA copolymers in this invention can have an advantage in handling slurry as processing aid at lower temperature.

Table 36 summarizes formulation composition and viscosity of all slurries tested at various shear rates at 50°C.

**Table 36 - Summary of composition of slurries**

| Raw material | Function | LS - Control | LS 1 | LS 2 | LS 6 | LS 7 | LS 3 | LS 8 | LS 4 |
|---|---|---|---|---|---|---|---|---|---|
| Water(DI) | Solvent | 10 | 8.09 | 7.62 | 7.82 | 7.75 | 8.03 | 7.82 | 7.82 |
| Sodium Dodecylbencen-sulphonate (40%) | Surfactant | 50 | 50 | 50 | 50 | 50 | 50 | 50 | 50 |
| Sample 5 (52.2%) | Chelator / processing aid | 0 | 1.91 | 0 | 0 | 0 | 0 | 0 | 0 |
| Sample 6 (42%) | Chelator / processing aid | 0 | 0 | 2.38 | 0 | 0 | 0 | 0 | 0 |
| Sample 7 (45.7%) | Chelator / processing aid | 0 | 0 | 0 | 2.18 | 0 | 0 | 0 | 0 |
| Sample 19a (44.3%)* | Chelator / processing aid | 0 | 0 | 0 | 0 | 2.25 | 0 | 0 | 0 |
| Sample 19a (50.8%)* | Chelator / processing aid | 0 | 0 | 0 | 0 | 0 | 1.97 | 0 | 0 |
| Sample 22 (45.8%) | Chelator / processing aid | 0 | 0 | 0 | 0 | 0 | 0 | 2.18 | 0 |
| Sample 8 (45.7%)* | Chelator / processing aid | 0 | 0 | 0 | 0 | 0 | 0 | 0 | 2.18 |
| Sodium Carbonate-Dense | Chelator/ Buffer | 3.3 | 3.3 | 3.3 | 3.3 | 3.3 | 3.3 | 3.3 | 3.3 |
| Zeolite A (Valfor 100) | Chelator | 10 | 10 | 10 | 10 | 10 | 10 | 10 | 10 |
| Sodium Carbonate-Dense | Chelator/ Buffer | 6.7 | 6.7 | 6.7 | 6.7 | 6.7 | 6.7 | 6.7 | 6.7 |
| Sodium Sulphate | Filler | 20 | 20 | 20 | 20 | 20 | 20 | 20 | 20 |
| Total | | 100 | 100 | 100 | 100 | 100 | 100 | 100 | 100 |
| Viscosity at 50°C (Pa.s) at a shear rate of 100 (1/s) | | 2.34 | 1.49 | 1.77 | 1.91 | 2 | 1.82 | 1.25 | 1.6 |
| Viscosity at 50°C (Pa.s) at a shear rate of 250 (1/s) | | 1.31 | 0.75 | 1.14 | 0.94 | 1.02 | 0.93 | 0.74 | 0.84 |
| Viscosity at 50°C (Pa.s) at a shear rate of 500 (1/s) | | 0.8 | 0.43 | 0.6716 | 0.5792 | 0.6034 | 0.5469 | 0.4872 | 0.5822 |

*Lots rerun and resulted in different %solids from that quoted in sample prep

The viscosity data in table 36 show that the slurries with IA/AA copolymers (5-8, 19 and 22) had a lower viscosity at a shear rate of 100 1/s, 250 1/s and 500 1/s at 50°C than the control slurry without polymer (LS control). The lower viscosity of slurries under different shear rates can make the processing of slurries easier.

## Loop test results

To investigate viscosity change and stabilization of slurries, a loop test with 2 full cycles was performed at 60°C using the conical concentric cylinders at a shear rate from 1 (1/s) to 500 (1/s) at 60°C.

**Table 37 Slurry viscosity measured by using loop test**

| Raw material | Function | LS - Control 2 | LS 9 | LS10 |
|---|---|---|---|---|
| Water(DI) | Solvent | 5 | 2.82 | 3.39 |
| Sodium Dodecylbencensulphonate (40%) | Surfactant | 50 | 50 | 50 |
| Sample 8 (45.9%)* | Chelator / processing aid | 0 | 2.18 | 0 |
| CL12 | Chelator | x | x | 1.61 |
| Sodium Carbonate-Dense | Chelator/ Buffer | 3.3 | 3.3 | 3.3 |
| Zeolite A (Valfor 100) | Chelator | 10 | 10 | 10 |
| Sodium Carbonate-Dense | Chelator/ Buffer | 6.7 | 6.7 | 6.7 |
| Sodium Sulphate | Filler | 25 | 25 | 25 |
| Total | | 100 | 100 | 100 |
| Viscosity a 60°C (Pa.s) at a shear rate of 500 (1/s)-from 1 to 500 1/s | | 0.46 | 0.36 | 1.33 |
| Viscosity a 60°C (Pa.s) at a shear rate of 500 (1/s)-from 500 to 1 1/s | | 0.44 | 0.35 | 1.26 |
| Viscosity a 60°C (Pa.s) at a shear rate of 500 (1/s)-from 1 to 500 1/s | | 1.09 | 0.29 | 1.15 |
| Viscosity a 60°C (Pa.s) at a shear rate of 500 (1/s)-from 500 to 1 1/s | | 1.13 | 0.29 | 1.19 |

*Lots rerun and resulted in different %solids from that quoted in sample prep

The results in table 37 show IA/AA copolymer sample 8 had lower viscosity as compared to CL12 in the loop test. The control slurry (no polymer) had a higher viscosity and viscosity increased over the cycles, indicating potential issue of slurry instability.

Slurries using alkylbenzensulphonic acid (linear alkylbenzene sulfonic acid - "LAS Acid") to form sodium alkylbenzensulfonate in situ with aqueous NaOH solution were made. Below are the results of slurries prepared from LAS acids. The water level in the slurries was below 33%.

| Table 38 Slurry viscosity | | | | | | | |
|---|---|---|---|---|---|---|---|
| Raw material | Function | LS – Control 3 | LS 11 | LS 12 | LS 13 | LS 14 | LS 15 |
| Water(DI) | Solvent | 29.02 | 25.8 | 25.8 | 25.6 | 26.8 | 26.8 |
| Sodium hydroxide (50%) | Neutralizer | 5.43 | 6.43 | 6.43 | 6.43 | 6.02 | 6.43 |
| Calsoft LAS-99 (97.3%) | Surfactant acid form | 20.55 | 20.6 | 20.6 | 20.6 | 20.6 | 20.6 |
| Sample 6 (42.0%) | Chelator/ processing aid | 0 | 0 | 0 | 2.38 | 0 | 0 |
| Sample 19 (44.3%)* | Chelator/ processing aid | 0 | 2.26 | 0 | 0 | 0 | 0 |

| | | | | | | | |
|---|---|---|---|---|---|---|---|
| Sample 19 (50.8%)* | Chelator/ processing aid | 0 | 0 | 0 | 0 | 0 | 0 |
| Sample 8 (44.3%)* | Chelator/ processing aid | 0 | 0 | 2.26 | 0 | 0 | 0 |
| CL6 | Chelator | x | x | x | x | x | 1.18 |
| CL2 | Chelator | x | x | x | x | 1.61 | x |
| Sodium Carbonate-Dense | Chelator/ Buffer | 3.3 | 3.3 | 3.3 | 3.3 | 3.3 | 3.3 |
| Zeolite A (Valfor 100) | Chelator | 10 | 10 | 10 | 10 | 10 | 10 |
| Sodium Carbonate-Dense | Chelator/ Buffer | 6.7 | 6.7 | 6.7 | 6.7 | 6.7 | 6.7 |
| Sodium Sulphate | Filler | 25 | 25 | 25 | 25 | 25 | 25 |
| Total | | 100 | 100 | 100 | 100 | 100 | 100 |
| H2O in slurry | | 32.94 | 31.4 | 31.4 | 31.4 | 31.4 | 31.4 |
| Viscosity a 60oC (Pa.s) at a shear rate of 500 (1/s)-from 1 to 500 1/s | | 0.61 | 0.68 | 0.36 | 0.59 | 1.42 | 0.92 |
| Viscosity a 60oC (Pa.s) at a shear rate of 500 (1/s)-from 500 to 1 1/s | | 0.69 | 0.69 | 0.39 | 0.57 | 1.36 | 0.91 |
| Viscosity a 60oC (Pa.s) at a shear rate of 500 (1/s)-from 1 to 500 1/s | | 2.08 | 0.86 | 0.47 | 0.51 | 1.5 | 0.96 |
| Viscosity a 60oC (Pa.s) at a shear rate of 500 (1/s)-from 500 to 1 1/s | | 2.12 | 0.91 | 0.53 | 0.52 | 1.52 | 1.02 |

*Lots rerun and resulted in different %solids from that quoted in sample prep

The results in table 38 show that the slurries with IA/AA copolymers (Samples 6, 8 and 19) showed much lower viscosity than the control slurry. The slurries with inventive copolymers also had a lower viscosity as compared to CL6 and CL2.

6d - Laundry Slurry Formulation with esterified polymer:

Laundry slurry (LS) formulations containing inventive copolymers are selected for testing multifunctional capability (processing aid / chelating). Table 39 summarizes formulation composition of all slurries at <35% water content.

Procedure to make the slurry from LAS acid: To water and NAOH mixture, polymer was added. After the polymer was neutralized, LAS acid was gradually added to form detersive sodium LAS, followed by addition of soda ash. The rest of ingredients were then added and mixed thoroughly, while temperature was kept between 40°C and 50°C, preferably at 45°C.

**Loop test results**

To investigate viscosity change and stabilization of slurries, a loop test with 2 full cycles was performed at 60°C using the conical concentric cylinders from 1 to 500 1/s at 60°C, two cycles.

**Table 39** Slurry viscosity using loop test

| Raw material | | ELS1 (Control) | ELS 2 | ELS 3 | ELS 4 | ELS 5 | ELS 6 | ELS 7 |
|---|---|---|---|---|---|---|---|---|
| Water(DI) | Solvent | 29 | 25.8 | 25.8 | 25.8 | 26.8 | 26.8 | 28.4 |
| Sodium hydroxide (50%) | Neutralizer | 5.43 | 6.43 | 6.43 | 6.43 | 6.02 | 6.43 | 5.07 |
| Calsoft LAS-99 (97.3%) | Surfactant acid form | 20.6 | 20.6 | 20.6 | 20.6 | 20.6 | 20.6 | 15.4 |
| Sample 32 (44.6%) | Chelator / processing aid | 0 | 2.24 | 0 | 0 | 0 | 0 | 0 |
| Sample 34 (45.2%) | Chelator / processing aid | 0 | 0 | 2.21 | 0 | 0 | 0 | 0 |
| Sample 30 (45.5%) | Chelator / processing aid | 0 | 0 | 0 | 2.2 | 0 | 0 | 0 |
| CL6 | Chelator | 0 | 0 | 0 | 0 | 0 | 1.18 | 0 |
| CL2 | Chelator | 0 | 0 | 0 | 0 | 1.61 | 0 | 0 |
| CL11 | | 0 | 0 | 0 | 0 | 0 | 0 | 1.09 |

| | | | | | | | | |
|---|---|---|---|---|---|---|---|---|
| Sodium Carbonate-Dense | Chelator/ Buffer | 3.3 | 3.3 | 3.3 | 3.3 | 3.3 | 3.3 | 3.3 |
| Zeolite A (Valfor 100) | Chelator | 10 | 10 | 10 | 10 | 10 | 10 | 15 |
| Sodium Carbonate-Dense | Chelator/ Buffer | 6.7 | 6.7 | 6.7 | 6.7 | 6.7 | 6.7 | 6.7 |
| Sodium Sulphate | Filler | 25 | 25 | 25 | 25 | 25 | 25 | 25 |
| Total | | 100 | 100 | 100 | 100 | 100 | 100 | 100 |
| Viscosity a 60oC (Pa.s) at a shear rate of 500 (1/s)-from 1 to 500 1/s | | 0.61 | 0.82 | 0.78 | 0.73 | 1.42 | 0.92 | 0.85 |
| Viscosity a 60oC (Pa.s) at a shear rate of 500 (1/s)-from 500 to 1 1/s | | 0.69 | 0.83 | 0.81 | 0.76 | 1.36 | 0.91 | 0.91 |
| Viscosity a 60oC (Pa.s) at a shear rate of 500 (1/s)-from 1 to 500 1/s | | 2.08 | 1.17 | 1.19 | 1.34 | 1.5 | 0.96 | 1.22 |
| Viscosity a 60oC (Pa.s) at a shear rate of 500 (1/s)-from 500 to 1 1/s | | 2.12 | 1.23 | 1.31 | 1.46 | 1.52 | 1.02 | 1.27 |

The results in table 39 show partially esterified IA/AA polymer samples 30, 32 and 34 had lower viscosity as compared to control (no polymer) in the loop test. The control slurry (no polymer) viscosity increased over the cycles, indicating potential issue of slurry instability. The slurries with inventive copolymers also had a lower viscosity as compared to CL2.

Table 40 below summarizes the viscosity data of slurries have 25% H2O.

| Table 40A Viscosity of slurries having 26.96%H2O | | | | | |
|---|---|---|---|---|---|
| Formulation ID | ELS00 | ELS7 | ELS8 | ELS9 | ELS10 |
| Water(DI) | 24.52 | 22.3 | 22.4 | 22.26 | 22.29 |
| Sodium hydroxide solution (50%) | 5.07 | 5.07 | 5.07 | 5.07 | 5.07 |
| Calsoft LAS-99 (97.3%) | 15.41 | 15.4 | 15.4 | 15.41 | 15.41 |
| Control Sample 1 | 0 | 2.26 | 0 | 0 | 0 |
| Sample 29 | 0 | 0 | 0 | 2.26 | 0 |
| Sample 33 | 0 | 0 | 0 | 0 | 2.23 |
| CL1 (48.12%) | 0 | 0 | 2.08 | 0 | 0 |
| Sodium Carbonate-Dense | 3.3 | 3.3 | 3.3 | 3.3 | 3.3 |
| Zeolite A (Valfor 100) | 20 | 20 | 20 | 20 | 20 |
| Sodium Carbonate-Dense | 6.7 | 6.7 | 6.7 | 6.7 | 6.7 |
| Sodium Sulphate | 25 | 25 | 25 | 25 | 25 |
| Total | 100 | 100 | 100 | 100 | 100 |
| Viscosity a 60°C (Pa.s) at a shear rate of 500 (1/s)-from 1 to 500 1/s | 1.5 | 0.78 | 0.77 | 0.086 | 0.61 |
| Viscosity a 60°C (Pa.s) at a shear rate of 500 (1/s)-from 500 to 1 1/s | 1.45 | 0.77 | 0.73 | 0.077 | 0.68 |
| Viscosity a 60°C (Pa.s) at a shear rate of 500 (1/s)-from 1 to 500 1/s | 1.1 | 0.75 | 0.75 | 0.232 | 0.86 |

| | | | | | |
|---|---|---|---|---|---|
| Viscosity a 60°C (Pa.s) at a shear rate of 500 (1/s)-from 500 to 1 1/s | 1.12 | 0.73 | 0.72 | 0.221 | 0.89 |

**Table 40B Viscosity of slurries having 25% $H_2O$**

| Formulation ID | ELS000 | ELS11 | ELS12 | ELS13 | ELS14 | ELS15 | ELS16 |
|---|---|---|---|---|---|---|---|
| Water(DI) | 22.25 | 19.9 | 19.9 | 19.62 | 19.87 | 19.92 | 19.98 |
| Sodium hydroxide solution (50%) | 5.07 | 5.07 | 5.07 | 5.07 | 5.07 | 5.07 | 5.07 |
| Sample 31 (42.7%) | 0 | 2.35 | 0 | 0 | 0 | 0 | 0 |
| Sample 37 (42.52%) | 0 | 0 | 2.35 | 0 | 0 | 0 | 0 |
| Sample 36 (37.99%) | 0 | 0 | 0 | 2.63 | 0 | 0 | 0 |
| Sample 40 (44.1%) | 0 | 0 | 0 | 0 | 0 | 0 | 2.27 |
| Sample 42 (42.03%) | 0 | 0 | 0 | 0 | 2.38 | 0 | 0 |
| Sample 44 (43.0%) | 0 | 0 | 0 | 0 | 0 | 2.33 | 0 |
| Calsoft LAS-99 (97.3%) | 15.41 | 15.41 | 15.41 | 15.41 | 15.41 | 15.41 | 15.41 |
| Sodium Carbonate-Dense | 5.57 | 5.57 | 5.57 | 5.57 | 5.57 | 5.57 | 5.57 |
| Zeolite A (Valfor 100) | 20 | 20 | 20 | 20 | 20 | 20 | 20 |
| Sodium Carbonate-Dense | 6.7 | 6.7 | 6.7 | 6.7 | 6.7 | 6.7 | 6.7 |
| Sodium Sulphate | 25 | 25 | 25 | 25 | 25 | 25 | 25 |
| Total | 100 | 100 | 100 | 100 | 100 | 100 | 100 |
| Viscosity a 60°C (Pa.s) at a shear rate of 500 (1/s)-from 1 to 500 1/s | 1.01 | 1.13 | 0.87 | 0.37 | 0.552 | 0.127 | 0.947 |

| | | | | | | | |
|---|---|---|---|---|---|---|---|
| Viscosity a 60°C (Pa.s) at a shear rate of 500 (1/s)-from 500 to 1 1/s | 1.73 | 1.13 | 0.96 | 0.36 | 0.56 | 0.144 | 0.82 |
| Viscosity a 60°C (Pa.s) at a shear rate of 500 (1/s)-from 1 to 500 1/s | 1.66 | 1.44 | 1.21 | 0.32 | 0.664 | 0.658 | 1.248 |
| Viscosity a 60°C (Pa.s) at a shear rate of 500 (1/s)-from 500 to 1 1/s | 1.69 | 1.47 | 1.24 | 0.28 | 0.675 | 0.642 | 1.3 |

The results in tables 40A and 40B show that partially esterified IA/AA copolymer samples 31, 37, 38, 40, 42 and 44 had lower viscosity as compared to control (ELS00 or ELS000 -no polymer). The slurries with inventive copolymers also had a lower or equal viscosity as compared to CL1.

Table 41 below gives a summary of viscosities of slurries having a lower water content of 20% $H_2O$.

**Table 41 Viscosity of slurries having 20% $H_2O$**

| Formulation ID | LS17 | LS18 |
|---|---|---|
| Water(DI) | 15.4 | 15.5 |
| Sodium hydroxide solution (50%) | 5.34 | 5.34 |
| Sample 37 (37.99%) | 2.77 | 3.94 |
| Calsoft LAS-99 (97.3%) | 16.2 | 16.2 |
| Sodium Carbonate-Dense | 5.86 | 5 |
| Zeolite A (Valfor 100) | 21.1 | 21.1 |
| Sodium Carbonate-Dense | 7.05 | 7 |
| Sodium Sulphate | 26.3 | 26 |
| Total | 100 | 100 |
| Viscosity a 60°C (Pa.s) at a shear rate of 500 (1/s)-from 1 to 500 1/s | 1.81 | 1.4 |
| Viscosity a 60°C (Pa.s) at a shear rate of 500 (1/s)-from 500 to 1 1/s | 1.8 | 1.38 |
| Viscosity a 60°C (Pa.s) at a shear rate of 500 (1/s)-from 1 to 500 1/s | 2.21 | 1.44 |
| Viscosity a 60°C (Pa.s) at a shear rate of 500 (1/s)-from 500 to 1 1/s | 2.49 | 1.46 |

**Example 6d: Hydrophobic and Hydrophilic Particulates Dispersion**

The dispersing ability was tested by use of hydrophobic particulates-carbon black and hydrophilic particulates-Kaolin clay at room temperature. The water hardness is 120 ppm as $CaCO_3$ and the concentration of polymer is 10 ppm. To a glass jar, both of polymer solution and hard water were added and mixed to get the right concentration, and then particulate soil was added. The mixture was mixed for 5 min to form dispersion. Then the Transmission (T%) or Turbidity (NTU) of the dispersion over a certain time period was measured. The lower the T%, the higher the dispersing ability. With NTU, a higher NTU value indicates a higher dispersing ability. The results are listed in Table 42.

**Table 42** Dispersion Stability at Room Temperature

| | T% of Carbon Black dispersion | | Turbidity (NTU) of Kaolin dispersion | |
|---|---|---|---|---|
| Sample ID | Initial | 5 min | Initial | 5 min |
| Sample 32 | 29.4 | 65.9 | 1000 | 469 |
| Sample 37 | 31.8 | 58.4 | NT | NT |
| CL6 | 32.6 | 67 | 628 | 270 |
| CL4 | 52.7 | 72.6 | 816 | 146 |
| CL1 | 6 | 58.2 | 1000 | 848 |
| No polymer | 39.3 | 60.3 | 850 | 330 |

Water hardness is 120 ppm and polymer concentration is 10 ppm

Samples 32 and 37 showed better Carbon black dispersing ability than CL6 and CL4, and sample 32 showed better dispersing ability of Kaolin clay than CL6 and CL4.

### Example 6e: Antiencrustation

As an index of antiencrustation, $CaCO_3$ crystal growth inhibition was evaluated at room temperature by measuring turbidity. Polymer solution and $Na_2CO_3$ solution were mixed together, and then hard water was added to make the final solution having a the water hardness of 300 ppm and 0.15% $Na_2CO_3$. The solution was kept mixing and the turbidity was monitored over the time. The lower the turbidity (NTU), the higher the $CaCO_3$ crystal growth inhibition efficacy. Some results are listed in the Table below. Cleary, the inventive copolymer showed better $CaCO_3$ crystal inhibition than CL6 and CL5.

| Table 43 Antiencrustation (Crystal Growth Inhibition) | | |
|---|---|---|
| Polymer | Concentration, ppm | Turbidity(NTU) at 35 min |
| Sample 37 | 2.5 | 1.5 |
| Sample 38 | 2.5 | 1.98 |
| Sample 42 | 2.5 | 0.8 |
| CL6 | 30 | 93 |
| CL5 | 2.5 | 13 |

was measured. The lower the T%, the higher the dispersing ability. With NTU, a higher NTU value indicates a higher dispersing ability. The results are listed in Table 42.

| Table 42 Dispersion Stability at Room Temperature | | | | |
|---|---|---|---|---|
| | T% of Carbon Black dispersion | | Turbidity (NTU) of Kaolin dispersion | |
| Sample ID | Initial | 5 min | Initial | 5 min |
| Sample 32 | 29.4 | 65.9 | 1000 | 469 |
| Sample 37 | 31.8 | 58.4 | NT | NT |
| CL6 | 32.6 | 67 | 628 | 270 |
| CL4 | 52.7 | 72.6 | 816 | 146 |
| CL1 | 6 | 58.2 | 1000 | 848 |
| No polymer | 39.3 | 60.3 | 850 | 330 |

Water hardness is 120 ppm and polymer concentration is 10 ppm

Samples 32 and 37 showed better Carbon black dispersing ability than CL6 and CL4, and sample 32 showed better dispersing ability of Kaolin clay than CL6 and CL4.

**Example 6e: Antiencrustation**

As an index of antiencrustation, $CaCO_3$ crystal growth inhibition was evaluated at room temperature by measuring turbidity. Polymer solution and $Na_2CO_3$ solution were mixed together, and then hard water was added to make the final solution having a the water hardness of 300 ppm and 0.15% $Na_2CO_3$. The solution was kept mixing and the turbidity was monitored over the time. The lower the turbidity (NTU), the higher the $CaCO_3$ crystal growth inhibition efficacy. Some results are listed in the Table below. Cleary, the inventive polymer showed better $CaCO_3$ crystal inhibition than CL6 and CL5.

| **Table 43** Antiencrustation (Crystal Growth Inhibition) | | |
|---|---|---|
| Polymer | Concentration, ppm | Turbidity(NTU) at 35 min |
| Sample 37 | 2.5 | 1.5 |
| Sample 38 | 2.5 | 1.98 |
| Sample 42 | 2.5 | 0.8 |
| CL6 | 30 | 93 |
| CL5 | 2.5 | 13 |

Each of the documents referred to above is incorporated herein by reference, including any prior applications, whether or not specifically listed above, from which priority is claimed. The mention of any document is not an admission that such document qualifies as prior art or constitutes the general knowledge of the skilled person in any jurisdiction. Except in the Examples, or where otherwise explicitly indicated, all numerical quantities in this description specifying amounts of materials, reaction conditions, molecular weights, number of carbon atoms, and the like, are to be understood as modified by the word "about." It is to be understood that the upper and lower amount, range, and ratio limits set forth herein may be independently combined. Similarly, the ranges and amounts for each element of the invention can be used together with ranges or amounts for any of the other elements. As used herein, the transitional term "comprising," which is synonymous with "including," "containing," or "characterized by," is inclusive or open-ended and does not exclude additional, un-recited elements or method steps. However, in each recitation of "comprising" herein, it is also intended that the term encompass, as alternative embodiments, the phrases "consisting essentially of' and "consisting of," where "consisting of' excludes any element or step not specified and "consisting essentially of' permits the inclusion of additional un-recited elements or steps that do not materially affect the basic and novel characteristics of the composition or method under consideration.

## Claims

1. An itaconic acid copolymer comprising monomer units derived from itaconic acid and co-monomer units derived from at least one of acrylic acid, methacrylic acid or salts, esters, and anhydrides thereof, 2-acrylamido-2-methylpropane sulfonic acid (AMPS) or salts thereof, and combinations thereof, wherein said copolymer comprises less than 0.5 mole %, based on the number of monomer units in the copolymer, of tri-substituted vinyl monomer impurities and wherein no more than 5 mole% of the total carboxylic acid groups from all monomers are neutralized, and further wherein the copolymer has a number average molecular weight (Mn) of from 500 to 100,000.

2. The copolymer of claim 1 comprising greater than 25 mole % monomers derived from itaconic acid and less than 75 mole % monomer derived from at least one of acrylic acid, methacrylic acid or salts, esters, and anhydrides thereof, AMPS or salts thereof, and combinations thereof.

3. The copolymer of any previous claim comprising monomer units derived from itaconic acid at from 35 to 60 mole % and monomer units derived from acrylic acid at from 40 to 65 mole %.

4. The copolymer of any previous claim comprising monomer units derived from itaconic acid at from 60 to 70 mole % and monomer units derived from acrylic acid at from 30 to 40 mole %.

5. The copolymer of any of claims 1 to 3 comprising monomer units derived from itaconic acid and (meth)acrylic acid at from 90 to 99.9 mole % and monomer units derived from AMPS at from 0.1 to 10 mole %.

6. The copolymer of any previous claim, where the copolymer is from 0.1 to 60% esterified.

7. A process for preparing a polymer solution of the itaconic acid copolymer of any previous claim comprising: preparing in an aqueous medium a monomer solution of itaconic acid and at least one of the comonomers recited in claim 1 and polymerizing at a polymerization temperature of greater than 60° C in the presence of from 0.01 to 5 mole % polymerization initiator, based on the total amount of said monomers, wherein the reaction mixture is free of metal promoters, and further comprising a step of pre-neutralizing said monomer solution with less than 5 mole % of a neutralizer per total acid group present within said monomer solution.

8. A process for preparing a polymer solution of the itaconic acid copolymer of any one of claims 1 to 6 comprising: preparing in an aqueous medium a monomer solution of greater than 25 mole % itaconic acid monomer with less than 75 mole % of a co-monomer composition comprising acrylic acid, AMPS, or a mixture thereof, wherein said co-monomer composition is added to said itaconic acid monomer over a period of from 2 to 16 hours at a polymerization temperature of greater than 60° C in the presence of from 0.01 to 5 mole % polymerization initiator, based on the total amount of said monomers, wherein the reaction mixture is free of metal promoters, said co-monomer composition and at least half of said initiator being added separately and essentially continuously throughout said period to said itaconic acid monomer in solution in said medium, and further comprising a step of pre-neutralizing said monomer solution with less than 5 mole % of a neutralizer per total acid group present within said monomer solution.

9. A polymer formulation comprising a copolymer of any one of claims 1 to 6.

10. The polymer formulation of claim 9 comprising less than 0.5% w/w unreacted monomer based on the total weight of the copolymer present in the solution.

11. The polymer formulation of claim 9 or 10, **characterized by** a pH of greater than 1.8.

12. A dishwashing detergent, a laundry detergent, a hard surface cleaner, or a cosmetically acceptable formulation comprising the polymer formulation of any one of claims 9 to 11.

13. A method of chelating metal ions from a solution comprising adding to a solution containing metal ions, or subject to containing metal ions, an itaconic acid copolymer according to any one of claims 1 to 6.

**Patentansprüche**

1. Itaconsäure-Copolymer, umfassend Monomereinheiten, die sich von Itaconsäure ableiten, und Comonomereinheiten, die sich von mindestens einem von Acrylsäure, Methacrylsäure oder Salzen, Estern und Anhydriden davon, 2-Acrylamido-2-methylpropansulfonsäure (AMPS) oder Salzen davon und Kombinationen davon ableiten, wobei das Copolymer weniger als 0,5 Mol-%, bezogen auf die Zahl der Monomereinheiten in dem Copolymer, trisubstituierte Vinylmonomere als Verunreinigungen umfasst und wobei nicht mehr als 5 Mol-% der gesamten Carbonsäuregruppen aller Monomere neutralisiert sind und ferner wobei das Copolymer ein zahlenmittleres Molekulargewicht (Mn) von 500 bis 100.000 aufweist.

2. Copolymer nach Anspruch 1, umfassend mehr als 25 Mol-% Monomere, die sich von Itaconsäure ableiten, und weniger als 75 Mol-% Monomere, die sich von mindestens einem von Acrylsäure, Methacrylsäure oder Salzen, Estern und Anhydriden davon, AMPS oder Salzen davon und Kombinationen davon ableiten.

3. Copolymer nach einem der vorhergehenden Ansprüche, umfassend Monomereinheiten, die sich von Itaconsäure ableiten, in einer Menge von 35 bis 60 Mol-% und Monomereinheiten, die sich von Acrylsäure ableiten, in einer Menge von 40 bis 65 Mol-%.

4. Copolymer nach einem der vorhergehenden Ansprüche, umfassend Monomereinheiten, die sich von Itaconsäure ableiten, in einer Menge von 60 bis 70 Mol-% und Monomereinheiten, die sich von Acrylsäure ableiten, in einer Menge von 30 bis 40 Mol-%.

5. Copolymer nach einem der Ansprüche 1 bis 3, umfassend Monomereinheiten, die sich von Itaconsäure und (Meth)acrylsäure ableiten, in einer Menge von 90 bis 99,9 Mol-% und Monomereinheiten, die sich von AMPS ableiten, in einer Menge von 0,1 bis 10 Mol-%.

**6.** Copolymer nach einem der vorhergehenden Ansprüche, wobei das Copolymer zu 0,1 bis 60 % verestert ist.

**7.** Verfahren zur Herstellung einer Polymerlösung des Itaconsäure-Copolymers nach einem der vorhergehenden Ansprüche, umfassend: Herstellen einer Monomerlösung von Itaconsäure und mindestens einem der in Anspruch 1 genannten Comonomere in einem wässrigen Medium und Polymerisieren bei einer Polymerisationstemperatur von mehr als 60 °C in Gegenwart von 0,01 bis 5 Mol-% Polymerisationsinitiator, bezogen auf die Gesamtmenge der Monomere, wobei die Reaktionsmischung frei von Metallpromotoren ist, und ferner umfassend einen Schritt des Vorneutralisierens der Monomerlösung mit weniger als 5 Mol-% eines Neutralisationsmittels, bezogen auf die gesamten Säuregruppen in der Monomerlösung.

**8.** Verfahren zur Herstellung einer Polymerlösung des Itaconsäure-Copolymers nach einem der Ansprüche 1 bis 6, umfassend: Herstellen einer Monomerlösung von mehr als 25 Mol-% Itaconsäure-Monomer mit mindestens 75 Mol-% einer Comonomerzusammensetzung, die Acrylsäure, AMPS oder eine Mischung davon umfasst, in einem wässrigen Medium, wobei die Comonomerzusammensetzung über einen Zeitraum von 2 bis 16 Stunden bei einer Polymerisationstemperatur von mehr als 60 °C in Gegenwart von 0,01 bis 5 Mol-% Polymerisationsinitiator, bezogen auf die Gesamtmenge der Monomere zu dem Itaconsäure-Monomer gegeben wird, wobei die Reaktionsmischung frei von Metallpromotoren ist, wobei die Comonomerzusammensetzung und mindestens die Hälfte des Initiators separat und im Wesentlichen kontinuierlich über den gesamten Zeitraum zu dem in dem Medium gelösten Itaconsäure-Monomer gegeben werden, und ferner umfassend einen Schritt des Vorneutralisierens der Monomerlösung mit weniger als 5 Mol-% eines Neutralisationsmittels, bezogen auf die gesamten Säuregruppen in der Monomerlösung.

**9.** Polymerformulierung, umfassend ein Copolymer nach einem der Ansprüche 1 bis 6.

**10.** Polymerformulierung nach Anspruch 9, umfassend weniger als 0,5 % w/w nicht umgesetztes Monomer, bezogen auf das Gesamtgewicht des Copolymers in der Lösung.

**11.** Polymerformulierung nach Anspruch 9 oder 10, **gekennzeichnet durch** einen pH-Wert von mehr als 1,8.

**12.** Geschirrspülmittel, Waschmittel, Reinigungsmittel für harte Oberflächen oder kosmetisch unbedenkliche Formulierung, umfassend die Polymerformulierung nach einem der Ansprüche 9 bis 11.

**13.** Verfahren zur Chelatisierung von Metallionen aus einer Lösung, bei dem man eine Lösung, die Metallionen enthält oder Metallionen enthalten kann, mit einem Itaconsäure-Copolymer gemäß einem der Ansprüche 1 bis 6 versetzt.

## Revendications

**1.** Copolymère d'acide itaconique comprenant des motifs monomères dérivés d'acide itaconique et des motifs comonomères dérivés d'au moins l'un parmi l'acide acrylique, l'acide méthacrylique ou des sels, des esters et des anhydrides de ceux-ci, l'acide 2-acrylamido-2-méthylpropanesulfonique (AMPS) ou des sels de celui-ci, et des combinaisons de ceux-ci, ledit copolymère comprenant moins de 0,5 % en moles, sur la base du nombre de motifs monomères dans le copolymère, d'impuretés de monomère vinylique trisubstitué et dans lequel pas plus de 5 % en moles des groupes acide carboxylique totaux de l'ensemble des monomères sont neutralisés, et en outre dans lequel le copolymère a un poids moléculaire moyen en nombre (Mn) de 500 à 100 000.

**2.** Copolymère selon la revendication 1, comprenant plus de 25 % en moles de monomères dérivés d'acide itaconique et moins de 75 % en moles de monomère dérivé d'au moins l'un parmi l'acide acrylique, l'acide méthacrylique ou des sels, des esters et des anhydrides de ceux-ci, AMPS ou des sels de celui-ci, et des combinaisons de ceux-ci.

**3.** Copolymère selon l'une quelconque des revendications précédentes, comprenant des motifs monomères dérivés d'acide itaconique à 35 à 60 % en moles et des motifs monomères dérivés d'acide acrylique à 40 à 65 % en moles.

**4.** Copolymère selon l'une quelconque des revendications précédentes, comprenant des motifs monomères dérivés d'acide itaconique à 60 à 70 % en moles et des motifs monomères dérivés d'acide acrylique à 30 à 40 % en moles.

**5.** Copolymère selon l'une quelconque des revendications 1 à 3, comprenant des motifs monomères dérivés d'acide itaconique et d'acide (méth)acrylique à 90 à 99,9 % en moles et des motifs monomères dérivés d'AMPS à 0,1 à 10

% en moles.

6. Copolymère selon l'une quelconque des revendications précédentes, où le copolymère est estérifié à 0,1 à 60 %.

7. Procédé de préparation d'une solution de polymère du copolymère d'acide itaconique selon l'une quelconque des revendications précédentes comprenant : la préparation dans un milieu aqueux d'une solution de monomère d'acide itaconique et d'au moins un des comonomères mentionnés dans la revendication 1 et la polymérisation à une température de polymérisation supérieure à 60 °C en présence de 0,01 à 5 % en moles d'initiateur de polymérisation, sur la base de la quantité totale desdits monomères, dans lequel le mélange de réaction est exempt de promoteurs métalliques, et comprenant en outre une étape de préneutralisation de ladite solution de monomère avec moins de 5 % en moles d'un agent neutralisant par groupe acide total présent dans ladite solution de monomère.

8. Procédé de préparation d'une solution de polymère du copolymère d'acide itaconique selon l'une quelconque des revendications 1 à 6, comprenant : la préparation dans un milieu aqueux d'une solution de monomère de plus de 25 % en moles de monomère d'acide itaconique avec moins de 75 % en moles d'une composition de comonomère comprenant de l'acide acrylique, AMPS, ou un mélange de ceux-ci, dans lequel ladite composition de comonomère est ajoutée audit monomère d'acide itaconique sur une période de 2 à 16 heures à une température de polymérisation supérieure à 60 °C en présence de 0,01 à 5 % en moles d'initiateur de polymérisation, sur la base de la quantité totale desdits monomères, dans lequel le mélange de réaction est exempt de promoteurs métalliques, ladite composition de comonomère et au moins la moitié dudit initiateur étant ajoutées séparément et de façon pratiquement continue tout au long de ladite période audit monomère d'acide itaconique en solution dans ledit milieu, et comprenant en outre une étape de préneutralisation de ladite solution de monomère avec moins de 5 % en moles d'un agent neutralisant par groupe acide total présent dans ladite solution de monomère.

9. Formulation de polymère comprenant un copolymère selon l'une quelconque des revendications 1 à 6.

10. Formulation de polymère selon la revendication 9, comprenant moins de 0,5 % m/m de monomère n'ayant pas réagi sur la base du poids total du copolymère présent dans la solution.

11. Formulation de polymère selon la revendication 9 ou 10, **caractérisée par** un pH supérieur à 1,8.

12. Détergent pour laver la vaisselle, détergent pour laver le linge, nettoyant pour surface dure ou formulation cosmétiquement acceptable comprenant la formulation de polymère selon l'une quelconque des revendications 9 à 11.

13. Procédé de chélation d'ions métalliques à partir d'une solution comprenant l'ajout à une solution contenant des ions métalliques, ou susceptible de contenir des ions métalliques, d'un copolymère d'acide itaconique selon l'une quelconque des revendications 1 à 6.

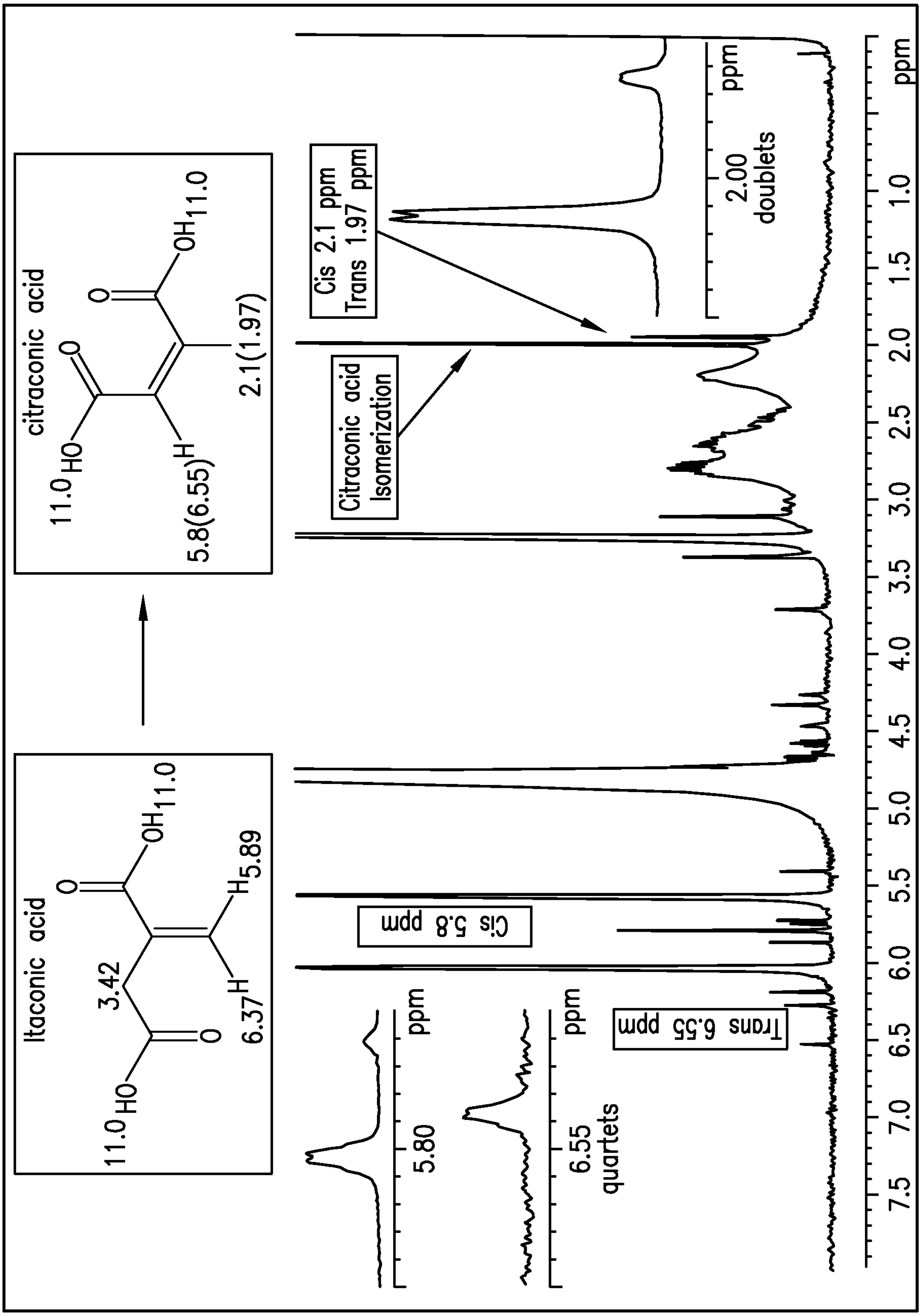
Itaconic acid
citraconic acid
Cis 5.8 ppm
Trans 6.55 ppm
Citraconic acid Isomerization
Cis 2.1 ppm
Trans 1.97 ppm
5.80
ppm
6.55
quartets
ppm
2.00
doublets
ppm
7.5
7.0
6.5
6.0
5.5
5.0
4.5
4.0
3.5
3.0
2.5
2.0
1.5
1.0
ppm

FIG-1

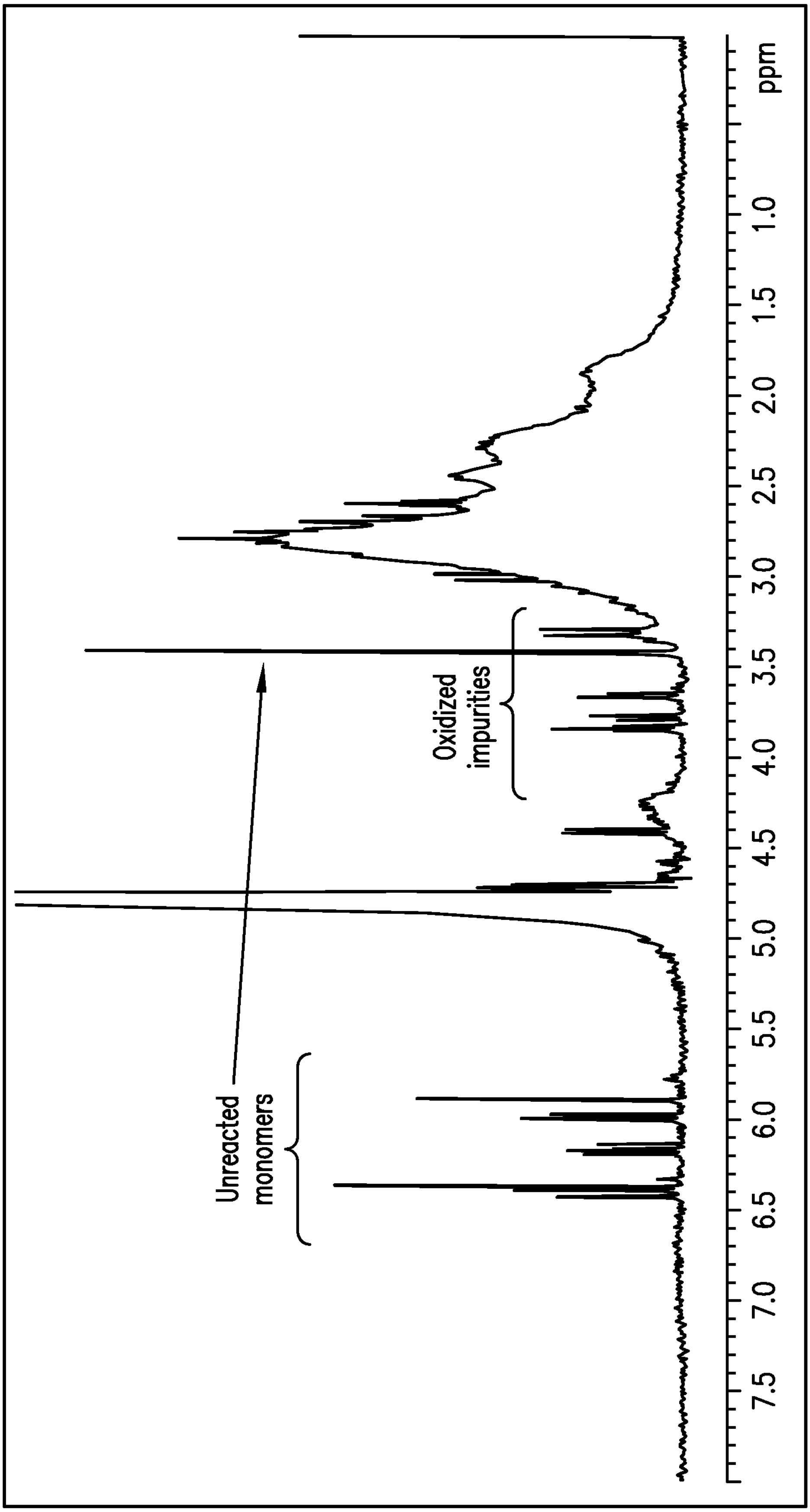

Unreacted monomers
Oxidized impurities
7.5
7.0
6.5
6.0
5.5
5.0
4.5
4.0
3.5
3.0
2.5
2.0
1.5
1.0
ppm


FIG-2

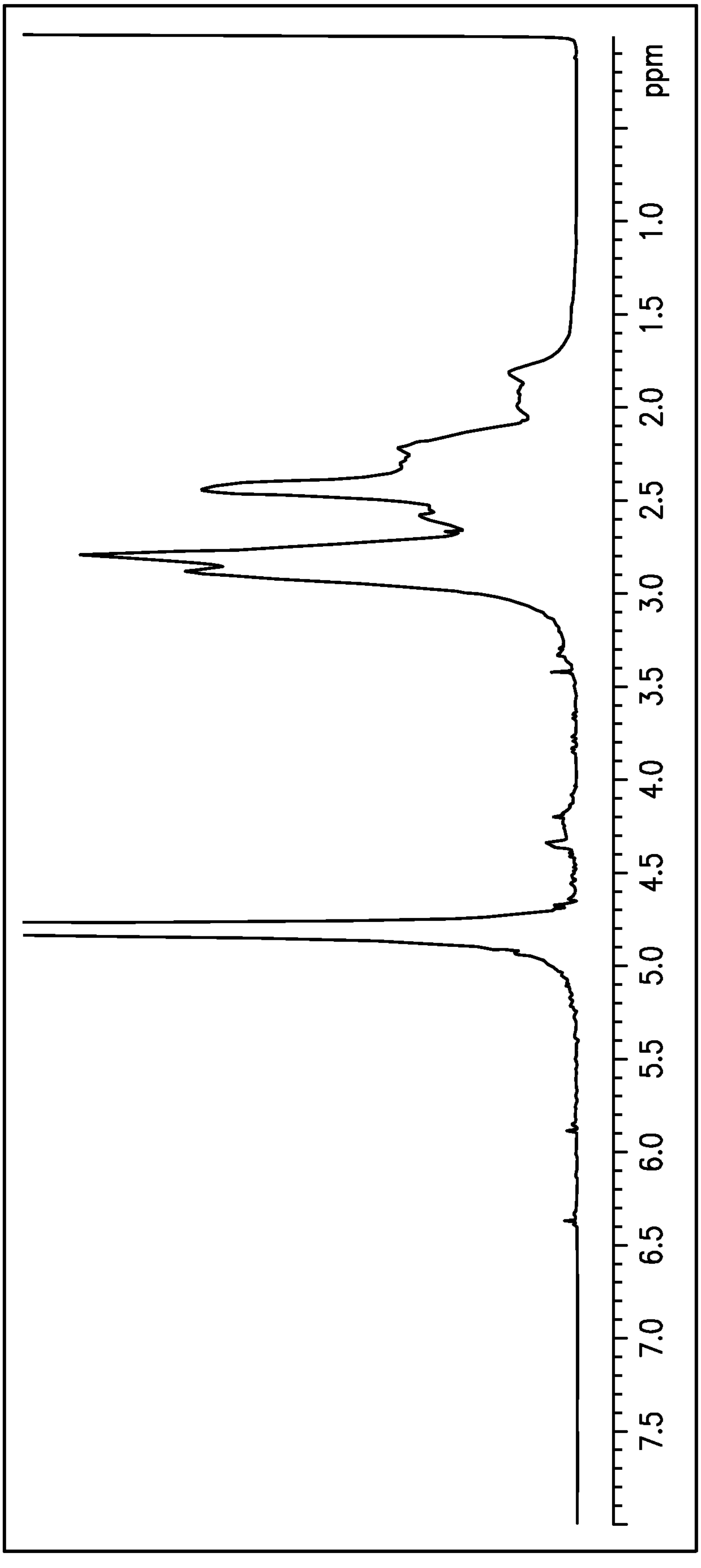


FIG-3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5223592 A
- US 5336744 A
- US 7910676 B
- WO 200121677 A
- US 4485223 A
- EP 0506246 A1
- US 2009286947 A1
- WO 9217571 A
- CN 1563373
- US 2003100112 A1
- EP 1336659 A
- US 2003074697 A
- US 62011671 B
- US 6022721 A
- EP 931831 A
- JP 11046760 A
- WO 9317721 A
- WO 9309219 A
- JP 1086879 A
- JP 63003788 A
- US 2503280 A
- US 2507088 A
- US 3372188 A
- US 3260741 A
- US 4316812 A
- US 3630929 A
- US 5312954 A, Letton
- US 5389279 A, Au
- US P5766371 A
- US P5576281 A
- US 4497718 A
- US 4062647 A
- US 6312936 B1
- US 5679630 A
- US 4760025 A
- US 20090170745 A1
- US P5288627 A
- US 20080063774 A1
- US 20090263882 A1
- US 20080293610 A1
- US 5352604 A
- US 20090233831 A1
- US 20090314286 A1
- US 7141403 B2
- US 6939702 B1
- US 20080004201 A1
- US 4105827 A
- US 5422028 A
- US 5294362 A
- US 5292447 A
- US 5039447 A
- US 8262804 B
- US 6602441 B
- US 7205267 B
- US 5227084 A
- US 5114611 A
- US 4810410 A
- US 6599871 B
- DE 2321001
- US 3812044 A, Connor
- WO 2008110816 A
- US 20100041574 A1
- US 20100022427 A1
- WO 2009033972 A
- US 2008016721 A
- US 3843598 A
- US 4824590 A
- US P5888954 A
- US 4902499 A
- GB 401413 A, Marriott
- GB 461221 A


### Non-patent literature cited in the description


- **MARVEL et al.** Polymerization of itaconic acid and some of its derivatives. *Journal of Organic Chemistry,* 1959, vol. 24, 599
- **GRESPOS et al.** Polymerization of Itaconic Acid In Aqueous Solution: Structure Of The Polymer And Polymerization Kinetics At 25°C Studied By Carbon-13 NMR. *Makromolekulare Chemie, Rapid Communications,* 1984, vol. 5 (9), 489-494
- **ARUN S. MUJUMDAR.** Handbook of Industrial Drying. 2007
- *INCI Dictionary, generally,* vol. 2
- Cosmetics & Toiletries™ C&T Ingredient Resource Series. Surfactant Encyclopedia. Allured Publishing Corporation, 1996
- **SCHWARTZ et al.** *Surface Active Agents, Their Chemistry and Technology,* 1949

- Surface Active Agents and Detergents. Interscience Publishers, 1958, vol. II
- **TODD ; BYERS.** *Volatile Silicone Fluids for Cosmetics", Cosmetics and Toiletries,* 1976, vol. 91 (1), 27-32
- Soap/Cosmetics/Chemical Specialities. *Volatile Silicones,* December 1986, 40-43
- CMSA Detergents Test Methods Compendium. 1995
- Standard Test Method for Deposition on Glassware during Mechanical Dishwashing. *ASTM D,* 2009, 3556-85